# EUROPÄISCHE PATENTSCHRIFT

(11) **EP 3 967 003 B1**
(45) Veröffentlichungstag und Bekanntmachung des Hinweises auf die Patenterteilung: **18.03.2026**
(21) Anmeldenummer: 20723362.8
(22) Anmeldetag: 30.04.2020
(51) Int. Cl.: G08B 29/12, H04L 12/28

(54) **SERVICEVORRICHTUNG FÜR EINE BRANDSCHUTZANLAGE, ENTSPRECHENDE BRANDSCHUTZANLAGE, SYSTEM ZUM BETREIBEN EINER BRANDSCHUTZANLAGE SOWIE ZUGEHÖRIGES VERFAHREN**
SERVICE DEVICE FOR A FIRE PROTECTION SYSTEM, CORRESPONDING FIRE PROTECTION SYSTEM, SYSTEM FOR OPERATING A FIRE PROTECTION SYSTEM, AND ASSOCIATED METHOD
DISPOSITIF DE SERVICE CONÇU POUR UNE INSTALLATION DE PROTECTION CONTRE LES INCENDIES, INSTALLATION DE PROTECTION CONTRE LES INCENDIES CORRESPONDANTE, SYSTÈME POUR FAIRE FONCTIONNER UNE INSTALLATION DE PROTECTION CONTRE LES INCENDIES, ET PROCÉDÉ CORRESPONDANT

(30) Priorität: 06.05.2019 DE 102019111612
(43) Veröffentlichungstag der Anmeldung: 16.03.2022
(73) Patentinhaber: Minimax Viking Patent Management GmbH, 23840 Bad Oldesloe (DE)
(72) Erfinder: LIESE, Henning, 23840 Bad Oldesloe (DE); MANDELKAU, Detlef, 23840 Bad Oldesloe (DE); WISSMANN, Oliver, 23840 Bad Oldesloe (DE); HALLWASS-FEDDER, Bernd, 23840 Bad Oldesloe (DE); LICKEFETT, André, 23840 Bad Oldesloe (DE)
(74) Vertreter: Eisenführ Speiser
(86) Internationale Anmeldenummer: PCT/EP2020/062016
(87) Internationale Veröffentlichungsnummer: WO 2020/225089

(56) Entgegenhaltungen:
- EP-A1- 3 095 098
- EP-A1- 3 264 385
- DE-A1- 102009 060 417
- US-A1- 2008 084 291

## Beschreibung

Die vorliegende Erfindung betrifft eine Servicevorrichtung für eine Brandschutzanlage, eine entsprechende Brandschutzanlage, ein System zum Betreiben einer solchen Brandschutzanlage mit einer Servicevorrichtung sowie ein Verfahren zum Betreiben einer Brandschutzanlage unter Verwendung der Servicevorrichtung.

Unter einer Brandschutzanlage wird hierbei jede Art von Anlage verstanden, die zum Zwecke des (vorbeugenden) Brandschutzes in Gebäuden, Hallen, Räumen oder ähnlichem eingesetzt werden kann. Bei derartigen Brandschutzanlagen kann es sich beispielsweise, aber nicht ausschließlich, um Brandmeldeanlagen, Feuerlöschanlagen, Funkenlöschanlagen, Rauchabzugsanlagen und/oder eine Kombination aus diesen handeln. Bei Brandschutzanlagen im Sinne der Erfindung handelt es sich hierbei insbesondere um Anlagen, welche eine Zentralvorrichtung und eines oder mehrere Peripheriegeräte und/oder Komponenten umfassen, die mit der Zentralvorrichtung in kommunikativer Verbindung stehen.

In einer spezifischen Ausführungsform handelt es sich bei der Brandschutzanlage insbesondere um eine Brandmeldeanlage. Brandmeldeanlagen umfassen üblicherweise eine Brandmeldezentrale (oder eine Brandmelde- und Löschsteuerzentrale) als Zentralvorrichtung und, als ein Beispiel für eines oder mehrere Peripheriegeräte, einen oder mehrere Brandmelder, welche als Brandgas- oder Rauchgasmelder, als Rauchmelder, als Flammenmelder, als Funkenmelder und/oder als Wärmemelder ausgestaltet sein können, sowie Alarmmittel, die als Hupen, Sirenen, Rund- oder Blitzleuchten oder ähnliches ausgestaltet sein können.

In Antwort auf die Detektion eines (potentiellen) Brandereignisses erhält die Brandmeldezentrale ein entsprechendes Signal von dem einen oder den mehreren entsprechenden Brandmeldern. Die Brandmeldezentrale bewirkt sodann eine Ausgabe einer Gefahrenmeldung durch die Brandmeldeanlage. Als Reaktion auf eine solche Gefahrenmeldung kann dann die Auslösung einer Löschanlage, die in kommunikativer Verbindung mit der Brandmeldeanlage, insbesondere mit deren Zentralvorrichtung, steht, erfolgen. Ferner können durch die Zentralvorrichtung der Brandmeldeanlage auch weitere Maßnahmen ergriffen werden, wie beispielsweise das Auslösen der Alarmmittel, das Alarmieren einer Feuerwehr, das Bereitstellen von Fluchtbewegungsteuerungen, das Schließen von Feuerschutzabschlüssen, oder ähnlichem. Auf diese Weise können Brandereignisse wie Brände oder Zündinitiale im Schutzbereich der Brandschutzanlage frühzeitig entdeckt werden, selbst wenn sich zum Zeitpunkt des Brandereignisses keine Personen in dem Schutzbereich aufhalten. Eine weitere Ausbreitung des Brandereignisses kann so gegebenenfalls verhindert werden.

Bei den durch die Brandmeldeanlage ausgelösten Löschanlagen kann es sich beispielsweise, aber nicht ausschließlich, um Sprinkleranlagen, Sprühwasserlöschanlagen, Schaumlöschanlagen, Gaslöschanlagen, Pulverlöschanlagen oder ähnliches handeln, die insbesondere zur Löschung eines Feuers dienen können. Unter dem Begriff Löschanlage können aber auch Brandverhinderungsanlagen, wie beispielsweise Inertisierungsanlagen oder ähnliche Anlagen zur aktiven Brandvermeidung, verstanden werden.

Feuerlöschanlagen sind dauerhaft betriebsbereite Anlagen, die zur Verteilung eines Löschmittels wie Wasser, Schaum, Gas oder Pulver, dienen, um mittels des Löschmittels bereits entstandene Brände einzudämmen oder zu löschen. Sie bestehen aus einem Rohrleitungssystem mit entsprechenden Auslassöffnungen, wie Sprinklern oder Löschdüsen, durch die ein Löschmittel, beispielsweise Wasser, Gas oder Pulver, auf ein Brandereignis ausgebracht werden kann, um so den Brand so lange einzudämmen, bis die Feuerwehr eintrifft, um ihn (endgültig) zu löschen. Im günstigsten Fall kann die Löschanlage den Brand eigenständig löschen.

Der Auslösemechanismus der Löschanlage kann hierbei mechanisch eingerichtet sein, indem die Auslassöffnungen beispielsweise mit einer Glasampulle oder einem Schmelzlot verschlossen werden, die eingerichtet sind, durch hohe Temperaturen zerstört zu werden und dadurch das Löschmittel freizusetzen. In einigen Ausführungsformen kann die Löschanlage auch manuell ausgelöst werden, beispielsweise durch das Betätigen eines Schalters oder das Öffnen eines Absperrhahns. In den erfindungsgemäßen Brandschutzanlagen wird die Löschanlage typischerweise durch die Brandmeldeanlage ausgelöst, wenn diese ein (potentielles) Brandereignis automatisch oder manuell detektiert. Die Kombination einer Brandmeldeanlage und einer Löschanlage wird nachfolgenden auch als Brandschutzsystem bezeichnet.

Es ist von großer Wichtigkeit, dass Brandschutzanlagen mit großer Zuverlässigkeit arbeiten und ferner zuverlässig in der Lage sind, (potentielle) Brandereignisse zu detektieren und entsprechende Maßnahmen einzuleiten. Es gehört daher zu den Betreiberpflichten bei solchen Brandschutzanlagen, diese regelmäßig zu prüfen und/oder zu warten.

Eine derartige Prüfung und/oder Wartung wird durch einen Nutzer vor Ort durchgeführt. Hierbei kann es vorkommen, dass sich die Brandschutzanlage an einem abgelegenen und/oder schwer erreichbaren Ort befindet. In so einem Fall sind kurzfristig angesetzte Prüfungs- und/oder Wartungseinsätze nicht oder nur unter großen Schwierigkeiten durchführbar. Wenn eine Störung auftritt, kann diese nur mit großem Zeitaufwand behoben werden, so dass in solchen Fällen die Brandschutzanlagen im Wesentlichen autonom reagieren müssen. Eine autonome Störfallbehebung ist jedoch nicht in jedem Fall ausreichend und der Einsatz von Wartungspersonal kann auch in diesem Fall notwendig sein.

Es ist daher von Vorteil, bestimmte Überprüfungen und/oder Wartungsvorgänge über eine Fernüberprüfung und/oder Fernwartung durchzuführen. Gemäß dem Stand der Technik ist es hierzu nötig, die auf diese Art zu prüfenden/wartenden Brandschutzanlagen von vornherein für eine solche Fernüberprüfung und/oder Fernwartung auszulegen. Dies eröffnet weitere Schwierigkeiten, denn zum einen kann die Fernüberwachung nur für extra dafür vorgesehene Brandschutzanlagen durchgeführt werden, zum anderen können in solchen Brandschutzanlagen einzelne Komponenten und/oder Peripheriegeräte nur mit großem Aufwand entfernt und/oder hinzugefügt werden, da diese ja erneut von vorherein für die Fernüberwachung ausgelegt werden müssen.

In diesem Zusammenhang lehrt die WO 2011/076184 A1 eine Kommunikationseinrichtung, welche eine Fernüberwachung und/oder Fernwartung eines Sicherheitssystems einerseits sowie einen modularen Aufbau - und damit eine Nachrüstbarkeit - andererseits ermöglicht. Diese Kommunikationseinrichtung wird dem existierenden System sozusagen "vorgeschaltet", so dass die Kommunikationseinrichtung und das System unabhängig voneinander arbeiten, bei dem die Kommunikationseinrichtung und das System also autark agieren. Die Funktionalitäten der Kommunikationseinrichtung der WO 2011/076184 A1 sind allerdings auf das Bereitstellen einer Kommunikationsverbindung zwischen einem Sicherheitssystem und einem davon entfernten Nutzer beschränkt. Die Kommunikationseinrichtung der WO 2011/076184 A1 stellt also lediglich eine Art "Kommunikationstunnel" zum Übertragen von Informationen von dem Sicherheitssystem an den Nutzer dar. Hierdurch kann zwar eine Fernüberprüfung ermöglicht werden, weitergehende Funktionen, wie beispielsweise nutzerabhängige Zugriffsbeschränkungen, können durch die Kommunikationseinrichtung der WO 2011/076184 A1 nicht sichergestellt werden.

Die US 2008/084291 A1 betrifft ein Verfahren, eine Vorrichtung, ein ferngesteuertes Zubehörteil und einen Authentifizierungsserver zur Erleichterung von Vorgängen, wie z. B. einem authentifizierten Test von Lebenssicherheitsausrüstung mit Komponenten, die ein Bedienfeld und Sensoren umfassen. Die Lebenssicherheitsausrüstung muss gemäß einer Brandschutzvorschrift getestet werden. Eine Zugriffsprozedur wird durchgeführt, um die Ausrüstung und die Testanforderungen zu identifizieren und um eine Kommunikationssitzung zwischen der Ausrüstung und einem Authentifizierungsserver während eines authentifizierten Tests aufzubauen. Ein weiteres Zugriffsverfahren wird durchgeführt, um den Zugriff auf ein entferntes Gerät zu ermöglichen, um den authentifizierten Test zu erleichtern und um eine Kommunikationssitzung zwischen dem entfernten Gerät und einem Alarmsystem oder einem Authentifizierungsserver o.ä. aufzubauen. Informationen, die mit einer bevorstehenden Aktivierung eines der Sensoren verbunden sind, werden von dem entfernten Gerät empfangen, und Informationen, die mit dem Sensor verbunden sind, wenn dieser aktiviert ist, werden, wenn sie von dem Alarmsystem erkannt werden, an den Authentifizierungsserver gemeldet, und die gemeldeten Aktivierungsinformationen werden an das entfernte Gerät weitergeleitet. Authentifizierungsinformationen, die dem aktivierten Sensor zugeordnet sind, werden von dem entfernten Gerät empfangen, und ein authentifizierter Bericht wird an das entfernte Gerät weitergeleitet, wenn alle Alarmbedingungssensoren gemäß den Testverfahren geprüft wurden.

Die EP 3 095 098 A1 betrifft ein System und Verfahren zur Prüfung von Feuererkennungs- und Feuermeldevorrichtungen einer Feueralarmanlage, das ein zentrales Betriebssystem umfasst, das eine Verbindung zwischen einer Steuertafel der Feueralarmanlage und einem von einem Techniker bedienten mobilen Computergerät herstellt. Während eines Begehungstests aktiviert der Techniker vor Ort die Feuermelde- oder Feueranzeigegeräte des Brandmeldesystems, und die aktivierten Geräte signalisieren der Zentrale, und es werden Ereignisdaten erzeugt. Die Ereignisdaten von der Zentrale werden zur Speicherung an die Betriebszentrale gesendet. Die Betriebszentrale sendet die Ereignisdaten an ein mobiles Computergerät, das von einem Techniker bedient wird. Der Techniker vor Ort kann dann überprüfen, ob die Geräte physisch intakt sind, nicht verändert wurden, ordnungsgemäß funktionieren und sich an den ihnen zugewiesenen Stellen befinden.

Die EP 3 264 385 A1 betrifft Systeme und Verfahren zur Installation, Inbetriebnahme, Prüfung und Wartung einer Brandmeldezentrale über ein mobiles Gerät. Einige Verfahren können den Empfang eines ersten Signals von einer Brandmeldezentrale, wobei das erste Signal Identifizierungsinformationen der Brandmeldezentrale enthält, die Übertragung eines zweiten Signals, das die Identifizierungsinformationen enthält, an eine Servervorrichtung, den Empfang eines dritten Signals, das eine zweite Information von der Servervorrichtung enthält, und die Anzeige der zweiten Information auf einer Benutzerschnittstellenvorrichtung umfassen, wobei die zweite Information Informationen zur Installation, Inbetriebnahme, Prüfung oder Wartung der Brandmeldezentrale enthält.

Bei Brandschutzanlagen ist es jedoch wünschenswert, dass eine Vielzahl unterschiedlicher Nutzer mit unterschiedlichen Zugangsberechtigungen aus der Ferne auf Informationen betreffend das System zugreifen können. Gemäß dem Stand der Technik wird die Zugangsberechtigung hierbei üblicherweise in vier normativ vorgegebene Berechtigungsstufen eingeteilt, nämlich den Errichter der Brandschutzanlage, zertifiziertes Wartungspersonal, den versierten Nutzer der Brandschutzanlage, wie einen entsprechend ausgebildeten Brandschutzbeauftragten, und schließlich den nicht versierten Nutzer.

Handelt es sich bei dem Nutzer um einen Mitarbeiter eines Errichters der Brandschutzanlage, welcher die Brandschutzanlage regelmäßig prüfen, insbesondere bestimmte Ist-Werte der Brandschutzanlage sowie von darin befindlichen Peripheriegeräten mit den erwarteten Soll-Werten abgleichen, und/oder eventuelle Störungen frühzeitig identifizieren, sowie im Falle solcher Störungen und/oder Abweichungen entsprechende Revisionen durchführen möchte, erhält der Nutzer hierzu einen umfassenden Zugriff auf möglichst alle Aspekte der Brandschutzanlage.

Auf der anderen Seite kann es sich bei einem Nutzer aber auch um einen Disponenten handeln, der für die Wartung der Brandschutzanlage zertifiziert und mit dieser beauftragt wurde. Es ist üblicherweise nicht gewünscht, dass ein Disponent die detaillierten Informationen zu den Ist- und/oder Soll-Werten der Brandschutzanlage und/oder der Peripheriegeräte erhält und/oder detaillierte Informationen zu den Störungen und den möglichen Gründen hierfür. Für den Disponenten ist üblicherweise interessant, welche Materialien für die Wartung nötig sind und mit welcher Konfiguration der Brandschutzanlage er zu rechnen hat. Dies erlaubt dem Disponenten, ohne vorherigen Anreise den Arbeitsaufwand und das mitzunehmende Material zu identifizieren und so die Wartung effizienter und zeitreduzierter zu gestalten. Somit erhält der Nutzer nur einen Zugriff auf den Teil der Systeminformationen, also der Informationen über die Brandschutzanlage, die für diese Aspekte relevant sind.

Zuletzt kann ein Nutzer kann aber auch beispielsweise der Kunde selbst sein. Hierzu wird zwischen dem versierten Nutzer - insbesondere dem Brandschutzbeauftragten bei dem Kunden - und dem nicht versierten Nutzer - beispielsweise einem Mitarbeiter eines Kunden der keine Erfahrung im Brandschutzbereich hat, unterschieden werden. Im Falle des versierten Nutzers kann dieser insbesondere Interesse daran haben, ob die Brandschutzanlage und die darin befindlichen Peripheriegeräte in Betrieb sind und wie deren derzeitiger Zustand ist. Der versierte Nutzer erhält hierzu also Zugriff auf die hierfür relevanten Systeminformationen. Der nicht versierte Nutzer hingegen kann mit den Systeminformationen nicht arbeiten und sollte keine Änderungen an den Einstellungen der Brandschutzanlage vornehmen können. Daher erhält der nicht versierte Nutzer keinen Zugriff auf die Systeminformationen.

Die für den jeweiligen Nutzer bereitzustellenden Daten können also variieren. Hierbei ist es oft der Fall, dass die bereitgestellten Daten zwar für alle Nutzer auf denselben, durch die Zentrale der Brandschutzanlage bereitgestellten, Systeminformationen basieren, jedoch je nach Nutzer unterschiedlich gefiltert und/oder aufbereitet werden müssen. Es ist hierbei besonders vorteilhaft, ein System bereitzustellen, welches eine individueller gestaltbare Zugangsberechtigung für die Nutzer - zwar mit Blick auf die normativen Berechtigungsstufen jedoch unabhängig davon - erlaubt und so eine Zugriffs- und Rollenzuweisung der einzelnen Nutzer mit höherem Detailgrad erlaubt. Dies ermöglicht es, rollenbasierte Zugriffsberechtigungen zu etablieren.

Vor diesem Hintergrund ist es eine Aufgabe der Erfindung, ein System zum Betreiben einer Brandschutzanlage bereitzustellen, in dem die vorstehend beschriebenen Probleme überwunden werden. Insbesondere ist es eine Aufgabe der Erfindung, eine Kommunikation zwischen einer Brandschutzanlage und einem Nutzerendgerät eines Nutzers bereitzustellen, mittels der der Nutzer angemessen über den Zustand der Brandschutzanlage und/oder der darin befindlichen Peripheriegeräte informiert werden kann. Es ist eine weitere Aufgabe der Erfindung, ein System bereitzustellen, dass es ermöglicht, die Zugriffsberechtigungen der einzelnen Nutzer mit höherem Detailgrad einzurichten.

Erfindungsgemäß wird diese Aufgabe in einem ersten Aspekt, gemäß dem unabhängigen Anspruch 1, gelöst durch eine Servicevorrichtung für eine Brandschutzanlage umfassend eine Kommunikationseinrichtung, die eingerichtet ist, über eine erste bidirektionale Kommunikationsverbindung mit einer Zentralvorrichtung der Brandschutzanlage zu kommunizieren und über eine zweite bidirektionale Kommunikationsverbindung mit zumindest einem Nutzerendgerät zu kommunizieren, um dem Nutzerendgerät einen Zugriff auf zumindest einen Teil von Systeminformationen der Brandschutzanlage zu erlauben, und zumindest eine Recheneinrichtung, die eingerichtet ist, die Systeminformationen von der Zentralvorrichtung zu empfangen und zur Übermittlung an das zumindest eine Nutzerendgerät aufzubereiten, zumindest eine Nutzereingabe von dem Nutzerendgerät in Antwort auf die übermittelten Systeminformationen zu empfangen, und eine Anpassung der Systeminformationen der Brandschutzanlage auf Basis der zumindest einen Nutzereingabe durchzuführen.

Zur Lösung der obigen Aufgabe wird also eine Servicevorrichtung bereitgestellt, die als weitere datenverarbeitende Komponente zwischen einer Zentralvorrichtung der Brandschutzanlage, insbesondere einer Zentralvorrichtung einer Brandmeldeanlage, und zumindest einem Nutzerendgerät agieren kann.

Hierzu umfasst die Servicevorrichtung eine Kommunikationseinrichtung, beispielsweise einen Senderempfänger, die eingerichtet ist, bidirektional mit sowohl der Zentralvorrichtung als auch dem Nutzerendgerät zu kommunizieren. Das bedeutet, die Kommunikationseinrichtung ist eingerichtet, eine erste bidirektionale Kommunikationsverbindung zwischen sich und einer entsprechenden Zentralkommunikationseinrichtung der Zentralvorrichtung aufzubauen. Bevorzugt wird die Servicevorrichtung hierbei am Ort der Brandschutzanlage bereitgestellt. Damit kann die Kommunikation zwischen der Kommunikationseinrichtung der Servicevorrichtung und der Zentralkommunikationseinrichtung der Zentralvorrichtung kabelgebunden oder kabellos erfolgen. Bevorzugt erfolgt die Kommunikation zwischen der Servicevorrichtung und der Zentralvorrichtung kabellos. In einigen Ausführungsformen kann eine kabelgebundene Kommunikation alternativ oder zusätzlich bereitgestellt werden, insbesondere durch einen eigens dafür vorgesehen Anschluss in der Zentralvorrichtung. Die Kommunikation zwischen der Kommunikationseinrichtung der Servicevorrichtung und dem Nutzerendgerät erfolgt bevorzugt kabellos, kann aber auch kabelgebunden ausgeführt sein. In einigen Ausführungsformen erfolgt die Kommunikation zwischen Kommunikationseinrichtung und Nutzerendgerät insbesondere über ein Mobilfunknetz mittels einer bekannten Mobilfunktechnologie. In anderen Ausführungsformen erfolgt die Kommunikation über ein anderweitiges Netzwerk.

Unter einem Nutzerendgerät wird nachfolgend insbesondere ein Laptop, ein Handy, eine Datenbrille oder ein andersartiges Endgerät, das einem Nutzer erlaubt, die übermittelten Systeminformationen anzuzeigen, verstanden. Das Nutzerendgerät ist hierbei insbesondere eingerichtet, eine graphische Darstellung der bereitgestellten und aufbereiteten Systeminformationen zu erzeugen, um diese dem Nutzer anzuzeigen.

Unter dem Begriff Systeminformationen werden im nachfolgenden sämtliche Arten von Daten verstanden, die die Brandschutzanlage und/oder die darin enthaltenen Peripheriegeräte und/oder Komponenten) beschreiben. Insbesondere können die Systeminformationen Werksdaten, also Daten, die Informationen über die verwendete Hardware geben, wie Modulbezeichnungen, Seriennummern und ähnliches umfassen. Alternativ oder zusätzlich können die Systeminformationen auch Betriebsdaten, die für die Betriebskonfiguration der Brandschutzanlage verwendet werden, also beispielsweise Logikeinstellungen und konfigurierbare (veränderbare) Parameter der Brandschutzanlage sowie der damit verbundenen Peripheriegeräte umfassen. Alternativ oder zusätzlich können die Systeminformationen auch Zusatzdaten umfassen, die während des Betriebs der Brandschutzanlage umfassend die Peripheriegeräte erzeugt werden, so beispielsweise Laufzeitdaten. Zumindest ein Teil dieser Laufzeitdaten kann auch als Zustandsinformationen verwendet werden, also als Daten, die indikativ für den (Betriebs-)Zustand der Brandschutzanlage sind.

Unter dem Aufbereiten der Systeminformationen kann insbesondere ein Aufbereiten in Abhängigkeit davon verstanden werden, an welchen Nutzer die aufbereiteten Systeminformationen bereitgestellt werden. Handelt es sich bei dem Nutzer um den Errichter, werden die Systeminformationen also in anderer Weise aufbereitet als für den Fall, in dem es sich bei dem Nutzer um einen Disponenten oder einen Kunden handelt. Der Nutzer kann hierbei insbesondere über das Nutzerendgerät identifiziert werden. In einigen Ausführungsformen kann die Identifizierung das Eingeben eines Zugangscodes und/oder eines Passworts bei Verbindung des Nutzerendgeräts mit der Servicevorrichtung umfassen. Alternativ oder zusätzlich kann die Identifizierung auch eine Ermittlung biometrischer Daten, beispielsweise eines Fingerabdrucks oder eines Irismusters, und ein Identifizieren auf Basis der biometrischen Daten umfassen. Alternativ oder zusätzlich kann der Nutzer aber auch über eine Eigenschaft des Nutzerendgeräts und/oder eines darin eingesetzten Teilnehmeridentifikationsmoduls identifiziert werden. In einigen Ausführungsformen kann die Identifizierung unabhängig vom Nutzerendgerät erfolgen.

Alternativ oder zusätzlich kann das Aufbereiten der Systeminformationen ein Erstellen einer Protokollierung und/oder einer Zusammenfassung umfassen. In anderen Ausführungsformen kann das Aufbereiten der Systeminformationen auch ein Auswerten der Systeminformationen umfassen, um so zu ermitteln, ob die Brandschutzanlage beispielsweise durch Richtlinien vorgegebene Parameter, wie beispielsweise Zulassungs- und/oder Sicherheitsnormen, erfüllt, beziehungsweise sich innerhalb der durch Richtlinien vorgegebenen Grenzwerte bewegt. In einigen Ausführungen kann das Aufbereiten auch ein Abgleichen zwischen den gemessenen (Ist-)Werten und entsprechenden Abgleichwerten (Soll-Werten) der während des Betriebs ermittelten Zustandsinformationen , die als Teil der Systeminformationen indikativ für den Zustand der Brandschutzanlage und/oder der darin enthaltenen Peripheriegeräte und/oder Komponenten umfassen. In jedem Fall ist vorgesehen, dass das Aufbereiten in einer Weise geschieht, dass die Systeminformationen für den jeweiligen Nutzer entsprechend der ihm zugewiesenen Rolle zusammengestellt werden.

Handelt es sich bei dem Nutzer beispielsweise um den Errichter, kann eine Protokollierung insbesondere eine Protokollierung derjenigen Daten der Systeminformationen umfassen, die bestimmte, durch Richtlinien vorgegebene Prüfungstätigkeiten betreffen, also eine Art Wartungsprotokoll. Alternativ oder zusätzlich kann eine solche Protokollierung den Abgleich zwischen den gemessenen(Ist-)Werten und entsprechenden Abgleichwerten der veränderbaren Parameter in den Zustandsinformationen, die indikativ für den Zustand der Brandschutzanlage und/oder der darin befindlichen Komponenten und/oder Peripheriegeräte, betreffen, also eine Art Zustandsprotokollierung. In einigen Ausführungsformen kann das Auswerten der Systeminformationen insbesondere einer Echtzeit-Überprüfung der Brandschutzanlage dienen, wobei dem Nutzer die Werte der Parameter der Systeminformationen, insbesondere der Parameter der Zustandsinformationen, in Echtzeit bereitgestellt werden und insbesondere Echtzeit-Meldungen, beispielsweise im Falle von Störungen oder ähnlichem, angezeigt werden. Das Aufbereiten kann auch ein Aufbereiten der Systeminformationen, insbesondere der Zustandsinformationen, dahingehend umfassen, dass dem Nutzer eine Dokumentation über die Brandschutzanlage, deren zeitliche Entwicklung und mögliche Vorhersagen für die Zukunft bereitgestellt werden.

Handelt es sich bei dem Nutzer um den Disponenten kann die Protokollierung und/oder die Zusammenfassung insbesondere eine Zusammenfassung der Zustandsüberprüfung und/oder eine Zusammenfassung vorheriger Prüf- und/oder Wartungsprotokolle umfassen, um dem Disponenten einen Überblick über den bei der nächsten Wartung/Reparatur anfallenden Arbeitsaufwand zu geben. In einigen Ausführungsformen kann dem Nutzer auf Basis des Auswertens auch eine Zusammenfassung und/oder eine Liste der vorgeschlagenen für die Wartung benötigten Materialien umfassen. Hierbei kann zusätzlich noch ein Ergebnis der Auswertung, also ein Auswerteergebnis, angezeigt werden, so dass der Nutzer selbst abgleichen kann, ob die Liste vollständig ist. In einigen Ausführungsformen kann das Aufbereiten auch ein Erstellen einer Übersicht über die derzeitige Konfiguration der Brandschutzanlage - oder der einzelnen Komponenten und/oder Peripheriegeräte darin - umfassen.

Wenn es sich bei dem Nutzer um einen Endkunden handelt, kann das Aufbereiten der Daten insbesondere eine Zusammenfassung des derzeitigen Ist-Zustandes der Brandschutzanlage, beziehungsweise der darin befindlichen Komponenten und/oder Peripheriegeräte, umfassen. In einigen Ausführungsformen kann das Aufbereiten auch ein Filtern umfassen, so dass dem Nutzer nur die Systeminformationen angezeigt werden, die von Interesse für ihn sein könnten. In einigen Ausführungsformen betrifft das insbesondere - im Falle einer Echtzeit-Anzeige - diejenigen Systeminformationen, die von der Norm abweichen, insbesondere diejenigen Zustandsinformationen, die von ihren Abgleichwerten abweichen. In einigen Ausführungsformen kann das Aufbereiten auch hier das Erstellen von Prüfprotokollen, Wartungsprotokollen und/oder Wartungsberichten umfassen. Es ist hierbei bevorzugt, dass diese Protokollierung weniger detaillierte Informationen umfasst als beispielsweise im Falle des Errichters. Das Aufbereiten kann ferner ein Zusammenfassen der vergangenen Werte eines oder mehrerer Parameter der Systeminformationen, insbesondere der Zustandsinformationen, umfassen. In einigen Ausführungsformen kann das Aufbereiten auch ein Auswerten und eine Indikation und/oder Vorhersage einer zu erwartenden Störung und/oder einer Tendenz für bestimmte Störungen umfassen.

Das Nutzerendgerät umfasst bevorzugt eine Nutzereingabeeinrichtung zum Empfang einer Nutzereingabe. Diese übermittelt das Nutzerendgerät über die zweite bidirektionale Kommunikationsverbindung an die Kommunikationseinrichtung der Servicevorrichtung, welche ihrerseits die Eingabe an die Recheneinrichtung weiterleitet. Die Recheneinrichtung ist eingerichtet, die Nutzereingabe zu verarbeiten und die Systeminformationen der Brandschutzanlage entsprechend der Nutzereingabe anzupassen.

In einigen Ausführungsformen umfasst die Nutzereingabe insbesondere eine Betriebsbucheingabe eines Servicetechnikers und das Anpassen der Systeminformationen umfasst insbesondere ein Hinzufügen dieser Betriebsbucheingabe zu den durch die Recheneinrichtung auf Basis der Systeminformationen, insbesondere der Zustandsinformationen, erstellten Prüf- und/oder Wartungsprotokollen und/oder Wartungsberichten und/oder andersartigen Protokollierungen.

In einigen Ausführungsformen kann die Nutzereingabe auch weitere Materialien angeben, die für eine Wartung benötigt werden und die Recheneinrichtung kann eingerichtet sein, auf Basis dieser Materialien zu ermitteln, welche Wartungsarbeiten anstehen. In einigen Ausführungsformen kann das Anpassen auf Basis der Nutzereingabe auch ein Aufbereiten und/oder Bereitstellen weiterer Systeminformationen umfassen. In einigen Ausführungsformen kann das Anpassen der Systeminformationen auch ein Anpassen der Konfiguration eines oder mehrerer Systemparameter der Brandschutzanlage und/oder der darin befindlichen Peripheriegeräte und/oder Komponenten umfassen, so dass ein Nutzer über eine Fernverbindung die Brandschutzanlage konfigurieren kann, beispielsweise weil der Nutzer erkannt hat, dass eine solche Konfiguration nötig ist. Der Umfang der Konfiguration und/oder Anpassung der Systeminformationen und/oder Systemparameter kann hierbei insbesondere von dem jeweiligen Nutzer, beziehungsweise dessen Zugriffsrechten, abhängen und durch die Servicevorrichtung individuell - also unabhängig von den normativ vorgegebenen vier Berechtigungsstufen - angepasst werden.

In einer bevorzugten Ausführungsform ist die zweite bidirektionale Kommunikationsverbindung eingerichtet, die Kommunikationseinrichtung über eine Serverkomponente mit dem zumindest einen Nutzerendgerät zu verbinden.

Gemäß einer Ausführungsform ist die Kommunikationseinrichtung der Servicevorrichtung eingerichtet, mit einer Serverkomponente zu kommunizieren, die ihrerseits eingerichtet ist, mit dem Nutzerendgerät zu kommunizieren. Das bedeutet, die bidirektionale Kommunikation zwischen der Servicevorrichtung und dem Nutzerendgerät (oder den Nutzerendgeräten) erfolgt über die Serverkomponente. Die Serverkomponente kann hierbei eingerichtet sein, die Zugriffsrecht des Nutzerendgeräts auf der einen und die Zugriffsrechte der Servicevorrichtung auf der anderen Seite zu prüfen und nur bei positiver Prüfung einen Zugriff zuzulassen. Alternativ oder zusätzlich kann die Serverkomponente eingerichtet sein, die Identifizierung des Nutzerendgeräts und/oder der Servicevorrichtung zu prüfen und abzugleichen, ob ein spezifisches Nutzerendgerät mit einer spezifischen Servicevorrichtung kommunizieren darf. Auch hier kann die Serverkomponente eingerichtet sein, nur bei positiver Identifizierung eine Verbindung herzustellen. Hierdurch kann die Sicherheit gegen unerlaubtem Zugriff erhöht werden.

In einigen Ausführungsformen kann die Serverkomponente insbesondere einen Datenspeicher umfassen, in dem die Systeminformationen abgespeichert werden können. In diesem Fall ist eine endgültige Speicherung der Systeminformationen in der Servicevorrichtung nicht notwendig. Zuletzt kann auch zumindest ein Teil der Aufbereitung der Systeminformationen durch eine Recheneinrichtung der Serverkomponente von der Servicevorrichtung übernommen werden, insbesondere dann, wenn die Serverkomponente einen Datenspeicher zur Speicherung der vergangenen Systeminformationen umfasst. Dies hat zum einen den Vorteil, dass die an die Servicevorrichtung, insbesondere eine interne Speichereinrichtung derselben, gestellten Anforderungen reduziert werden. Zum andere ermöglicht eine Speicherung der Systeminformationen auf einer Serverkomponente, dass, insbesondere bei einem Ausfall und/oder einer Fehlfunktion der Servicevorrichtung, die Servicevorrichtung ausgewechselt werden kann, ohne dass zunächst eine Datenübertragung der auf ihre abgespeicherten Daten notwendig ist. Stattdessen kann eine neue Servicevorrichtung unmittelbar auf die auf der Serverkomponente hinterlegten Systeminformationen und weiteren Daten zugreifen und so auf Basis des Status weiterarbeiten, an dem sich die zuvor eingesetzte Servicevorrichtung befunden hat.

Gemäß einer weiteren bevorzugten Ausführungsform umfasst die erste Kommunikationsverbindung und/oder die zweite Kommunikationsverbindung eine verschlüsselte Kommunikationsverbindung.

In einigen Ausführungsformen kann die bidirektionale Kommunikationsverbindung zwischen der Zentralkommunikationseinrichtung der Zentralvorrichtung und der Kommunikationseinrichtung der Servicevorrichtung verschlüsselt werden. Alternativ oder zusätzlich kann die bidirektionale Kommunikationsverbindung zwischen der Kommunikationseinrichtung der Servicevorrichtung und dem Nutzerendgerät verschlüsselt werden. Hierzu können sowohl die Servicevorrichtung als auch die Zentralvorrichtung als auch das Nutzerendgerät je eine Kryptographie-Einrichtung umfassen, mittels derer die Systeminformationen nach bekannten Verfahren verschlüsselt und sodann übertragen werden. In einigen Ausführungsformen können auch nur die Zentralvorrichtung und die Servicevorrichtung oder nur das Nutzerendgerät und die Servicevorrichtung eine Kryptographie-Einrichtung umfassen, wenn nur eine der beiden bidirektionalen Kommunikationsverbindungen der Servicevorrichtung verschlüsselt werden soll.

Die Schlüssel, welche zur Verschlüsselung der ersten bidirektionalen Kommunikationsverbindung zwischen Zentralkommunikationseinrichtung und Kommunikationseinrichtung verwendet werden, können auch zur Authentifizierung der Servicevorrichtung gegenüber der Zentralvorrichtung verwendet werden. Insbesondere kann in dem Schlüssel ein Authentifizierungsparameter enthalten sein, der die Servicevorrichtung gegenüber der Zentralvorrichtung authentifiziert und so beispielsweise die Zugriffsrechte der Servicevorrichtung festlegt.

Alternativ oder zusätzlich können die Schlüssel, welche zur Verschlüsselung der zweiten bidirektionalen Kommunikationsverbindung Kommunikationseinrichtung der Servicevorrichtung und Nutzerendgerät verwendet werden, ebenfalls zur Authentifizierung dienen, wobei hierbei sowohl das Nutzerendgerät sich gegenüber der Servicevorrichtung als auch die Servicevorrichtung sich gegenüber dem Nutzerendgerät authentifizieren kann. In einigen Ausführungsformen authentifiziert sich auch nur das Nutzerendgerät gegenüber der Servicevorrichtung. Auch hier kann die Authentifizierung wieder über einen entsprechenden Authentifizierungsparameter innerhalb des Schlüssels zur Verschlüsselung geschehen. Über die Authentifizierung kann zudem der Nutzer identifiziert werden.

In einigen Ausführungsformen kann der Schlüssel auch verwendet werden, um sicherzustellen, dass die auf der Servicevorrichtung und/oder der Zentralvorrichtung installierte Software für den jeweiligen Nutzer lizensiert ist. In einigen Ausführungsformen kann das dadurch erreicht werden, dass der verwendete Schlüssel nach Ablauf eines Zeitraums, für den eine gültige Softwarelizenz erworben wurde, ausgewechselt wird und nur bei neuerlichem Lizenzerwerb ein neuer Schlüssel zur Verfügung gestellt, beziehungsweise der vorherige Schlüssel verlängert wird. Bevorzugt wird dieser neue Schlüssel dem Nutzerendgerät, welches durch den Nutzer verwendet wird, der die Lizenz erworben hat, unmittelbar bereitgestellt.

Es ist weiterhin bevorzugt, dass die Servicevorrichtung ferner eine Identifikationseinrichtung umfasst, die eingerichtet ist, Identifikationsdaten der Servicevorrichtung an die Zentralvorrichtung und/oder das zumindest eine Nutzerendgerät zu übermitteln.

In einigen Ausführungsformen wird die Identifizierung der Servicevorrichtung auch durch eine dedizierte Identifikationseinrichtung bewerkstelligt. Hierzu umfasst die Servicevorrichtung also ein Mittel, über das sich die Servicevorrichtung identifizieren kann, bevorzugt über das Übermitteln einer entsprechenden Identifizierungsnummer. Diese Identifizierung erfolgt bevorzugt gegenüber der Zentralvorrichtung der Brandschutzanlage. Alternativ oder zusätzlich kann sich die Servicevorrichtung auch über die ID-Nummer gegenüber einem oder mehreren Nutzerendgeräten identifizieren.

In einigen Ausführungsformen kann die Identifikationseinrichtung auch eingerichtet sein, eine Identifizierungsnummer von dem Nutzerendgerät und/oder der Zentralvorrichtung zu empfangen, so dass die Identifizierung bidirektional erfolgt. In einigen Ausführungsformen kann die Identifizierungsnummer auch nur von dem Nutzerendgerät und/oder der Zentralvorrichtung übermittelt werden und die Servicevorrichtung wird nicht identifiziert.

In einigen Ausführungsformen umfasst die Servicevorrichtung ferner eine Speichereinrichtung zur Speicherung der Systeminformationen.

In einigen Ausführungsformen wird die Servicevorrichtung mit einer Speichereinrichtung, wie einem flüchtigen und nicht-flüchtigen Speicher, ausgestattet. Diese Speichereinrichtung dient bevorzugt der Speicherung der Systeminformationen. In einigen Ausführungsformen kann die Speicherung der Systeminformationen nur auf der Servicevorrichtung erfolgen. Alternativ oder zusätzlich können die Systeminformationen aber auch in einem Datenspeicher der Serverkomponente gespeichert werden. In einigen Ausführungsformen können auch bestimmte Systeminformationen nur in der Speichereinrichtung der Servicevorrichtung und bestimmte Systeminformationen nur im Datenspeicher der Serverkomponente gespeichert werden. In einigen Ausführungsformen erfolgt eine redundante Speicherung ein der Speichereinrichtung der Servicevorrichtung und dem Datenspeicher der Serverkomponente. Dies erhöht die Flexibilität des Systems, da so insbesondere die Servicevorrichtung ohne großen Aufwand getauscht werden kann, sowie die Sicherheit der Speicherung, da bei einer Zerstörung eines Speichers die Informationen noch in einem weiteren Speicher vorliegen.

In einer Weiterbildung ist die Recheneinrichtung ferner eingerichtet, eine Differenz zwischen den Systeminformationen, die in der Speichereinrichtung abgespeichert sind, und den Systeminformationen, die durch die Zentralvorrichtung bereitgestellt werden, zu erkennen, und in Antwort auf diese Differenz die Systeminformationen in der Speichereinrichtung anzupassen.

Nicht alle Systeminformationen unterliegen zeitlichen Variationen. Es gibt auch Systeminformationen, wie beispielsweise die Werksdaten, die über einen längeren Zeitraum oder dauerhaft konstante Werte haben (sollten). In diesem Fall stellt eine erneute Übermittlung eines Wertes für so eine Systeminformation, eine Löschung des vorherigen Wertes und ein erneutes Abspeichern des neuen (gleichen) Wertes eine unnötige Nutzung der Systemkapazität dar. Um eine derartige Verschwendung von Ressourcen zu vermeiden und die Menge der zu übertragenden Daten zu reduzieren, ist die Recheneinrichtung der Servicevorrichtung bevorzugt eingerichtet, eine Differenz zwischen den in der Speichereinrichtung abgespeicherten Systeminformationen und den durch die Zentralvorrichtung bereitgestellten Systeminformationen zu ermitteln, also zu bestimmen, welche Werte welcher Systeminformationen sich geändert haben. Die Recheneinrichtung ist ferner eingerichtet, in Antwort auf dieses Ermitteln lediglich diejenigen Systeminformationen abzurufen und neu in die Speichereinrichtung zu schreiben, deren Werte sich geändert haben. Alle weiteren Systeminformationen werden, optional mit einem Hinweis, dass sie konstant geblieben sind, nicht neu abgespeichert.

Gemäß einer weiteren Weiterbildung ist die Recheneinrichtung eingerichtet, die Differenz bei einem Aufbau der ersten Kommunikationsverbindung zwischen der Zentralvorrichtung und der Servicevorrichtung zu erkennen.

In einigen Ausführungsformen erfolgt dieser Abgleich der Systeminformationen und die damit verbundene Ermittlung eventueller Unterschiede bevorzugt bei jedem (Neu-)Aufbau der ersten Kommunikationsverbindung zwischen der Zentralkommunikationseinrichtung der Zentralvorrichtung und der Kommunikationseinrichtung der Servicevorrichtung. Hierdurch kann sichergestellt werden, dass die Servicevorrichtung bei jedem erneuten Anschluss an die Zentralvorrichtung den aktuellen Stand der Systeminformationen abspeichert.

In einigen Ausführungsformen ist die Speichereinrichtung ferner zur Speicherung einer ersten Softwareidentifizierung von Softwaredaten eingerichtet, wobei die Recheneinrichtung ferner eingerichtet ist, über die erste Kommunikationsverbindung eine zweite Softwareidentifizierung aus der Zentralvorrichtung auszulesen, die indikativ für die Softwaredaten auf der Zentralvorrichtung ist, die erste Softwareidentifizierung und die zweite Softwareidentifizierung zu vergleichen, und in Antwort auf ein Ermitteln, dass sich die erste Softwareidentifizierung und die zweite Softwareidentifizierung unterscheiden, die Softwaredaten über die erste Kommunikationsverbindung an die Zentralvorrichtung (200) zu übermitteln.

Die Servicevorrichtung kann ferner dazu eingerichtet sein, eine Firmwareversion der Zentralvorrichtung oder eines darin befindlichen Moduls zu prüfen und gegebenenfalls auf den aktuellen Stand zu bringen.

Hierzu ist die Speichereinrichtung der Servicevorrichtung zur Speicherung einer ersten Softwareidentifizierung eingerichtet. Unter einer ersten Softwareidentifizierung wird vorliegend insbesondere eine Identifizierungsnummer verstanden, die indikativ für eine Software-Version von Softwaredaten ist. Unter Softwaredaten werden in diesem Zusammenhang die die Firmware bildenden Daten und Codes verstanden. Die erste Softwareidentifizierung gibt bevorzugt eine aktuelle Version der Softwaredaten an.

Unter einer zweiten Softwareidentifizierung wird ebenfalls insbesondere eine Identifizierungsnummer verstanden, welche indikativ für eine Software-Version von Softwaredaten ist. Die durch die zweite Softwareidentifizierung angegebene Software-Version ist die Version der Softwaredaten wie sie derzeit auf der Zentralvorrichtung oder dem entsprechenden Modul aufgespielt und aktiv ist.

Bevorzugt werden beim Aufbau der ersten bidirektionalen Kommunikationsverbindung zwischen der Zentralvorrichtung und der Servicevorrichtung die erste und die zweite Softwareidentifizierung durch die Recheneinrichtung der Servicevorrichtung miteinander verglichen. Im Fall, dass die Softwareversion, die durch die zweite Softwareidentifizierung angegeben ist, die also auf der Zentralvorrichtung oder einem Modul davon aktiv ist, von der Softwareversion, die durch die erste Softwareidentifizierung angegeben wird, abweicht, ist die Recheneinrichtung der Servicevorrichtung bevorzugt dazu eingerichtet, die aktuellen Softwaredaten mittels der Kommunikationseinrichtung über die bidirektionale Kommunikationsverbindung an die Zentralvorrichtung zu übermitteln, wo die Softwaredaten dann zum Aktualisieren der Softwareversion verwendet werden können.

Es ist hierbei bevorzugt, dass die Softwaredaten in der aktuellen Version in dem Datenspeicher der Serverkomponente gespeichert sind. Das bedeutet, dass die Servicevorrichtung diese aktuellen Softwaredaten aus dem Datenspeicher der Serverkomponente abruft und sodann an die Zentralvorrichtung übermittelt. So kann eine Aktualisierung der Firmware beim Start der Servicevorrichtung sichergestellt werden. Die Aktualisierung kann hierbei manuell oder automatisiert ausgelöst werden.

In einigen Ausführungsformen umfasst dieses Übermitteln das vorherige Absenden einer Anfrage, ob die Aktualisierung der Softwareversion gewünscht wird. In einigen Ausführungsformen übermittelt die Servicevorrichtung diese Anfrage an das Nutzerendgerät und das Nutzerendgerät erzeugt eine Indikation, die haptisch und/oder akustisch und/oder visuell und/oder ähnliches sein kann, dass eine Aktualisierung empfohlen wird. Der Nutzer kann diese Anfrage dann bestätigen, was zu einem Übermitteln der Softwaredaten führt, oder ablehnen. In diesem Fall wird von der Aktualisierung abgesehen. Alternativ oder zusätzlich kann die Servicevorrichtung eingerichtet sein, diese Anfrage an die Zentralvorrichtung zu übermitteln. Die Zentralvorrichtung kann eingerichtet sein, die Anfrage entweder automatisch zu prüfen und, so ein Aktualisieren möglich ist, zu bestätigen, um das Aktualisieren einzuleiten. Alternativ oder zusätzlich kann die Zentralvorrichtung eingerichtet sein, eine Indikation, die haptisch und/oder akustisch und/oder visuell und/oder ähnliches sein kann, auszugeben und so einen Nutzer der Zentralvorrichtung zu bewegen, auf die Anfrage zu reagieren. Auch hier wird das Aktualisieren in Antwort auf eine Bestätigung seitens des Nutzers ausgeführt.

Die erste und zweite Softwareidentifizierung können auch auf anderem Wege als durch entsprechende Identifizierungsnummern bereitgestellt werden. Wichtig ist an dieser Stelle nur, dass das Format der ersten und der zweiten Softwareidentifizierung einen Abgleich zwischen den beiden Softwareidentifizierungen erlaubt. Bevorzugt werden die erste und die zweite Softwareidentifizierung daher im gleichen Format bereitgestellt.

In einigen Ausführungsformen umfasst die Servicevorrichtung ferner eine Indikationseinrichtung, die eingerichtet ist, eine Indikation auszugeben, wenn das Empfangen der Systeminformationen abgeschlossen ist.

Unter einer Indikationseinrichtung kann hierbei jede Art von Einrichtung verstanden werden, die einem Nutzer einen für den Nutzer wahrnehmbaren Hinweis ausgibt, um anzuzeigen, dass die bereitzustellenden Systeminformationen nun vollständigen empfangen wurden. Dieser Hinweis kann insbesondere haptisch, akustisch und/oder visuell erfolgen. In einigen spezifischen Ausführungsformen handelt es sich bei der Indikationseinrichtung um eine Einrichtung, die eingerichtet ist, sowohl einen visuellen als auch einen akustischen Hinweis auszugeben. Alternativ oder zusätzlich kann die Indikationseinrichtung eingerichtet sein, die Indikation an das Nutzerendgerät zu übermitteln, wobei das Nutzerendgerät eingerichtet ist, einen entsprechenden Hinweis auszugeben.

In einigen Ausführungsformen umfassen die Systeminformationen zumindest eines der Folgenden:
- Daten, die Informationen über zumindest eine Komponente der Brandschutzanlage umfassen, und/oder
- Daten, die Informationen über eine Einstellung der Brandschutzanlage umfassen, und/oder
- Daten, die Informationen über einen Betriebszustand der Brandschutzanlage umfassen.

Wie bereits einleitend erwähnt, können unter Systeminformationen alle Informationen über die Brandschutzanlage verstanden werden. Insbesondere können die Systeminformationen hierbei Daten umfassen, die Informationen über zumindest eine Hardware-Komponente der Brandschutzanlage umfassen. Der Begriff Komponente ist hierbei breit zu verstehen und umfasst sowohl die einzelnen Peripheriegeräte der Brandmeldeanlage, wie beispielsweise die unterschiedlichen Brandmelder, Pumpen, Temperaturmesser, Schaltungsanordnungen und ähnliches, die beispielsweise mittels ihrer Seriennummern als Teil der Systeminformationen identifiziert werden können, als auch die Bauteile der Zentralvorrichtung, wie beispielsweise die einzelnen Module, welche in die Zentralvorrichtung zur Ausführung bestimmter Tätigkeiten eingesetzt werden können. Diese hardwarebezogenen Daten werden im Folgenden auch kurz als "Werksdaten" bezeichnet.

Alternativ oder zusätzlich können die Systeminformationen auch Daten umfassen, die Informationen über eine Einstellung der Brandschutzanlage umfassen. Hierzu zählen insbesondere die veränderbaren Parameter der Brandschutzanlage und/oder der Peripheriegeräte darin, die beispielsweise bei der Konfiguration der Brandschutzanlage eingestellt und gegebenenfalls angepasst werden können. Ferner können diese Daten auch Logikeinstellungen der Logikelemente der Brandschutzanlage umfassen. Nachfolgend werden diese Daten auch ganz allgemein als "Betriebsdaten" bezeichnet.

Alternativ oder zusätzlich können die Systeminformationen auch Daten umfassen, die Informationen über einen Betriebszustand der Brandschutzanlage umfassen. Diese Daten, auch als "Laufzeitdaten" oder "Zustandsinformationen" bezeichnet, betreffen Zusatzdaten, die während des Betriebs erzeugt werden und einen Rückschluss auf den Betriebszustand der Brandschutzanlage zulassen. Parameter der Zustandsinformationen sind beispielsweise der Druck einer Pumpe oder der Druck im Rohrsystem, der Stromverbrauch der Zentralvorrichtung, Werte, die indikativ für die Verschmutzung von Sensoren sind, und/oder Temperaturdaten und/oder ähnliches.

Gemäß einiger Ausführungsformen ist die Recheneinrichtung ferner eingerichtet, die zumindest eine Nutzereingabe zu prüfen und in Antwort auf das Prüfen eine Prüfindikation zur Übermittlung an das Nutzerendgerät zu erzeugen.

In einigen Ausführungsformen ist die Recheneinrichtung der Servicevorrichtung eingerichtet, die in Antwort auf die angezeigten Systeminformationen getätigte Nutzereingabe zu prüfen und zu validieren. Insbesondere ist die Recheneinrichtung eingerichtet, während der Validierung zu prüfen, ob die Nutzereingabe zulässig ist. Unter einer Prüfung, ob die Nutzereingabe zulässig ist wird in einigen Ausführungsformen die Prüfung verstanden, ob die Nutzereingabe einen Aspekt betrifft, auf den der sie tätigende Nutzer Zugriff hat und Einfluss nehmen darf. So hat der Errichter der Brandschutzanlage üblicherweise mehr Aspekte, zu denen er Nutzereingaben tätigen kann als der Endkunde.

Unter einer Prüfung der Zulässigkeit der Nutzereingabe kann aber auch die Prüfung verstanden werden, ob die Eingabe inhaltlich zulässig ist. In einigen Ausführungsformen kann der Nutzer beispielsweise die veränderbaren Parameter mittels der Nutzereingabe ändern, wobei die Änderungen nicht mit eventuell vorgegebenen Grenzwerten vereinbar sind. In diesem Fall kann die Recheneinrichtung, durch die Prüfung, verhindern, dass die Parameter auf Basis einer Nutzereingabe angepasst werden, die für die Brandschutzanlage nicht zulässig ist.

Im Falle einer zulässigen Nutzereingabe kann die Servicevorrichtung eine positive Indikation mittels des Nutzerendgeräts an den Nutzer ausgeben lassen, die insbesondere eine Bestätigung umfasst, dass die Systeminformationen angepasst wurden. Im Falle einer unzulässigen Nutzereingabe kann die Servicevorrichtung eine Indikation ausgeben lassen, dass die Nutzereingabe nicht zulässig ist und/oder eine Indikation, dass die Änderungen nicht vorgenommen wurden. Weitere Indikationen sind denkbar.

In einigen Ausführungsformen umfasst das Empfangen der zumindest einen Nutzereingabe eine Authentifizierung des Nutzerendgeräts. In einigen Ausführungsformen ist die Recheneinrichtung ferner eingerichtet, eine Zugriffsberechtigung des Nutzerendgeräts zu ermitteln, und/oder die Systeminformationen, die an das Nutzerendgerät übermittelt werden, basierend auf der Zugriffsberechtigung zu filtern.

Es kann von Vorteil sein, dass die Servicevorrichtung Informationen über die Zugriffsrechte des Nutzerendgeräts auf die Zentralvorrichtung und/oder die Serverkomponente erhält. Hierzu umfasst die Servicevorrichtung bevorzugt eine Authentifizierungseinrichtung als Teil der Recheneinrichtung, die eingerichtet ist, beim Empfangen der Systeminformationen eine Authentifizierung der Zentralvorrichtung und/oder der Serverkomponente vorzunehmen. Dies erlaubt dem Nutzer, zu prüfen, ob die Systeminformationen richtig und vollständig von der richtigen Zentralvorrichtung und/oder Serverkomponente übertragen worden sind.

Alternativ oder zusätzlich kann die Authentifizierungseinrichtung eingerichtet sein, die Gültigkeit einer Lizenz zu prüfen und auf Basis dieser Prüfung über den Zugriff des Nutzerendgeräts auf die Servicevorrichtung und/oder die Serverkomponente zu entscheiden. Hierbei kann der Zugriff bei abgelaufener Lizenz verweigert und bei nicht abgelaufener oder verlängerter Lizenz erlaubt werden. In diesem Fall kann die Zentralvorrichtung insbesondere eingerichtet sein, bei einem Herstellen der ersten Kommunikationsverbindung die Servicevorrichtung automatisch zu erkennen und dieser sämtliche Systeminformationen bereitzustellen. Die Authentifizierungseinrichtung ist ferner eingerichtet, bei dem Herstellen der zweiten Kommunikationsvorrichtung einen Lizenzschlüssel von dem Nutzerendgerät abzufragen. In Antwort auf diese Anfrage übermittelt das Nutzerendgerät über die zweite Kommunikationsverbindung seinen Lizenzschlüssel. Der Lizenzschlüssel wird dann durch die Authentifizierungseinrichtung geprüft. Ist dieser gültig, wird dem Nutzerendgerät Zugriff auf die Servicevorrichtung erlaubt. Ist er nicht gültig, wird der Zugriff verweigert. Diese Verweigerung kann hierbei einen Hinweis umfassen, dass der Lizenzschlüssel nicht (mehr) gültig ist und gegebenenfalls erneuert werden muss.

In einigen Ausführungsformen wird der Lizenzschlüssel dem Nutzerendgerät durch einen externen Server bereitgestellt. Hierzu muss sich der Nutzer mit dem externen Server verbinden und den Lizenzschlüssel abfragen. Der Lizenzschlüssel kann dann dauerhaft bereitgestellt werden oder zeitlich begrenzt. Im zweiten Fall muss der Lizenzschlüssel nach Ablauf eines bestimmten Zeitraums verlängert und/oder erneuert werden. In einigen Ausführungsformen beträgt dieser Zeitraum zwischen einem Jahr und einem Tag, insbesondere zwischen 100 Tagen und einem Tag, insbesondere 30 Tage. Der externe Server kann insbesondere durch den Errichter der Brandschutzanlage und/oder der Serverkomponente bereitgestellt werden. In einigen Ausführungsformen kann der externe Server auch als Teil der Serverkomponente bereitgestellt werden, wobei in diesem Fall das Nutzerendgerät ohne einen gültigen Lizenzschlüssel nur einen begrenzten Zugriff auf die Serverkomponente hat.

In einigen Ausführungsformen kann die Authentifizierung des Nutzerendgeräts nicht nur dazu dienen, einen Zugriff freizugeben oder zu verhindern, sondern auch dazu, den Umfang des Zugriffs für den Nutzer zu ermitteln. In diesen Ausführungsformen ist die Recheneinrichtung insbesondere eingerichtet, auf Basis der durch die Authentifizierungseinrichtung vorgenommenen Authentifizierung die Zugriffsrechte des Nutzers zu ermitteln und sodann die Systeminformationen in Abhängigkeit von den Zugriffsrechten zu filtern. Hier werden also bestimmten Nutzern nur bestimmte Systeminformationen angezeigt. Dies hat zum einen den Vorteil, dass der Nutzer nicht mit unnötigen Informationen sozusagen überflutet wird, zum anderen kann auf diese Weise verhindert werden, dass ein unberechtigter Nutzer Einblick beispielsweise in die Konfigurationsdaten und Logikeinstellungen der Brandschutzanlage erhält.

In einer weiteren Ausführungsform ist die Kommunikationseinrichtung eingerichtet, über die erste bidirektionale Kommunikationsverbindung mit der Brandschutzanlage zu kommunizieren, um Zustandsinformationen, die indikativ für einen Zustand der Brandschutzanlage sind, von der Brandschutzanlage zu empfangen, wobei die Recheneinrichtung eingerichtet ist, einen oder mehrere Abgleichwerte für die Zustandsinformationen aus der Speichereinheit abzurufen, einen oder mehrere Werte der Zustandsinformationen basierend auf einem Abgleich mit dem einen oder den mehreren Abgleichwerten für die Zustandsinformationen auszuwerten und, basierend auf dem Auswerten, zumindest eine Zustandsindikation für die Brandschutzanlage zu erzeugen.

In dieser Ausführungsform erhält die Servicevorrichtung über die Kommunikationsverbindung mit der Brandschutzanlage, insbesondere der Zentralvorrichtung der Brandschutzanlage, Zustandsinformationen, die indikativ für den Zustand der Brandschutzanlage sind.

Die Zustandsinformationen erlauben insbesondere, Rückschlüsse auf den Zustand der Brandschutzanlage, insbesondere auf den Zustand der darin befindlichen Komponenten einer Zentralvorrichtung, wie beispielsweise der Module, und/oder Peripheriegeräte, zu ziehen. Unter dem Begriff Zustandsinformationen werden insbesondere die Rahmendaten, die eine Aussage darüber erlauben, ob ein Peripheriegerät noch ordnungsgemäß funktioniert, verstanden. Alternativ oder zusätzlich können die Zustandsinformationen auch Informationen über den Zustand einer Zentralvorrichtung und/oder der Komponenten der Zentralvorrichtung, betreffen, wie beispielsweise den aktuellen Stromverbrauch der Zentralvorrichtung oder eines einzelnen Moduls darin, den Akkuladezustand (ermittelt über den Akku-Widerstand) eines Akkumulators in der Zentralvorrichtung und ähnliches.

Diese Zustandsinformationen können, insbesondere durch die Recheneinrichtung, ausgewertet werden. Die Recheneinrichtung kann hierbei eingerichtet sein, auf Basis dieses Auswertens eine Zustandsindikation zu erzeugen.

Hierzu ist die Recheneinrichtung eingerichtet, einen oder mehrere Abgleichwerte aus einem Speicher abzurufen. Dieser Speicher kann hierbei als interne Speichereinrichtung der Servicevorrichtung ausgebildet sein, in der die Abgleichwerte hinterlegt worden sind. Alternativ oder zusätzlich kann die Servicevorrichtung auch eingerichtet sein, die Abgleichwerte aus einem externen Speicher abzurufen, beispielsweise über die Kommunikationseinrichtung, die die Abgleichwerte sodann an die Recheneinrichtung weiterleitet. Der externe Speicher kann hierbei insbesondere als Teil einer Serverkomponente eingerichtet sein, wobei die Kommunikationseinrichtung eingerichtet ist, über ein Netzwerk auf den externen Speicher zuzugreifen. In anderen Ausführungsformen kann der externe Speicher auch als eine externe Datenbank ausgeführt sein, die kabellos oder kabelgebunden direkt mit der Servicevorrichtung verbunden wird.

Unter dem Begriff Abgleichwerte werden insbesondere Soll-Werte für die einzelnen Parameter, die in den Zustandsinformationen enthalten sind, verstanden. Die Abgleichwerte betreffen also die Werte, die für die jeweiligen Zustandsinformationen vorliegen sollten, um festzustellen, dass die Peripheriegeräte - und damit die Brandschutzanlage - wie vorgegeben funktionieren. Weichen die Abgleichwerte von den ermittelten Werten ab, kann daraus geschlossen werden, dass bei einem oder mehreren der Peripheriegeräte innerhalb der Brandschutzanlage Probleme und/oder Fehlfunktionen aufgetreten sind.

Die Abgleichwerte können theoretisch oder empirisch ermittelt werden. Das bedeutet, die Abgleichwerte können zum einen rechnerisch ermittelt und als Soll-Werte in den Speicher geschrieben werden, oder sie können die in der Vergangenheit für das System und/oder die Brandschutzanlage ermittelten Ist-Werte umfassen, die als Abgleichwerte in dem Speicher hinterlegt sind. Das bedeutet, wenn in der Vergangenheit festgestellt wurde, dass das System und/oder die Brandschutzanlage funktioniert, davon ausgegangen werden kann, dass die zu dem Zeitpunkt vorliegenden Werte als Abgleichwerte geeignet sind, die für ein funktionierendes System indikativ sind.

Die Recheneinrichtung nutzt die Abgleichwerte insbesondere, um die in den Systeminformationen enthaltenen Zustandsinformationen auszuwerten und zwar basierend auf dem Abgleich zwischen den tatsächlich ermittelten Werten der Parameter der Zustandsinformationen und den Abgleichwerten. Das bedeutet, die Recheneinrichtung ist eingerichtet, abzugleichen, wie weit der derzeitige Ist-Wert vom Soll-Wert abweicht und eine entsprechende Zustandsindikation auszugeben, die eine Aussage über den Zustand der Brandschutzanlage erlaubt. Die Zustandsindikation ist eingerichtet, anzugeben, ob die Brandschutzanlage ohne Störungen funktioniert, oder ob für bestimmte Komponenten Störungen und/oder Fehlfunktionen festgestellt werden können. Die Zustandsindikation kann hier insbesondere an einen Nutzer ausgegeben werden.

In einigen Ausführungsformen ist die Kommunikationseinrichtung ferner eingerichtet, über die erste bidirektionale Kommunikationsverbindung mit der Zentralvorrichtung der Brandschutzanlage zu kommunizieren, wobei die Zentralvorrichtung in kommunikativer Verbindung mit zumindest einem Peripheriegerät der Brandschutzanlage steht.

Die Zentralvorrichtung kann ferner eingerichtet sein, mit zumindest einem Peripheriegerät der Brandschutzanlage zu kommunizieren. Hierzu kann die Zentralvorrichtung entweder mittels der Zentralkommunikationseinrichtung, die auch zur Kommunikation mit der Servicevorrichtung dient, mit den Peripheriegeräten kommunizieren und/oder mittels einer dediziert zur Kommunikation mit den Peripheriegeräten eingerichteten Zentralperipherieeinrichtung in der Zentralvorrichtung. In zweitem Fall sollte die Zentralperipherieeinrichtung sodann eingerichtet sein, mit der Zentralkommunikationseinrichtung zu kommunizieren, um die von den Peripheriegeräten empfangenden Informationen an die Servicevorrichtung zu übermitteln.

Unter dem Begriff Peripheriegerät wird hierbei jede Art von Sensor, Detektor, Melder (Gefahrenmeldern, Brandmeldern), Alarmgeber, Notrufeinrichtung, oder Aktor, Steuer- und Schalteinrichtung zur Ansteuerung oder Abschaltung von Geräten, wie Löschanlagen oder Klimaanlagen verstanden. Hierbei können Brandmelder automatische Brandmelder sein, wie Rauchmelder, Wärmemelder, Flammenmelder, Funkenmelder, Brandgasmelder oder Rauchansaugsysteme. Brandmelder können auch als Handfeuermelder ausgebildet sein.

Erfindungsgemäß sind insbesondere folgende Peripheriegeräte vorgesehen:
- Brandmelder, wie beispielsweise automatische Brandmelder oder Handfeuermelder sowie Gefahrenmelder zur Erfassung von Ereignismeldungen, Feuermeldungen und Störungen, und/oder
- Endschalter, die der Positionserfassung von beispielsweise Kugelhähnen, Absperrschiebern, Absperrklappen, oder ähnlichem dienen, und/oder
- Druckschalter, und/oder
- Schwimmerschalter für Füllstandsmessungen in insbesondere Druckluftwasserbehältern, drucklosen Wasserbehältern und/oder weiteren Löschfluidvorratsgefäßen, und/oder
- Temperaturschalter, beispielsweise für die Überwachung der Umgebungstemperatur innerhalb der Brandmeldeanlage und/oder der Brandschutzanlage; und/oder
- Pumpendruckschalter, die beispielsweise zum Starten von Pumpenmotoren im Falle eines Druckabfalls des löschfluidführenden Rohrleitungsnetzwerks und/oder in einer Armatur; und/oder
- Gassensoren; und/oder
- Aktoren, wie beispielsweise Hupen, Blitzleuchten, Ventile oder ähnliches.

Durch diese Kommunikationsverbindung zwischen Zentralvorrichtung und Servicevorrichtung und Zentralvorrichtung und Peripheriegeräten wird es ermöglicht, einerseits Zustandsinformationen, die indikativ für den Zustand der Zentralvorrichtung sind, an die Servicevorrichtung zu übermitteln und andererseits Zustandsinformationen, die indikativ für den Zustand der Peripheriegeräte sind, an die Servicevorrichtung zu übermitteln. Dies erlaubt eine umfassende Auswertung der Zustandsinformationen und damit eine besonders akkurate Bewertung des Zustands der Brandschutzanlage.

In einigen Ausführungsformen umfasst der Abgleich des einen oder der mehreren Werte der Zustandsinformationen mit dem einen oder den mehreren Abgleichwerten ein Ermitteln eines Grenzwertes für eine Abweichung, wobei die Recheneinrichtung ferner eingerichtet ist, bei einem Überschreiten oder einem Unterschreiten des Grenzwertes, eine Abweich-Indikation zu erzeugen und die Abweich-Indikation in die Zustandsindikation zu integrieren. In einer Modifikation ist die Recheneinrichtung eingerichtet, in Antwort auf die Abweich-Indikation eine Wartungsindikation auszugeben.

Die Soll-Werte der Brandschutzanlage sind üblicherweise nicht auf genau einen Wert beschränkt, sondern bewegen sich innerhalb eines Bereichs, der nach oben und unten durch entsprechende obere und untere Grenzwerte beschränkt ist. Diese Grenzwerte können durch Richtlinienvorgaben ermittelt werden. Alternativ oder zusätzlich können sie rechnerisch oder empirisch ermittelt werden.

In einigen Ausführungsformen werden diese oberen und unteren Grenzwerte in der Speichereinheit hinterlegt. Die Recheneinrichtung der Servicevorrichtung ist eingerichtet, diese Grenzwerte auszulesen und zu ermitteln, für welchen Parameter innerhalb der Zustandsinformationen welche Grenzwerte zu verwenden sind. Sodann ist die Recheneinrichtung eingerichtet, den Wert des jeweiligen Parameters innerhalb der Zustandsinformationen zu ermitteln und mit dem oberen und unteren Grenzwert zu vergleichen. Bewegt sich der Wert des Parameters innerhalb der Grenzen, bestimmt die Recheneinrichtung, dass an dieser Stelle alles den Vorgaben entspricht. Überschreitet der Wert den oberen Grenzwert oder unterschreitet der Wert den unteren Grenzwert, bestimmt die Recheneinrichtung hingegen, dass eine Abweichung von der Norm vorliegt. In diesem Fall ist die Recheneinrichtung eingerichtet, eine Abweich-Indikation zu erzeugen. Die Abweich-Indikation gibt also an, dass für einen bestimmten Wert eine Abweichung vorliegt, sich der Wert also nicht mehr im vorgegebenen Bereich bewegt. Diese Abweich-Indikation kann dann ausgegebenen werden, und zwar haptisch, graphisch und/oder auditiv. In einigen Ausführungsformen ist die Abweich-Indikation insbesondere als Alarm ausgeführt.

In einigen Ausführungsformen, insbesondere im Falle einer graphischen Ausgabe der Abweich-Indikation, umfasst diese einen Hinweis, welcher Wert - oder welche Werte - von der Abweichung betroffen ist und ob ein Unter- oder Überschreiten des Grenzwertes vorliegt. In einigen Ausführungsformen umfasst die Abweich-Indikation ferner bereits einen Hinweis, welche Ursache die Abweichung haben kann.

In einigen Ausführungsformen ist die Recheneinrichtung ferner eingerichtet, in Antwort auf die Abweich-Indikation ferner eine Wartungsindikation auszugeben, also einen Hinweis, dass eine Wartung der Brandschutzanlage notwendig ist. Die Recheneinrichtung kann die Wartungsindikation hierbei insbesondere an die Zentralvorrichtung ausgeben, also die Kommunikationseinrichtung veranlassen, die Wartungsindikation an die Zentralkommunikationsvorrichtung zu übermitteln. Alternativ oder zusätzlich kann die Recheneinrichtung die Wartungsindikation auch an ein Nutzerendgerät ausgeben, also die Kommunikationseinrichtung veranlassen, die Wartungsindikation an das Nutzerendgerät zu übermitteln. Das Nutzerendgerät umfasst bevorzugt eine graphische Benutzeroberfläche, auf der eine graphische Darstellung der Wartungsindikation angezeigt werden kann.

Dies erlaubt eine dauerhafte Überwachung der Brandschutzanlage ohne die Notwendigkeit einer Nutzerinteraktion. Der Nutzer wird erst dann informiert, wenn eine potentielle Störung oder Fehlfunktion automatisch vom System entdeckt wurde.

In einigen Ausführungsformen ist die Kommunikationseinrichtung ferner eingerichtet, die Zustandsindikation über die zweite bidirektionale Kommunikationsverbindung an das Nutzerendgerät zu übermitteln.

Die Servicevorrichtung kann ferner eingerichtet sein, mittels ihrer Kommunikationseinrichtung die durch die Recheneinrichtung erzeugte Zustandsindikation über die bidirektionale Kommunikationsverbindung mit dem Nutzerendgerät an dieses zu übermitteln. Die Zustandsindikation kann dem Nutzer sodann am Nutzerendgerät angezeigt werden. In einigen Ausführungsformen umfasst das Übermitteln der Zustandsindikation ferner ein Übermitteln der Zustandsinformationen, wobei die Zustandsinformationen gegebenenfalls, je nach Berechtigung des Nutzers, gefiltert werden können, also nicht alle Zustandsinformationen übermittelt werden. Das Nutzerendgerät ist hierbei insbesondere eingerichtet, eine graphische Darstellung der Zustandsindikation zu erzeugen und diese graphische Darstellung einem Nutzer anzuzeigen.

In einigen Ausführungsformen ist die Recheneinrichtung ferner eingerichtet, die Zustandsinformationen in der Speichereinheit abzuspeichern.

Es ist bevorzugt, dass die Recheneinrichtung eingerichtet ist, die über die Kommunikationseinrichtung erhaltenen Zustandsinformationen im Anschluss an das Auswerten, gegebenenfalls zusammen mit der erzeugten Zustandsindikation und einem entsprechenden Zeitstempel, in der internen oder externen Speichereinheit abzuspeichern. Durch das Abspeichern der Zustandsinformationen, insbesondere mit einem Zeitstempel, ist es möglich, über einen längeren Zeitraum eine Historie für die Zustandsinformationen - und damit eine Zustandshistorie der Brandschutzanlage - zu erzeugen. Hierdurch kann der Langzeitverlauf der Werte der Zustandsinformationen eingesehen werden. Dies kann eine Vorhersage über den Zustand der Brandschutzanlage, insbesondere über potentiell zukünftig auftretende Störungen, ermöglichen.

In einigen Ausführungsformen ist die Recheneinrichtung ferner eingerichtet, das Auswerten der Zustandsinformationen ferner basierend auf der Nutzereingabe durchzuführen.

Es ist bevorzugt, dass die Recheneinrichtung eingerichtet ist, die Nutzereingabe bei dem Auswerten der Zustandsinformationen zu berücksichtigen. Bei der Nutzereingabe kann es sich in diesem Fall insbesondere um weitere Informationen zum Zustand handeln, wie beispielsweise die Information, dass ein bestimmtes Peripheriegerät getauscht, entfernt oder hinzugefügt wurde - und daher nun andere Werte vorliegen. In anderen Ausführungen kann es sich bei der Nutzereingabe aber auch um eine Bestätigung der Zustandsinformationen handeln, dass diese den Nutzererwartungen entsprechen. In einigen Ausführungsformen kann der Nutzer beispielsweise angeben, dass ein Peripheriegerät ausgetauscht werden soll. Die Recheneinrichtung wird dann bei Erzeugen der Zustandsindikation einen entsprechenden Hinweis in die Zustandsindikation aufnehmen.

In einigen Ausführungsformen umfassen die Zustandsinformationen zumindest eines der Folgenden:
- Informationen, die indikativ für die Funktionsfähigkeit zumindest einer Meldeeinheit der Brandschutzanlage sind; und/oder
- Informationen, die indikativ für den Zustand von Verschlusselementen der Brandschutzanlage sind;
- Informationen, die indikativ für den Zustand von Schaltelementen der Brandschutzanlage sind; und/oder
- Informationen, die indikativ für den Zustand der Zentralvorrichtung der Brandschutzanlage sind.

Die Zustandsinformationen können insbesondere Parameter - oder Informationen - umfassen, die indikativ dafür sind, ob eine Meldeeinheit als ein mögliches Peripheriegerät der Brandschutzanlage funktionsfähig ist. Meldeeinheiten umfassen üblicherweise Sensoren zum Detektieren von Brandkenngrößen. Diese Sensoren können über längere Zeiträume verschmutzen und/oder zerstört werden. In einer spezifischen Ausführungsform umfassen die Zustandsinformationen einen oder mehrere Werte, die angeben, ob die Meldeeinheiten noch zuverlässig funktionieren. Diese Ermittlung erfolgt bevorzugt auf Basis eines Abgleichs zwischen dem Wert der Zustandsinformation als Ist-Wert und einem entsprechenden Abgleichwert als Soll-Wert. In einigen Ausführungsformen können die Ist-Werte, die indikativ für die Verschmutzung sind, über eine längere Zeit abgespeichert werden, um so ihre Entwicklung zu beobachten. Dies erlaubt eine frühzeitige Erkennung einer Verschiebung des Wertes, insbesondere in Richtung des Grenzwertes, bei dem keine Funktionsfähigkeit mehr vorliegt.

Die Zustandsinformationen können ferner Parameter - oder Informationen - umfassen, die angeben, ob Verschlusselemente, wie Klappen oder ähnliches, als Peripheriegeräte der Brandschutzanlage, funktionsfähig sind und sich gegebenenfalls in der vorgegebenen Position befinden. Beispielsweise kann ein Wert eines Parameters der Zustandsinformationen einen Öffnungsgrad eines Verschlusselements angeben. Jedes Verschlusselement muss, in einer funktionsfähigen Brandschutzanlage, eine bestimmte Position aufweisen, die mit einem bestimmten Öffnungsgrad gekoppelt ist. Weicht ein Verschlusselement seinem Wert nach über bestimmte Toleranzgrenzen hinaus von diesem vorgegebenen Öffnungsgrad ab, kann hier von einer Störung ausgegangen werden. Auch hier ist es möglich, die Werte über eine lange Zeit aufzuzeichnen, um so einen eventuellen Trend für die einzelnen Verschlusselemente vorherzusagen und diese gegebenenfalls vor dem Verletzen der zulässigen Toleranzgrenzen auszutauschen.

Die Zustandsinformationen können auch Parameter umfassen, die angeben, in welcher Schaltposition die Schaltelemente der Brandschutzanlage sich gerade befinden und/oder ob bei den einzelnen Schaltelementen beispielsweise ein Verschieben oder eine Abweichung der Schaltposition vorliegt. In einer Brandschutzanlage hat jedes Schaltelement eine für den nicht ausgelösten Zustand vorgegebene Position. Es muss geprüft werden, ob diese Position auch tatsächlich eingehalten wird. Nur so kann sichergestellt sein, dass die Brandschutzanlage im Brandfall funktioniert. Auch hier kann die Schaltposition der einzelnen Schaltelemente über die Zeit nachvollzogen werden, um so mögliche Trends identifizieren zu können.

Die Zustandsinformationen können ferner Parameter umfassen, die den Zustand der Zentralvorrichtung der Brandschutzanlage und/oder der Komponenten der Zentralvorrichtung, wie entsprechender Module, angeben. Ein solcher Parameter kann beispielsweise der Stromverbrauch der Zentralvorrichtung und/oder der Widerstand eines Akkumulators in der Zentralvorrichtung sein. Verändert sich der Wert für den Stromverbrauch und/oder den Widerstand, kann dies ein Zeichen sein, dass die angeschlossenen Verbraucher eine Fehlfunktion aufweisen. Das liegt daran, dass derartige Verbraucher eventuell einen höheren oder niedrigeren Verbrauch haben und damit eine veränderte Last darstellen können. Bevorzugt wird zur Zustandsüberwachung mittels der obigen Parameter der Ruhestrom der Zentralstromversorgung, also des Netzteils, der Zentralvorrichtung ermittelt und über einen längeren Zeitraum überwacht. Zeigt der Ruhestrom eine Verschiebung auf, beispielsweise eine Erhöhung, bedeutet dies entweder, dass die Brandschutzanlage um bestimmte Komponenten erweitert wurde, oder dass eine oder mehrere Komponenten fehlerhaft funktionieren. Hierdurch kann auch hier eine eventuelle Fehlfunktion durch die Beobachtung der Werteentwicklung für einen bestimmten Parameter innerhalb der Zustandsinformationen über einen längeren Zeitraum vorhergesagt werden.

In einigen Ausführungsformen ist die Recheneinrichtung eingerichtet, zumindest eine Nutzeridentifizierung von dem zumindest einen Nutzerendgerät zu empfangen, und das zumindest eine Nutzerendgerät basierend auf der zumindest einen Nutzeridentifizierung zu authentifizieren.

Unter einer Nutzeridentifizierung ist hierbei jede Art von Identifizierung zu verstehen, mit der das Nutzerendgerät, welches einem bestimmten Nutzer zugewiesen ist, identifiziert werden kann. Eine Nutzeridentifizierung kann beispielsweise eine Geräteidentifizierungsnummer des Nutzerendgeräts umfassen. In anderen Ausführungsformen kann die Nutzeridentifizierung auch eine MAC-Identifizierung oder einen eindeutigen Identifizierter umfassen, der beispielsweise auf Basis der Geräteidentifizierung und einer Nutzer-ID erzeugt worden ist. In anderen Ausführungsformen kann ein Teilnehmeridentitätsmodul (Subscriber Identity Module, SIM) oder ein elektronisches Teilnehmeridentitätsmodul (Subscriber Identity Module, eSIM) verwendet werden, um das Nutzerendgerät - beziehungsweise den entsprechenden Nutzer - zu authentifizieren.

Der Begriff Authentifizieren ist hierbei so zu verstehen, dass zunächst der Nutzer identifiziert wird und sodann ermittelt wird, welche Berechtigungsstufe der Nutzer hat, also welche Systeminformationen dem Nutzer bereitgestellt werden sollen. Das bedeutet, die Authentifizierung bestimmt, ob Systeminformationen übermittelt werden sollen und, wenn ja, welche Systeminformationen der Nutzer erhalten darf.

Diese Art der Nutzeridentifizierung und Nutzerauthentifizierung ermöglicht es zum einen, sicherzustellen, dass nur berechtigte Nutzer Zugriff zu den relevanten Systeminformationen haben, zum anderen erlaubt sie aber auch, die aus dem Stand der Technik bekannten Berechtigungsstufen weiter zu unterteilen, also spezifischere Zugriffsberechtigungen festzulegen. Dies erlaubt eine Implementierung individueller und rollenspezifischer Zugriffsrechte für die Brandschutzanlage.

In einigen Ausführungsformen ist die Kommunikationseinrichtung der Servicevorrichtung eingerichtet, die Systeminformationen in Antwort auf das Authentifizieren des Nutzerendgeräts an das Nutzerendgerät zu übermitteln. Die durch die Recheneinrichtung getätigte Authentifizierung wird bevorzugt also dazu genutzt, den Nutzer zu identifizieren und so zu ermitteln, welche Systeminformationen im vorliegenden Fall übermittelt werden sollen und auf welche Weise diese aufzubereiten sind. Hierdurch kann eine nutzerspezifische Bereitstellung der relevanten Informationen erreicht werden.

In einigen Ausführungsformen umfasst die Servicevorrichtung ferner eine Zugriffsbeschränkungseinrichtung, die eingerichtet ist, einen Zugriff durch das zumindest eine Nutzerendgerät auf die Zentralvorrichtung freizugeben, wenn das zumindest eine Nutzerendgerät authentifiziert werden kann und zu unterbinden, wenn das zumindest eine Nutzerendgerät nicht authentifiziert werden kann.

Bevorzugt umfasst die Servicevorrichtung eine Zugriffsbeschränkungseinrichtung, die eingerichtet ist, nicht nur das Einsehen in die Systeminformationen basierend auf dem Authentifizieren entsprechend zu beschränken oder freizugeben - also bestimmten Nutzern nur bestimmte Systeminformationen bereitzustellen - sondern auch den Zugriff auf die Zentralvorrichtung der Brandschutzanlage selbst, insbesondere zum Konfigurieren derselben, zum Aktivieren/Deaktivieren bestimmter Funktionen und ähnliches, auf Basis des Authentifizierens freizugeben, zu beschränken und/oder vollständig zu unterbinden. Beispielsweise kann das Authentifizieren, durch die Recheneinrichtung der Servicevorrichtung, ergeben, dass es sich bei dem Nutzer um einen Errichter der Brandschutzanlage handelt. In diesem Fall erhält der Nutzer uneingeschränkten Zugriff auf die Zentralvorrichtung und deren Konfiguration. Ergibt das Authentifizieren, dass es sich bei dem Nutzer um einen Disponenten handelt, kann der Zugriff auf die Einstellungen der Zentralvorrichtung beschränkt werden, die für die durch den Disponenten durchgeführten Wartungsarbeiten geändert werden müssen. Ergibt das Authentifizieren hingegen, dass es sich bei dem Nutzer um einen Kunden handelt, kann der Zugriff auf die Zentralvorrichtung vollständig unterbunden werden, wenn nicht vorgesehen ist, dass der Kunde Änderungen an der Brandschutzanlage vornimmt.

In einigen Ausführungsformen umfasst die Servicevorrichtung ferner eine Verifizierungseinrichtung, wobei die Kommunikationseinrichtung ferner eingerichtet ist, über eine dritte bidirektionale Kommunikationsverbindung mit einer Serverkomponente zu kommunizieren, und die Verifizierungseinrichtung eingerichtet ist, eine Zugangsverifizierung von dem zumindest einen Nutzerendgerät zu erhalten, und, in Antwort auf die Zugangsverifizierung, die Kommunikationseinrichtung zu veranlassen, die dritte bidirektionale Kommunikationsverbindung herzustellen. In einer Weiterbildung ist die Kommunikationseinrichtung eingerichtet, die Systeminformationen mit Hilfe der Serverkomponente an das zumindest eine Nutzerendgerät zu übermitteln.

In einigen Ausführungsformen kann die Servicevorrichtung eingerichtet sein, weiterhin mit einer Serverkomponente, wie einer Cloud, zu kommunizieren. Hierzu ist die Kommunikationseinrichtung der Servicevorrichtung bevorzugt eingerichtet, eine weitere bidirektionale Kommunikationsverbindung mit einer Serverkommunikationseinrichtung der Serverkomponente aufzubauen. Das Bereitstellen einer solchen Serverkomponente hat den Vorteil, dass ein Teil der Funktionalitäten der Servicevorrichtung, beispielsweise das Abspeichern der Systeminformationen in einem Speicher, auf die Serverkomponente ausgelagert werden kann, um so die Anforderungen an die Kapazität der Servicevorrichtung zu reduzieren. In einigen Ausführungsformen kann das Abspeichern der Systeminformationen aber auch sowohl in einer Speichereinrichtung der Servicekomponente als auch in einem Datenspeicher der Serverkomponente erfolgen, um eine redundante Speicherung der relevanten Systeminformationen vornehmen zu können.

In jedem Fall ist es notwendig, sicherzustellen, dass ein Nutzer zur Verwendung der Serverkomponente berechtigt ist. Zu diesem Zweck umfasst die Servicevorrichtung eine Verifizierungseinrichtung, die eingerichtet ist, zu verifizieren, dass ein Nutzer - identifiziert durch das Nutzerendgerät - die Serverkomponente nutzen darf. Hierzu ist die Verifizierungseinrichtung eingerichtet, eine Zugangsverifizierung von dem Nutzerendgerät zu erhalten. Das Nutzerendgerät ist hierzu eingerichtet, die Zugangsverifizierung an die Kommunikationseinrichtung der Servicevorrichtung zu übermitteln. Die Kommunikationseinrichtung übermittelt die Zugangsverifizierung dann an die Verifizierungseinrichtung zu Verifizierung des Nutzers. In einigen Ausführungsformen umfasst die Nutzeridentifizierung die Zugangsverifizierung oder entspricht dieser. In einigen Ausführungsformen kann es sich bei der Zugangsverifizierung auch um ein dediziertes Signal handeln.

Die Verifizierungseinrichtung ist eingerichtet, auf Basis der Zugangsverifizierung zu ermitteln, ob der Nutzer die Berechtigung hat, auf die Serverkomponente zuzugreifen. Ist dies der Fall, gibt die Verifizierungseinrichtung die bidirektionale Kommunikationsverbindung zwischen Kommunikationseinrichtung der Servicevorrichtung und Serverkommunikationseinrichtung der Serverkomponente frei, so dass der Nutzer die Funktionalitäten der Serverkomponente nutzen kann. Hat der Nutzer hingegen keine Berechtigung, erfolgt keine Freigabe durch die Verifizierungseinrichtung und der unberechtigte Nutzer kann nicht auf die Serverkomponente zugreifen.

Die Verifizierungseinrichtung ist also eingerichtet, den Zugriff der Servicevorrichtung, mit der der Nutzer kommuniziert, auf die Serverkomponente zu beschränken, insbesondere zu verhindern, wenn der Nutzer nicht zur Nutzung der Serverkomponente berechtigt ist. In einigen Ausführungsformen kann der Nutzer zur Berechtigung insbesondere eine Serverlizenz erlangen, die es dem Nutzer erlaubt, die Serverkomponente zu nutzen. In einigen Ausführungsformen ist die Serverlizenz zeitlich begrenzt. Alternativ oder zusätzlich kann es sich auch um eine dauerhaft erteilte Serverlizenz handeln.

In einigen Ausführungsformen können die Servicevorrichtung und das Nutzerendgerät auch eingerichtet sein, nach der Verifizierung des Nutzers und der entsprechenden Freigabe der Kommunikationsverbindung zwischen Servicevorrichtung und Serverkomponente nicht mehr ausschließlich auf direktem Wege, sondern alternativ oder zusätzlich über die Serverkomponente zu kommunizieren. In diesem Fall ist die Serverkommunikationseinrichtung der Serverkomponente insbesondere eingerichtet, eine weitere bidirektionale Kommunikationsverbindung zu dem Nutzerendgerät aufzubauen. Die Kommunikation zwischen Servicevorrichtung und Nutzerendgerät kann sodann auf direktem Wege und/oder über die Serverkomponente erfolgen. Eine Kommunikation über die Serverkomponente hat hierbei den Vorteil, dass die Serverkomponente einen Teil der Funktionalitäten der Servicevorrichtung übernehmen kann, ohne dass hierbei das zu übertragende Datenvolumen signifikant erhöht wird.

In einigen Ausführungsformen umfasst die zumindest eine Nutzeridentifizierung ein Identitätsmodul des Nutzerendgeräts.

Bevorzugt handelt es sich bei dem Nutzerendgerät um ein Handy oder ein Tablet. Solche Handys oder Tablets sind üblicherweise mit einem Identitätsmodul, insbesondere einem Teilnehmeridentitätsmodul *(Subscriber Identity Module, SIM)* für ein Mobilfunknetz ausgestattet. Das Teilnehmeridentitätsmodul erlaubt es, das Nutzerendgerät im Mobilfunknetz zu identifizieren. Diese Funktionalität kann auch zur Identifizierung des Nutzers durch die Servicevorrichtung genutzt werden. Das heißt, die Recheneinrichtung der Servicevorrichtung ist eingerichtet, den Nutzer mittels des (Teilnehmer-)Identitätsmoduls zu identifizieren.

In einigen Ausführungsformen ist das Identitätsmodul, insbesondere das Teilnehmeridentitätsmodul, als programmierbares Modul eingerichtet. Dies erlaubt eine software-basierte Programmierung der Nutzeridentifizierung.

In einigen Ausführungsformen umfasst die Servicevorrichtung ferner eine Identifikationseinrichtung, die eingerichtet ist, Identifikationsdaten der Servicevorrichtung an das zumindest eine Nutzerendgerät zu übermitteln.

Es ist bevorzugt, dass sich die Servicevorrichtung dem Nutzerendgerät gegenüber identifiziert. In einigen Ausführungsformen umfasst die Servicevorrichtung ferner eine Identifikationseinrichtung, die eingerichtet ist, Identifikationsdaten zur Identifizierung der Servicevorrichtung an das Nutzerendgerät zu übermitteln. In dieser Ausführungsform wird insbesondere erst dann die Kommunikation von Systeminformationen und ähnlichem über die bidirektionale Kommunikationsverbindung zwischen der Kommunikationseinrichtung der Servicevorrichtung und dem Nutzerendgerät erlaubt, wenn sowohl das Nutzerendgerät durch die Servicevorrichtung als auch die Servicevorrichtung durch das Nutzerendgerät authentifiziert wurde, also eine bidirektionale Identifizierung erfolgt ist. In einigen Ausführungsformen handelt es sich bei den Identifikationsdaten um eine Identifizierungsnummer der Servicevorrichtung. Diese Identifizierungsnummer kann durch die Identifikationseinrichtung insbesondere derart aufbereitet werden, dass sie von dem Nutzerendgerät zur Identifizierung der Servicevorrichtung verwendet werden kann und sodann an das Nutzerendgerät übermittelt werden. Ein Vorteil ist hierbei darin zu sehen, dass es möglich ist, im Nachhinein festzustellen, welche Nutzerendgeräte und welche Servicevorrichtungen im System verwendet wurden.

In einigen Ausführungsformen kann die Identifikationseinrichtung auch alternativ oder zusätzlich zur Recheneinrichtung eingerichtet sein, das Nutzerendgerät auf Basis der Nutzeridentifizierung zu identifizieren. In einigen Ausführungsformen kann die Identifikationseinrichtung ferner eingerichtet sein, die Zentralvorrichtung und/oder die Serverkomponente zu Identifizieren. Weitere Anwendungen der Identifikationseinrichtung sind denkbar. Dies erhöht die Sicherheit.

In einigen Ausführungsformen ist die Recheneinrichtung ferner eingerichtet ist, basierend auf einem Auswerten der Systeminformationen umfassend die Zustandsinformationen, eine Zustandsprotokollierung zu erzeugen und in einer Speichereinheit abzuspeichern.

Das Auswerten der Systeminformationen umfassend die Zustandsinformationen kann insbesondere das Erstellen einer Zustandsprotokollierung umfassen. Diese Zustandsprotokollierung erlaubt, zu ermitteln, ob die Brandschutzanlage beispielsweise durch Richtlinien vorgegebene Parameter, wie beispielsweise Zulassungs- und/oder Sicherheitsnormen, erfüllt, beziehungsweise sich innerhalb der durch Richtlinien vorgegebenen Grenzwerte bewegt. Hierbei ist vorgesehen, dass die Zustandsprotokollierung so erstellt wird, dass die Systeminformationen für den jeweiligen Nutzer entsprechend der ihm zugewiesenen Rolle zusammengestellt werden.

Handelt es sich bei dem Nutzer beispielsweise um den Errichter, kann die Zustandsprotokollierung insbesondere ein Protokoll derjenigen Parameter der Systeminformationen umfassen, die bestimmte, durch Richtlinien vorgegebene Prüfungstätigkeiten betreffen, also eine Art Wartungsprotokoll. Alternativ oder zusätzlich kann ein solches Protokoll den Vergleich von Ist- und Soll-Werten von veränderbaren Parametern der Brandschutzanlage oder Betriebsparametern der darin befindlichen Komponenten, wie Peripheriegeräte oder ähnliches, betreffen und damit eine Art Prüfungsprotokoll darstellen.

Handelt es sich bei dem Nutzer um den Disponenten, kann die Zustandsprotokollierung insbesondere eine Zusammenfassung der vorherigen Prüf- oder Wartungsprotokolle umfassen, um dem Disponenten einen Überblick über den bei der nächsten Wartung/Reparatur anfallenden Arbeitsaufwand zu geben. In einigen Ausführungsformen kann dem Nutzer auf Basis des Auswertens auch eine Zustandsprotokollierung bereitgestellt werden, die eine Liste der vorgeschlagenen für die Wartung benötigten Materialien umfasst. In einigen Ausführungen kann die Zustandsprotokollierung zusätzlich ein Auswertungsergebnis der Auswertung umfassen, so dass der Nutzer selbst abgleichen kann, ob die Liste vollständig ist.

Wenn es sich bei dem Nutzer um einen Endkunden handelt, kann die Zustandsprotokollierung insbesondere den derzeitigen Ist-Zustand der Brandschutzanlage, beziehungsweise der darin befindlichen Peripheriegeräte, umfassen. In einigen Ausführungsformen kann die Zustandsprotokollierung auch Prüfprotokolle und/oder Wartungsprotokolle und/oder Wartungsberichte umfassen. Es ist hierbei bevorzugt, dass diese Protokolle weniger detaillierte Informationen umfassen als beispielsweise im Falle des Errichters. Das Erstellen der Zustandsprotokollierung kann ferner ein Zusammenfassen der vergangenen Werte eines oder mehrerer Systeminformationen, insbesondere der Zustandsinformationen, umfassen.

In einigen Ausführungsformen ist Recheneinrichtung eingerichtet, basierend auf dem Auswerten der Zustandsinformationen ein Auswerteergebnis zu erzeugen, und die Kommunikationseinrichtung ist ferner eingerichtet, das Auswerteergebnis, insbesondere zusammen mit den Zustandsinformationen, über die dritte bidirektionale Kommunikationsverbindung an den Datenspeicher der Serverkomponente zu übermitteln, wobei das Auswerteergebnis mit einem Zeitstempel assoziiert ist, der angibt, zu welchem Zeitpunkt die Zustandsinformationen empfangen worden sind.

Unter einem Auswerteergebnis wird hierbei insbesondere eine Zusammenfassung der Auswertung der Zustandsinformationen zu einem gegebenen Zeitpunkt, nämlich dem Zeitpunkt, an dem diese Zustandsinformationen erhalten und ausgewertet wurden, verstanden. Das heißt, das Auswerteergebnis umfasst ein Ergebnis der Auswertung für jeden Parameter in den Zustandsinformationen, der ausgewertet worden ist. In einigen Ausführungsformen kann dies bedeutet, dass das Auswerteergebnis für sämtliche Parameter der Zustandsinformationen feststellt, dass deren Werte innerhalb der Vorgaben liegen. In einigen Ausführungsformen kann das Auswerteergebnis aber auch einen oder mehrere Parameter der Zustandsinformationen umfassen, deren Werte von den Vorgaben abweichen. In diesem Fall kann das Auswerteergebnis also aussagen, dass für die Parameter a bis c die Werte im vorgegebenen Bereich liegen, für die Parameter d und e jedoch nicht. Alternativ oder zusätzlich kann das Auswerteergebnis ferner eine Zustandsindikation umfassen, die an einen Nutzer ausgegeben werden kann. Die Zustandsindikation ist hierbei eingerichtet, anzugeben, ob die Brandschutzanlage ohne Störungen funktioniert, oder ob an bestimmen Orten Störungen und/oder Fehlfunktionen festgestellt werden können. Liegen, wie vorstehend genannt, die Werte der Parameter d und e nicht im vorgegebenen Bereich, kann das Auswerteergebnis beispielsweise eine Zustandsindikation umfassen, einen Nutzer auf eben diese Abweichung hinweist.

Das Auswerteergebnis wird bevorzugt an die Serverkomponente übermittelt, wobei der Datenspeicher der Serverkomponente eingerichtet ist, das Auswerteergebnis abzuspeichern. Um hierbei nachvollziehen zu können, zu welchem Zeitpunkt eine Auswertung der Zustandsinformationen das entsprechende Auswerteergebnis ergeben hat, wird das Auswerteergebnis mit einem Zeitstempel versehen, der den entsprechenden Zeitpunkt kennzeichnet. Das Auswerteergebnis wird anschließend, assoziiert mit dem Zeitstempel, in den Datenspeicher geschrieben. Bevorzugt wird dieser Vorgang in regelmäßigen Abständen wiederholt. Dies erlaubt, die zeitliche Entwicklung der Auswerteergebnisse nachzuvollziehen. Hierdurch können Trends und Entwicklungen in der Brandschutzanlage über einen längeren Zeitraum identifiziert und sich gegebenenfalls entwickelnde Störungen und/oder Fehlfunktionen unter Umständen bereits frühzeitig vorhergesagt werden.

In einigen Ausführungsformen sind die Zustandsinformationen indikativ für einen Zustand zumindest eines Peripheriegeräts der Brandschutzanlage, wobei das Auswerteergebnis ferner mit einem Geräteindex, der indikativ für das jeweilige Peripheriegerät ist, assoziiert ist.

In einigen Ausführungsformen umfassen die Zustandsinformationen insbesondere Werte für Parameter, die indikativ für den Zustand eines oder mehrerer Peripheriegeräte sind. Das auf Basis dieser Zustandsinformationen erzeugte Auswerteergebnis kann in diesem Fall zusätzlich zu einem Zeitstempel auch mit zumindest einem Geräteindex assoziiert werden, wobei der Geräteindex indikativ für das jeweilige Peripheriegerät ist, für das die Zustandsinformationen empfangen wurden. Das bedeutet konkret, wenn das Auswerteergebnis die Zustandsinformationen der Peripheriegeräte A und B umfasst, wird dieses Auswerteergebnis so mit den Geräteindizes der Peripheriegeräte A und B assoziiert, dass das Auswerteergebnis erlaubt, das Ergebnis der Auswertung für Peripheriegerät A dem Peripheriegerät A eineindeutig zuzuweisen und das Ergebnis der Auswertung für Peripheriegerät B dem Peripheriegerät B eineindeutig zuzuweisen. Auf diese Weise ermöglicht das Auswerteergebnis einen schnellen Überblick über die Zustände der einzelnen Peripheriegeräte. Ferner ermöglicht die zusätzliche Verwendung des Zeitstempels, die Entwicklung jedes Peripheriegeräts über die Zeit anhand der Auswerteergebnisse zu überwachen.

In einigen Ausführungsformen kann das Nutzerendgerät hierbei insbesondere dazu verwendet werden, ein spezifisches Peripheriegerät auszuwählen und aus den zeitgestempelten Auswerteergebnissen die Ergebnisse für dieses spezifische Peripheriegerät in Abhängigkeit der Zeit bereitzustellen. Hierdurch kann eine peripheriegerät-spezifische Bereitstellung des Zustands, insbesondere in Form einer graphischen Darstellung, erreicht werden.

In einigen Ausführungsformen ist die Recheneinrichtung eingerichtet, auf Basis der Zustandsinformationen und des Zeitstempels eine Zustandsprotokollierung der Brandschutzanlage zu erzeugen. In einer Weiterbildung umfasst die Zustandsprotokollierung einen oder mehrere aus einer Zustandsindikation, einer Abweich-Indikation und/oder einer Wartungsindikation.

Die Recheneinrichtung der Servicevorrichtung ist ferner eingerichtet, eine Zustandsprotokollierung zu erstellen. Unter einer solchen Zustandsprotokollierung wird nachfolgend insbesondere eine Zusammenfassung der Auswerteergebnisse in Abhängigkeit von der Zeit verstanden. Das bedeutet, der Zeitstempel, der mit einem Auswerteergebnis assoziiert ist, wird verwendet, um den zeitlichen Verlauf der Auswerteergebnisse über einen längeren Zeitraum zusammenfassend darzustellen.

In einigen Ausführungsformen kann der Geräteindex, der mit einem entsprechenden Peripheriegerät assoziiert ist, ebenfalls in die Erzeugung der Zustandsprotokollierung miteinbezogen werden. Beispielsweise kann der Geräteindex verwendet werden, um einen Filter zu erzeugen, der es erlaubt, den zeitlichen Verlauf der Ergebnisse bezüglich des Zustands für ein spezifisches Peripheriegerät bereitzustellen, indem die weiteren Ergebnisse gefiltert werden. In anderen Ausführungsformen kann der Geräteindex auch verwendet werden, um beispielsweise zwei gleichartige Peripheriegeräte auszuwählen und eine Zustandsprotokollierung zu erstellen, in der die Zustände der beiden Peripheriegeräte miteinander abgeglichen werden. In die Erzeugung der Zustandsprotokollierung können ferner weitere Indizes, wie Modulidentifikationsnummern oder ähnliches, miteinbezogen werden, die es erlauben, spezifisch für diese Komponenten einen Filter zu etablieren und die entsprechenden Zustandsinformationen zu filtern. Dies ermöglicht einen vereinfachten und übersichtlicheren Überblick über den Zustand der Brandschutzanlage.

Es ist bevorzugt, dass die Zustandsprotokollierung dem Nutzer bereitgestellt wird. Dies kann einerseits durch das Nutzerendgerät über die Anzeigeeinrichtung des Nutzerendgeräts geschehen, die beispielsweise zur graphischen Darstellung der Zustandsprotokollierung eingerichtet ist. Dies erlaubt dem Nutzer, die Zustandsprotokollierung auch aus der Ferne einsehen zu können.

Alternativ oder zusätzlich kann die Zustandsprotokollierung auch über eine Zentralanzeigeeinrichtung einer Zentralvorrichtung dem Nutzer bereitgestellt werden. Die Zentralanzeigeeinrichtung kann hierbei ebenfalls eingerichtet sein, eine graphische Darstellung der Zustandsprotokollierung zu erzeugen und diese sodann anzuzeigen. In diesem Fall kann der Nutzer die Zustandsprotokollierung an der Zentralvorrichtung einsehen.

In einigen Ausführungsformen umfasst die Zustandsprotokollierung ferner die Zustandsindikation, eine Abweich-Indikation und/oder eine Wartungsindikation.

Die Recheneinrichtung der Servicevorrichtung kann eingerichtet sein, basierend auf dem Auswerten der Zustandsinformationen, eine Zustandsindikation und/oder eine Abweich-Indikation und/oder eine Wartungsindikation zu erzeugen und diese auszugeben. Die Ausgabe erfolgt bevorzugt an einen Nutzer der Brandschutzanlage. Die Ausgabe kann hierbei haptisch, graphisch und/oder auditiv erfolgen.

Hierbei betrifft die Zustandsindikation eine Indikation, die angibt, ob die Brandschutzanlage ohne Störungen funktioniert, oder ob an bestimmen Orten Störungen und/oder Fehlfunktionen festgestellt werden können. Die Zustandsindikation kann also ausgegeben werden, wenn keine Störung vorliegt, und auch wenn eine Störung vorliegt. In einigen Ausführungsformen ist die Zustandsindikation unspezifisch und gibt lediglich mit einem "ja/nein"-Hinweis an, ob die Brandschutzanlage ohne Störungen funktioniert oder nicht. In einigen Ausführungsformen kann die Zustandsindikation aber auch spezifischer sein und beispielsweise angeben, wo eine Störung vermutet wird.

Die Abweich-Indikation betrifft insbesondere die Situation, in der bei einem Abgleichen der Werte für bestimmte Parameter der Zustandsinformationen festgestellt wird, dass diese in einem nicht mehr zulässigen Maße von den Abgleichwerten abweichen. Die Abgleich-Indikation gibt also an, dass für einen bestimmten Wert eine Abweichung vorliegt und sich der Wert nicht mehr innerhalb eines vorgegebenen Intervalls bewegt und/oder von einem vorgegebenen spezifischen Abgleichwert abweicht. Die Ausgabe der Abweich-Indikation erfolgt in einigen Ausführungsformen bevorzugt in Form eines Alarms. In anderen Ausführungsformen kann die Ausgabe einen graphischen oder auditiven Hinweis umfassen, welcher Wert - oder welche Werte - von der Abweichung betroffen ist und, falls die Abweichung eine Abweichung außerhalb der Grenzen eines vorgegebenen Intervalls betrifft, ob ein Unter- oder Überschreiten eines Grenzwertes vorliegt. In einigen Ausführungsformen umfasst die Abweich-Indikation ferner bereits einen Hinweis, welche Ursache die Abweichung haben kann.

In einigen Ausführungsformen ist die Recheneinrichtung ferner eingerichtet, in Antwort auf die Abweich-Indikation ferner eine Wartungsindikation auszugeben, also einen Hinweis, dass eine Wartung der Brandschutzanlage notwendig ist. Die Recheneinrichtung kann die Wartungsindikation hierbei insbesondere an die Zentralvorrichtung ausgeben, also die Kommunikationseinrichtung veranlassen, die Wartungsindikation an die Zentralkommunikationsvorrichtung zu übermitteln. Alternativ oder zusätzlich kann die Recheneinrichtung die Wartungsindikation auch an ein Nutzerendgerät ausgeben, also die Kommunikationseinrichtung veranlassen, die Wartungsindikation an das Nutzerendgerät zu übermitteln. Das Nutzerendgerät umfasst bevorzugt eine graphische Benutzeroberfläche, auf der eine graphische Darstellung der Wartungsindikation angezeigt werden kann.

Es ist bevorzugt, dass die ausgegebenen Indikationen, beziehungsweise ein Hinweis auf die Ausgabe dieser Indikationen, in dem Datenspeicher der Serverkomponente hinterlegt wird, so dass auch im Nachhinein noch nachvollzogen werden kann, welche Indikationen durch die Servicevorrichtung ausgegeben wurden. Dieses Hinterlegen erfolgt bevorzugt ebenfalls mit einem entsprechenden Zeitstempel. Wenn nun, auf Basis des Auswerteergebnisses und des Zeitstempels, eine Zustandsprotokollierung erzeugt wird, werden die Hinweise auf die ausgegebenen Indikationen, ebenfalls assoziiert mit ihrem entsprechenden Zeitstempel in die Zustandsprotokollierung eingefügt. Bevorzugt werden die Hinweise auf die Indikationen in die graphische Darstellung der Zustandsprotokollierung integriert, so dass der Nutzer sie einsehen kann.

In einigen Ausführungsformen ist die Recheneinrichtung eingerichtet, eine Serviceweg-Vorgabe zu empfangen, die eine Reihenfolge angibt, in der die Zustandsinformationen ausgewertet werden sollen, und die Zustandsinformationen entsprechend der Serviceweg-Vorgabe auszuwerten.

Es kann von Vorteil sein, bestimmte Parameter in den Zustandsinformationen zu prüfen, bevor bestimmte, weitere Parameter geprüft werden, insbesondere dann, wenn eine Abhängigkeit zwischen den einzelnen Parametern besteht, beispielsweise so dass eine Abweichung eines Werts eines ersten Parameters von der Norm eine Abweichung eines Wertes eines anderen Parameters zur Folge hätte. Um in diesem Fall zu verhindern, dass ein Fehler unentdeckt bleibt - weil schon an anderer Stelle eine Abweichung gefunden wurde - und/oder dass falsche Rückschlüsse bezüglich der Funktionsfähigkeit der Brandschutzanlage gezogen werden (weil ein betrachteter Parameter aufgrund der Abweichung eines anderen Parameters von der Norm abweicht, wobei der betrachtete Parameter keinen Einfluss auf die Störung hat), ist es sinnvoll, in so einem Fall einen "Serviceweg" vorzugeben, also anzugeben, in welcher Reihenfolge die Parameter in den Zustandsinformationen nacheinander geprüft werden sollen. Dies erlaubt, die wichtigen Parameter frühzeitig zu identifizieren und erhöht so die Effizienz der Auswertung.

In einem weiteren Aspekt, gemäß dem unabhängigen Anspruch 10, betrifft die Erfindung eine Brandschutzanlage umfassend eine Zentralvorrichtung, wobei die Zentralvorrichtung (200) eingerichtet ist, mit einer Servicevorrichtung wie vorstehend beschrieben kommunikativ verbunden zu werden.

In einem weiteren Aspekt, gemäß dem unabhängigen Anspruch 11, betrifft die Erfindung ein System zum Betreiben einer Brandschutzanlage umfassend zumindest eine Servicevorrichtung gemäß einer der vorstehend beschriebenen Ausführungsformen, zumindest eine Zentralvorrichtung umfassend eine Zentralrechenrichtung, und zumindest ein Nutzerendgerät, wobei die Servicevorrichtung eingerichtet ist, über die erste Kommunikationsverbindung mit der Zentralrecheneinrichtung der Zentralvorrichtung zu kommunizieren.

In einem noch weiteren Aspekt betrifft die Erfindung ein System zum Betreiben einer Brandschutzanlage umfassend die Servicevorrichtung, eine Zentralvorrichtung, beispielsweise eine Zentralvorrichtung einer Brandmeldeanlage, und zumindest ein Nutzerendgerät. Die Zentralvorrichtung kann eine Zentralrecheneinrichtung umfassen. Unter einer Zentralrechenrichtung wird insbesondere eine Recheneinrichtung in der Zentralvorrichtung verstanden, der dazu dient, die Datenverarbeitung in der Zentralvorrichtung durchzuführen.

In einigen bevorzugten Ausführungsformen ist die Zentralrecheneinrichtung insbesondere als eine Zentralkarte ausgeführt, die in die Zentralvorrichtung integriert oder anderweitig kommunikativ mit ihr verbunden wird. In diesen Fällen kann die erste bidirektionale Kommunikationsverbindung bevorzugt durch eine Kommunikationsverbindung zwischen der Zentralkarte und der Servicevorrichtung aufgebaut werden. Hierzu kann die Servicevorrichtung entweder kabellos oder mittels eines Kabels an die Zentralkarte angeschlossen werden.

In einer Ausführungsform des Systems ist die Servicevorrichtung als internes Servicemodul der Zentralvorrichtung eingerichtet.

In einigen Ausführungsformen ist die Servicevorrichtung als eine Art Box ausgeführt, die extern an eine Zentralvorrichtung angeschlossen werden kann, beispielsweise über die Zentralkarte. In anderen Ausführungsformen kann die Servicevorrichtung jedoch auch in Form eines Moduls ausgeführt sein, dass intern in der Zentralvorrichtung verbaut wird. Der Vorteil einer Ausführung als internes Modul der Zentralvorrichtung liegt insbesondere darin, dass die erste bidirektionale Kommunikationsverbindung zwischen Zentralvorrichtung und Servicevorrichtung intern verläuft und so besser gegen unberechtigten Zugriff gesichert ist.

Gemäß einer weiteren Ausführungsform des Systems umfasst die Zentralvorrichtung eine Zentralspeichereinrichtung zur Speicherung einer zweiten Softwareidentifizierung, die indikativ für die Softwaredaten auf der Zentralvorrichtung ist, wobei das zumindest eine Nutzerendgerät eingerichtet ist, eine Anfrage zur Übermittlung von Softwaredaten von der Servicevorrichtung zu empfangen und, in Antwort auf die Anfrage, eine Übermittlung der Softwaredaten von der Servicevorrichtung an die Zentralvorrichtung zu erlauben, wobei die Zentralvorrichtung ferner eingerichtet ist, die von der Servicevorrichtung übermittelten Softwaredaten zu empfangen.

In einigen Ausführungsformen wird die zweite Softwareidentifizierung, die indikativ für die Version der Softwaredaten ist, die sich derzeit auf der Zentralvorrichtung und/oder in einem der Module der Zentralvorrichtung befinden, in einer Zentralspeichereinrichtung der Zentralvorrichtung gespeichert und auf Anfrage der Servicevorrichtung zum Zwecke des Abgleichs an diese übermittelt. Wenn die Servicevorrichtung nun ermittelt, dass die Version der Softwaredaten, die durch die zweite Softwareidentifizierung angegeben wird von der durch die erste Softwareidentifizierung angegebenen abweicht, erzeugt die Servicevorrichtung eine entsprechende Anfrage an das Nutzerendgerät, die aktuellen Softwaredaten auf die Zentralvorrichtung übertragen zu dürfen. Das Nutzerendgerät ist bevorzugt eingerichtet, die Anfrage an einen Nutzer auszugeben. Der Nutzer kann die Anfrage dann bewerten und gegebenenfalls bestätigen. Im Falle einer Bestätigung der Anfrage ist die Servicevorrichtung eingerichtet, die Softwaredaten an die Zentralvorrichtung zu übermitteln. Die Zentralvorrichtung kann sodann ihre Softwaredaten entsprechend aktualisieren.

Alternativ oder zusätzlich kann die Servicevorrichtung auch eine Anfrage an die Zentralvorrichtung übermitteln und in Antwort auf deren Bestätigung das Übermitteln der Softwaredaten in die Wege leiten.

In einer Ausführungsform umfasst das zumindest eine Nutzerendgerät eine graphische Benutzeroberfläche, wobei die graphische Benutzeroberfläche eingerichtet ist, eine graphische Darstellung der Systeminformationen anzuzeigen.

Eine solche graphische Benutzeroberfläche kann insbesondere in Form einer Web-Oberfläche verwirklicht werden, die Zugriff auf die einzelnen Aspekte der Systeminformationen erlaubt und es beispielsweise ermöglicht, zwischen diesen Aspekten zu wechseln. Hierdurch kann die Anzeige für den Nutzer besonders übersichtlich gestaltet werden.

Gemäß einer Ausführungsform umfasst das System zumindest ein Peripheriegerät der Brandschutzanlage, wobei die Systeminformationen indikativ für einen Zustand des zumindest einen Peripheriegeräts der Brandschutzanlage ist, und wobei die Servicevorrichtung eingerichtet ist, basierend auf einem Auswerten der Systeminformationen zumindest eine Zustandsindikation eines Zustands der des zumindest einen Peripheriegeräts und/oder der Brandschutzanlage zu erzeugen.

In einem weiteren Aspekt, gemäß dem unabhängigen Anspruch 14, betrifft die Erfindung ein Verfahren zum Betreiben einer Brandschutzanlage, insbesondere zum Warten und/oder Überprüfen einer Brandschutzanlage, wobei das Verfahren folgende Schritte umfasst: Übermitteln von Systeminformationen über eine erste bidirektionale Kommunikationsverbindung von einer Zentralvorrichtung der Brandschutzanlage an eine Servicevorrichtung, Aufbereiten der Systeminformationen durch die Servicevorrichtung, Übermitteln zumindest eines Teils der Systeminformationen über eine zweite bidirektionale Kommunikationsverbindung an zumindest ein Nutzerendgerät, um dem Nutzerendgerät einen Zugriff auf zumindest den Teil der Systeminformationen der Brandschutzanlage zu erlauben, Empfangen zumindest einer Nutzereingabe von dem Nutzerendgerät in Antwort auf die übermittelten Systeminformationen, und Anpassen der Systeminformationen der Brandschutzanlage auf Basis der zumindest einen Nutzereingabe.

Gemäß einer Ausführungsform umfasst das Verfahren ferner: Empfangen, durch die Zentralvorrichtung, von Systeminformationen einer oder mehrerer Peripheriegeräte der Brandschutzanlage, wobei die Systeminformationen indikativ für einen gegenwärtigen Zustand eines oder mehrerer Peripheriegeräte der Brandschutzanlage sind, Auswerten, durch eine Recheneinrichtung der Servicevorrichtung, der Systeminformationen und Erzeugen einer Zustandsindikation basierend auf dem Auswerten. In einer Weiterbildung umfasst das Verfahren ferner: Übermitteln der Zustandsindikation von der Servicevorrichtung an das zumindest eine Nutzerendgerät und Ausgeben, durch das zumindest eine Nutzerendgerät, der Zustandsindikation an einen Nutzer.

Das erfindungsgemäße Verfahren macht sich die Vorteile und bevorzugten Ausführungsformen der erfindungsgemäßen Servicevorrichtung und des erfindungsgemäßen Systems zunutze. Die bevorzugten Ausführungsformen und Weiterbildungen der Servicevorrichtung sowie des Systems zum Betreiben einer Brandschutzanlage sind daher zugleich bevorzugte Ausführungsformen und Weiterbildungen des Verfahren, weswegen diesbezüglich auf die obigen Ausführungen verwiesen wird.

Die Erfindung wird nachfolgend unter Bezugnahme auf die beigefügten Figuren anhand bevorzugter Ausführungsbeispiele näher beschrieben. Hierbei zeigen:
- Fig. 1: eine schematische Darstellung eines Systems zum Betreiben einer Brandschutzanlage einer ersten Ausführungsform,
- Fig. 2: eine schematische Darstellung eines Systems zum Betreiben einer Brandschutzanlage gemäß einer Modifikation der ersten Ausführungsform, und
- Fig. 3: ein Ablaufdiagram eines Verfahrens zum Warten und/oder Überprüfen einer Brandschutzanlage gemäß einer Ausführungsform,
- Fig. 4: eine schematische Darstellung eines Systems zum Betreiben einer Brandschutzanlage gemäß einer zweiten Ausführungsform,
- Fig. 5: eine schematische Darstellung eines Systems zum Betreiben einer Brandschutzanlage gemäß einer Modifikation der zweiten Ausführungsform,
- Fig. 6: ein Ablaufdiagram eines Verfahrens zur Zustandsüberwachung einer Brandschutzanlage gemäß einer Ausführungsform,
- Fig. 7: eine schematische Darstellung eines Systems zum Betreiben einer Brandschutzanlage gemäß einer dritten Ausführungsform,
- Fig. 8: eine schematische Darstellung eines Systems zum Betreiben einer Brandschutzanlage gemäß einer Modifikation der dritten Ausführungsform,
- Fig. 9: ein Ablaufdiagram eines Verfahrens zur Authentifizierung eines Nutzers in einem System zum Betreiben einer Brandschutzanlage gemäß einer Ausführungsform,
- Fig. 10: eine schematische Darstellung eines Systems zum Betreiben einer Brandschutzanlage gemäß einer vierten Ausführungsform,
- Fig. 11: eine schematische Darstellung eines Systems zum Betreiben einer Brandschutzanlage gemäß einer Modifikation der vierten Ausführungsform, und
- Fig. 12: ein Ablaufdiagram eines Verfahrens zur Zustandsüberwachung einer Brandschutzanlage gemäß einer Ausführungsform.

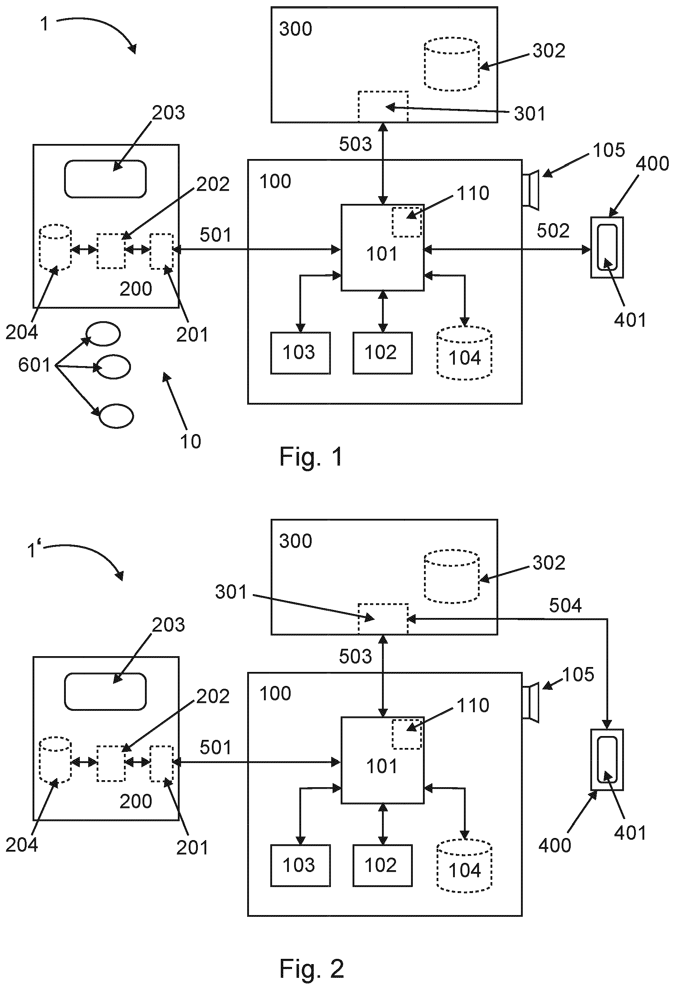

Die Figur 1 zeigt ein erfindungsgemäßes System 1 zum Betreiben einer Brandschutzanlage 10 umfassend eine Servicevorrichtung 100, eine Zentralvorrichtung 200 der Brandschutzanlage 10, eine Serverkomponente 300 und ein Nutzerendgerät 400.

Die Servicevorrichtung 100 umfasst eine Kommunikationseinrichtung 101, eine Recheneinrichtung 102, eine Identifizierungseinrichtung 103, eine Speichereinrichtung 104 und eine Indikationseinrichtung 105. Die Recheneinrichtung 102 umfasst ferner eine Authentifizierungseinrichtung 110.

Die Brandschutzanlage 10 umfasst eine Zentralvorrichtung 200 und eine Vielzahl von Peripheriegeräten 601, die kommunikativ mit der Zentralvorrichtung 200 verbunden sind (nicht gezeigt). Auch wenn in der schematischen Darstellung der Fig. 1 nur drei Peripheriegeräte 601 dargestellt sind, kann die Brandschutzanlage 10 mehr oder weniger Peripheriegeräte 601 umfassen.

Die Zentralvorrichtung 200 umfasst eine Zentralkommunikationseinrichtung 201, eine Zentralrecheneinrichtung 202, eine Zentralanzeigeeinrichtung 203 und eine Zentralspeichereinrichtung 204. Die Zentralkommunikationseinrichtung 201 ist über eine bidirektionale Kommunikationsverbindung 501 mit der Kommunikationseinrichtung 101 der Servicevorrichtung 100 kommunikativ verbunden. Die Zentralkommunikationseinrichtung 201 ist ferner über eine in der Zentralvorrichtung 200 befindliche kommunikative Verbindung mit der Zentralrecheneinrichtung 202 und der Zentralspeichereinrichtung 204 verbunden. Hierdurch können in der Zentralspeichereinrichtung 204 gespeicherte Systeminformationen an die Servicevorrichtung 100 übertragen werden. In einigen Ausführungsformen ist die Zentralrecheneinrichtung 202 hierbei dazu eingerichtet, die Systeminformationen ihrerseits aufzubereiten und erst dann an die Servicevorrichtung 100 zu übermitteln. Alternativ oder zusätzlich kann die Zentralrecheneinrichtung 202 auch eingerichtet sein, die Systeminformationen einerseits ohne Aufarbeitung unmittelbar an die Servicevorrichtung 100 zu übermitteln, andererseits jedoch zur Anzeige auf der Zentralanzeigeeinrichtung 203 aufzubereiten und an diese zur Anzeige auf der Zentralanzeigeeinrichtung 203 an diese zu übermitteln.

Die Servicevorrichtung 100 ist eingerichtet, die Systeminformationen über die bidirektionale Kommunikationsverbindung 501 zu erhalten. Hierzu stellt die Kommunikationseinrichtung 101 zunächst die bidirektionale Kommunikationsverbindung 501 zur Zentralkommunikationseinrichtung 201 her. Dabei erhält die Kommunikationsrichtung 101 eine Identifizierungsnummer zur Identifizierung der Servicevorrichtung 100 von der Identifizierungseinrichtung 103 und übermittelt diese an die Zentralkommunikationseinrichtung 201, welche sie ihrerseits an die Zentralrecheneinrichtung 202 weiterleitet. Die Zentralrecheneinrichtung 202 verwendet die Identifizierungsnummer zur Identifizierung der Servicevorrichtung und stellt, in Antwort auf die Identifizierung, die Systeminformationen bereit, die in der Zentralspeichereinrichtung (zwischen-)gespeichert sind. Diese werden sodann über die Zentralkommunikationseinrichtung 201 an die Kommunikationseinrichtung 101 übertragen. Wenn die Übertragung abgeschlossen ist, wird dies durch die Kommunikationseinrichtung 101 registriert. Diese veranlasst die Indikationseinrichtung 105, eine entsprechende Indikation über die vollständige Übertragung der Systeminformationen auszugeben. In dem spezifischen Beispiel der Fig. 1 ist die Indikation eine visuelle sowie eine akustische Indikation.

Die Kommunikationseinrichtung 101 gibt sodann die empfangenen Systeminformationen an die Recheneinrichtung 102 weiter. In der spezifischen Ausführungsform der Fig. 1 umfassen diese Systeminformationen insbesondere Zustandsinformationen, also Daten, die indikativ für den (Betriebs-)Zustand der Brandschutzanlage 10 und der darin befindlichen Komponenten und/oder Peripheriegeräte 601 sind. Diese Zustandsinformationen werden insbesondere während des Betriebs der Brandschutzanlage 10 erzeugt.

Die Recheneinrichtung 102 ist eingerichtet, diese Systeminformationen umfassend die Zustandsinformationen zur Übertragung an das Nutzerendgerät 400 aufzubereiten. Hierzu ist die Kommunikationseinrichtung 101 eingerichtet, über eine bidirektionale Kommunikationsverbindung 503 mit einer Serverkommunikationseinrichtung 301 der Serverkomponente 300 zu kommunizieren, um auf den Datenspeicher 302 der Serverkomponente 300 zuzugreifen. In der spezifischen Ausführungsform der Fig. 1 umfasst der Datenspeicher 302 eine Reihe von Soll-Werten als Abgleichwerte für die Werte der entsprechenden Parameter in den Zustandsinformationen. Die Recheneinrichtung 102 ist eingerichtet, diese Soll-Werte aus dem Datenspeicher 302 auszulesen, insbesondere über die bidirektionale Kommunikationsverbindung 503 abzurufen, und auf Basis der Soll-Werte die Laufzeitdaten auszuwerten. Die Recheneinrichtung 102 ist ferner eingerichtet, die entsprechend aufbereiteten Systeminformationen, optional zusammen mit einem Auswerteergebnis und/oder einer Zustandsindikation, über eine bidirektionale Kommunikationsverbindung 502 an das Nutzerendgerät 400 zu übermitteln.

In einigen Ausführungsformen wird hierzu beim Aufbaue der bidirektionalen Kommunikationsverbindung 502 zwischen Servicevorrichtung 100 und Nutzerendgerät 400 das Nutzerendgerät 400 zunächst authentifiziert. Hierzu umfasst die Recheneinrichtung 101 eine Authentifizierungseinrichtung 110. In der beispielhaften Ausführungsform gemäß Fig. 1 umfasst das Authentifizieren des Nutzerendgeräts 400 insbesondere eine Verifizierung, dass der Nutzer des Nutzerendgeräts 400 über einen gültigen Lizenzschlüssel verfügt. Nach dem Aufbau der Kommunikationsverbindung 502 übermittelt die Authentifizierungseinrichtung 110 eine Anfrage nach einem Lizenzschlüssel. In Antwort auf die Anfrage übermittelt das Nutzerendgerät 400, bevorzugt über die Kommunikationsverbindung 502, einen entsprechenden Lizenzschlüssel, der sodann von der Authentifizierungseinrichtung 110 geprüft wird. Bei positiver Überprüfung des Lizenzschlüssels, also im Falle eines gültigen Lizenzschlüssels, gibt die Authentifizierungseinrichtung 110 eine positive Authentifizierungsindikation aus und die Kommunikation wird freigegeben. Bei negativer Überprüfung des Lizenzschlüssels, ist dieser also nicht (mehr) gültig, gibt die Authentifizierungseinrichtung 110 eine negative Authentifizierungsindikation aus und der Nutzer erhält keinen Zugriff auf die Servicevorrichtung und damit auf die durch sie bereitgestellten Systeminformationen. Die negative Authentifizierungsindikation kann dem Nutzer auf dem Nutzerendgerät angezeigt werden, wodurch der Nutzer angeregt wird, einen neuen Lizenzschlüssel abzufragen und/oder den Lizenzschlüssel zu verlängern. So kann sichergestellt werden, dass der Nutzer nur mit gültiger Lizenz Zugriff zu den Systeminformationen erhält.

Das Nutzerendgerät 400 umfasst eine graphische Benutzeroberfläche 401, die es einem Nutzer erlaubt, die aufbereiteten Systeminformationen einzusehen und in Antwort darauf zumindest eine Nutzereingabe zu tätigen. In der spezifischen Ausführungsform der Fig. 1 wird dem Benutzer beispielsweise auf Basis der Auswertung der Zustandsinformationen in den Systeminformationen mitgeteilt, dass eine Pumpe innerhalb der Brandschutzanlage 10 nicht mehr mit ausreichend Druck arbeitet. Dieser Hinweis kann bevorzugt über in Form einer Zustandsindikation, umfassend eine Abweich-Indikation, die dem Nutzer bereitgestellt wird, an den Nutzer übermittelt werden. Optional erhält der Nutzer ferner eine Wartungsindikation, die angibt, dass die Pumpe repariert oder ausgetauscht werden muss.

Ferner kann der Nutzer, der die Wartungsindikation auf seinem Nutzerendgerät 400 erhalten hat, optional eine Nutzereingabe tätigen, die bestätigt, dass die Wartungsindikation empfangen wurde und gegebenenfalls angibt, dass die mögliche Problematik mit der Pumpe nun durch entsprechende Wartung oder Überprüfung behoben werden wird.

Auf Basis dieser Nutzereingabe werden sodann die übermittelten Systeminformationen angepasst. Insbesondere wird abgespeichert, dass der Nutzer über die mögliche Störung der Pumpe informiert wurde und, gegebenenfalls, welche Maßnahmen ergriffen werden sollen. Diese zusätzlich eingetragenen Anmerkungen werden dann als Teil der angepassten Systeminformationen abgespeichert. In der Ausführungsform der Fig. 1 erfolgt diese Speicherung bevorzugt im Datenspeicher 302 der Serverkomponente 300. In anderen Ausführungsformen kann die Speicherung aber auch in einer auf der Servicevorrichtung 100 befindlichen Speichereinrichtung 104 erfolgt. Eine Speicherung in dem Datenspeicher 302 der Serverkomponente 300 ist allerdings vorteilhaft, weil zum einen die in der Servicevorrichtung 100 befindliche Speichereinrichtung 104 entlastet werden kann und zum anderen die Speicherung eine Verwendung einer anderen Servicevorrichtung als der Servicevorrichtung 100 erlaubt. So kann selbst bei einer Fehlfunktion der Servicevorrichtung 100 auf alle Daten betreffend die Brandschutzanlage 10 unmittelbar zugegriffen werden. Zuletzt ist eine Speicherung im Datenspeicher 302 der Serverkomponente 300 auch insoweit vorteilhaft, dass beispielsweise der Betreiber der Serverkomponente 300, der unter anderem der Errichter der Brandschutzanlage 10 sein kann, unmittelbar, das heißt ohne Servicevorrichtung 100, auf die Serverkomponente zugreifen kann, um die Daten einer weiteren Auswertung zuzuführen.

In der Ausführungsform gemäß der Fig. 1 umfasst das System 1 zum Betreiben der Brandschutzanlage 10 eine Servicevorrichtung 100, die eingerichtet ist, jeweils direkt mit der Zentralvorrichtung 200, der Serverkomponente 300 und dem Nutzerendgerät 400 zu kommunizieren, und zwar über die Kommunikationseinrichtung 101. Auch wenn nicht dargestellt, umfassen die Zentralkommunikationseinrichtung 201, die Kommunikationseinrichtung 101 und die Serverkommunikationseinrichtung 301 jeweils eine Kryptographie-Einrichtung zum Verschlüssen der zwischen den Kommunikationseinrichtungen ausgetauschten Daten. Hierdurch kann die Datenübertragen besser gesichert werden.

Die Figur 2 zeigt ein System 1' zum Betreiben einer Brandschutzanlage 10 gemäß einer Modifikation der ersten Ausführungsform der Fig. 1. Auch hier umfasst das System 1' erneut eine Servicevorrichtung 100, eine Zentralvorrichtung 200, eine Serverkomponente 300 und ein Nutzerendgerät 400, welche allesamt wie im Zusammenhang mit Fig. 1 beschrieben funktionieren, wobei gleiche Referenznummern gleiche Komponenten bezeichnen. Da diese Funktionalitäten denen der Ausführung gemäß Fig. 1 entsprechen, wird hier auf eine erneute detaillierte Ausführung dazu verzichtet.

Im Folgenden wird daher nur auf die Unterschiede zwischen System 1 gemäß Fig. 1 und System 1' gemäß der Modifikation in Fig. 2 eingegangen. In der spezifischen Ausführungsform der Fig. 2 kommuniziert die Kommunikationsrichtung 101 der Servicevorrichtung 100 über die Serverkomponente mit dem Nutzerendgerät 400. Das bedeutet, anstelle der direkten Kommunikation über die bidirektionale Kommunikationsverbindung 502 zwischen Servicevorrichtung 100 und Nutzerendgerät 400 wird eine Kommunikation über die Serverkomponente 300 eingerichtet. Die Servicevorrichtung 100 kommuniziert hierzu mit der Serverkomponente über die bidirektionale Kommunikationsverbindung 503 und die Serverkomponente kommuniziert mit dem Nutzerendgerät über die bidirektionale Kommunikationsverbindung 504. Das heißt, die Kommunikationsverbindung zwischen Servicevorrichtung 100 und Nutzerendgerät 400 wird durch die Kommunikationsverbindung 503 und die Kommunikationsverbindung 504 gebildet. Dies ermöglicht das Bereitstellen einiger, teilweise optionaler, Funktionalitäten, wie beispielsweise der Speicherung der Systeminformationen und/oder das Identifizieren des Nutzers von der Servicevorrichtung 100 auf die Serverkomponente 300 und führt so zu einer Reduzierung der Systemanforderungen an die Servicevorrichtung 100.

Auch wenn die Servicevorrichtung 100 in den System 1 und 1' gemäß der Ausführungsformen der Fig. 1 und der Fig. 2 als externe Komponente gezeichnet ist, soll an dieser Stelle erwähnt werden, dass die Servicevorrichtung 100 auch als internes Modul der Zentralvorrichtung 200 eingerichtet werden kann, ohne dass die beschriebenen Funktionalitäten angepasst werden müssen. Die Servicevorrichtung 100 gemäß der Erfindung kann also entweder als internes (steckbares) Modul der Zentralvorrichtung 200 oder als anschließbares, externes Element ausgeführt werden.

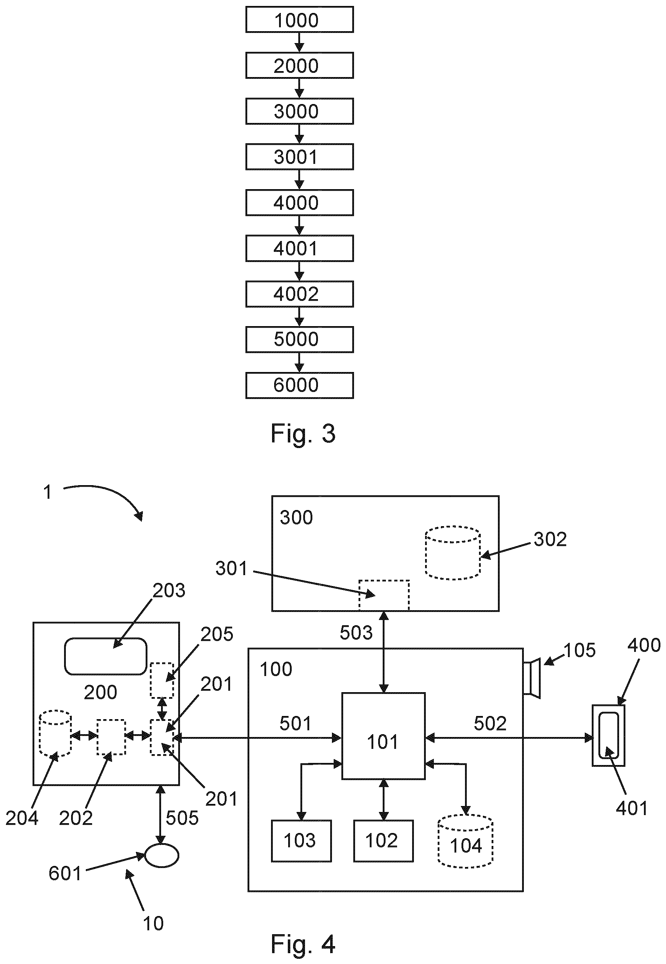

Die Figur 3 zeigt schematisch ein Ablaufdiagram eines erfindungsgemäßen Verfahrens zum Betreiben einer Brandschutzanlage 10, insbesondere zum Warten und/oder Überprüfen einer Brandschutzanlage 10. In Schritt 1000 wird die bidirektionale Kommunikationsverbindung 501 zwischen Kommunikationseinrichtung 101 der Servicevorrichtung 100 und Zentralkommunikationseinrichtung 201 der Zentralvorrichtung 200 aufgebaut. Dieser Aufbau umfasst optional ein Identifizieren und/oder ein Authentifizieren der Servicevorrichtung.

In Schritt 2000 empfängt die Kommunikationseinrichtung 101 der Servicevorrichtung die Systeminformationen von der Zentralkommunikationseinrichtung 201 der Zentralvorrichtung 200 und leitet diese in Schritt 3000 an die Recheneinrichtung 102 weiter. In Schritt 3001 bereitet die Recheneinrichtung 102 die Systeminformationen zur Übermittlung an das Nutzerendgerät 400 auf. In der spezifischen Ausführungsform der Fig. 3 handelt es sich bei dem Nutzer des Nutzerendgeräts um einen Errichter und das Aufbereiten umfasst entsprechend ein Auswerten der Systeminformationen, ob sämtliche Prüfungen des Systems ordnungsgemäß durchgeführt wurden und eine bestehende Betriebsfähigkeit des Systems bestätigen.

In Schritt 4000 werden die aufbereiteten Systeminformationen an das Nutzerendgerät 400 +übermittelt. In der spezifischen Ausführungsform der Fig. 3 umfasst das Übermitteln zunächst ein Aufbauen der bidirektionalen Kommunikationsverbindung zwischen Servicevorrichtung 100 und Nutzerendgerät 400 und ein entsprechendes Authentifizieren, wie im Zusammenhang mit der Fig. 1 beschrieben.

Im Anschluss an das Empfangen der aufbereiteten Systeminformationen erzeugt das Nutzerendgerät 400 in Schritt 4001 eine graphische Darstellung der Systeminformationen und zeigt diese dem Nutzer des Nutzerendgeräts 400 an. In Schritt 4002 tätigt der Nutzer zumindest eine Nutzereingabe in Antwort auf die angezeigten Systeminformationen. Das Nutzerendgerät 400 empfängt diese Nutzereingabe und übermittelt sie, optional zusammen mit einer Assoziation zu den entsprechenden Systeminformationen an die Kommunikationseinrichtung 101 der Servicevorrichtung 100.

In Schritt 5000 empfängt die Kommunikationseinrichtung 101 die Nutzereingabe und übermittelt diese an die Recheneinrichtung 102, der die Systeminformationen in Schritt 600 auf Basis der Nutzereingabe anpasst und die angepassten Systeminformationen optional in einen Speicher schreibt. Dieser Speicher kann hierbei insbesondere die Speichereinrichtung 104 der Servicevorrichtung und/oder der Datenspeicher 302 der Serverkomponente sein.

Die Figur 4 zeigt ein erfindungsgemäßes System 1 zum Betreiben einer Brandschutzanlage 10 gemäß einer zweiten Ausführungsform. Das System 1 umfasst eine Servicevorrichtung 100, eine Zentralvorrichtung 200 der Brandschutzanlage 10, eine Serverkomponente 300 und ein Nutzerendgerät 400.

Die generelle Systemarchitektur des Systems 1 gemäß der zweiten Ausführungsform entspricht derjenigen des Systems 1 gemäß der ersten Ausführungsform wie im Zusammen-hang mit Fig. 1 beschrieben. Auch hier umfasst die Servicevorrichtung 100 eine Kommunikationseinrichtung 101, eine Recheneinrichtung 102, eine Identifizierungseinrichtung 103, eine Speichereinrichtung 104 und eine Indikationseinrichtung 105.

Die Brandschutzanlage 10 umfasst eine Zentralvorrichtung 200 und eine Vielzahl von Peripheriegeräten 601, die über eine bidirektionale Kommunikationsverbindung 505 kommunikativ mit der Zentralvorrichtung 200 verbunden sind. Auch wenn in der schematischen Darstellung der Fig. 4 nur ein einziges Peripheriegerät 601 dargestellt ist, kann die Brandschutzanlage 10 mehr oder weniger Peripheriegeräte 601 umfassen.

Die Zentralvorrichtung 200 umfasst eine Zentralkommunikationseinrichtung 201, eine Zentralrecheneinrichtung 202, eine Zentralanzeigeeinrichtung 203, eine Zentralspeichereinrichtung 204 und, zusätzlich, eine Zentralstromversorgung 205.

Die Zentralkommunikationseinrichtung 201 ist über eine bidirektionale Kommunikationsverbindung 501 mit der Kommunikationseinrichtung 101 der Servicevorrichtung 100 kommunikativ verbunden. Innerhalb der Zentralvorrichtung 200 ist die Zentralkommunikationseinrichtung 201 über eine erste kommunikative Verbindung mit der Zentralrecheneinrichtung 202 verbunden, die ihrerseits mit der Zentralspeichereinrichtung 204 verbunden ist und über eine zweite kommunikative Verbindung mit der Zentralstromversorgung 205 verbunden. Diese interne Kommunikation erlaubt es der Zentralkommunikationseinrichtung 201, Zustandsinformationen über den Zustand der Zentralvorrichtung 200 zu sammeln, um diese als Teil der Systeminformationen über die bidirektionale Kommunikationsverbindung 501 an die Kommunikationseinrichtung 101 der Servicevorrichtung zu übermitteln. Diese Zustandsinformationen können beispielsweise von der Zentralstromversorgung 205 an die Zentralkommunikationseinrichtung 201 übermittelt werden und beispielsweise den aktuellen Stromverbrauch der Zentralvorrichtung 200 und/oder einer Komponente davon, wie beispielsweise einem Modul, und/oder den Innenwiderstand der Akkumulatoren innerhalb der Zentralvorrichtung 200 und/oder der Module betreffen. Auf Basis des aktuellen Stromverbrauchs und/oder des Innenwiderstands kann hierbei insbesondere auf Defekte innerhalb der Brandschutzanlage 10 rückgeschlossen werden.

Ferner kann die Zentralkommunikationseinrichtung 201 eingerichtet sein, Zustandsinformationen, die indikativ für den Zustand der Peripheriegeräte 601 sind, erhalten. Hierzu können die Peripheriegeräte 601 eingerichtet sein, direkt mit der Zentralkommunikationseinrichtung 201 zu kommunizieren. Alternativ oder zusätzlich können die Peripheriegeräte 601 auch über die Zentralrecheneinrichtung 202 oder eine eigens dafür hergerichtete Kommunikationsverbindung mit der Zentralvorrichtung 200 kommunizieren, um die Zustandsinformationen zu übermitteln. Diese Zustandsinformationen können beispielsweise einen Verschmutzungsgrad eines Sensors in einem Peripheriegerät 601, beispielsweise einem Melder, betreffen.

Die Zentralkommunikationseinrichtung 201 ist eingerichtet, die Zustandsinformationen als Teil der Systeminformationen über die bidirektionale Kommunikationsverbindung 501 an die Kommunikationseinrichtung 101 der Servicevorrichtung 100 zu übertragen. Hierzu baut die Kommunikationseinrichtung 101 zunächst die bidirektionale Kommunikationsverbindung 501 auf, wobei die Servicevorrichtung 100 sich optional gegenüber der Zentralvorrichtung 200 identifizieren kann, wie im Zusammenhang mit Fig. 1 beschrieben. In einigen Ausführungsformen bleibt die bidirektionale Kommunikationsverbindung 501 nach einmaligem Aufbau dauerhaft aufrecht erhalten, um die Systeminformationen, umfassend die Zustandsinformationen, von der Zentralkommunikationseinrichtung 201 an die Kommunikationseinrichtung 101 zu übertragen. Dies erlaubt ein permanentes Überwachen des Zustands der Brandschutzanlage durch Überwachen und, optional, Auswerten der Zustandsinformationen auf Seiten der Servicevorrichtung 100 und/oder des damit verbundenen Nutzerendgeräts 400.

Die Kommunikationseinrichtung 101 gibt die Zustandsinformationen an die Recheneinrichtung 102 weiter. In der spezifischen Ausführungsform der Fig. 4 handelt es sich bei den Zustandsinformationen insbesondere um den aktuellen Stromverbrauch innerhalb der Zentralvorrichtung. Die Recheneinrichtung 102 ist eingerichtet, die Kommunikationseinrichtung 101 zu veranlassen, einen Abgleichwert (Soll-Wert) für den Stromverbrauch über eine bidirektionale Kommunikationsverbindung 503 mit einer Serverkommunikationseinrichtung 301 der Serverkomponente 300 aus dem Datenspeicher 302 der Serverkomponente 300 abzurufen. Alternativ kann die Recheneinrichtung 102 auch eingerichtet sein, den Abgleichwert aus der Speichereinrichtung 104 der Servicevorrichtung 100 abzurufen, wenn ein solcher Wert dort abgespeichert ist.

Die Recheneinrichtung 102 erhält so einen oder mehrere Abgleichwerte, die indikativ für den Stromverbrauch der Zentralvorrichtung 200 in der Vergangenheit sind und kann diese Abgleichwerte verwenden, um den mit den aktuellen Zustandsinformationen übermittelten Wert auszuwerten. So kann die Recheneinrichtung 102 beispielsweise eine Erhöhung des Stromverbrauchs ermitteln und eine entsprechende Zustandsindikation erzeugen, die angibt, dass sich der Stromverbrauch der Zentralvorrichtung 200 erhöht hat. Der Nutzer kann dann prüfen, ob die Erhöhung des Stromverbrauchs auf ein Hinzufügen von beispielsweise Peripheriegeräten 601 zur Brandschutzanlage 10 zurückzuführen ist oder ob keine Peripheriegeräte 601 hinzugefügt wurden und daher die Erhöhung durch andere Faktoren, wie beispielsweise einen sich abzeichnenden Defekt, verursacht wurde.

In der spezifischen Ausführungsform der Fig. 4 ist die Servicevorrichtung 100 ferner eingerichtet, die Zustandsindikation an das Nutzerendgerät 400 über die bidirektionale Kommunikationsverbindung 502 zu übermitteln.

Das Nutzerendgerät 400 umfasst eine graphische Benutzeroberfläche 401. Das Nutzerendgerät 400 ist eingerichtet, basierend auf der Zustandsindikation eine graphische Darstellung der Zustandsindikation zu erzeugen und diese dem Nutzer auf der graphischen Benutzeroberfläche 401 anzuzeigen. Der Nutzer kann so auch aus der Ferne eine mögliche aufgetretene oder noch auftretende Störung erkennen und entsprechende Gegenmaßnahmen, wie eine Reparatur oder Wartung, einen Austausch von Komponenten oder ähnlichem einleiten.

Hierbei können die Nutzeraktionen zum Einleiten von Gegenmaßnahmen insbesondere nutzer- beziehungsweise rollenabhängig definiert werden. So kann ein Kunde, bei dem die Brandschutzanlage 10 errichtet wurde, beispielsweise eine Gegenmaßnahme einleiten, die ein Rufen von zertifiziertem Wartungspersonal umfasst. Handelt es sich bei dem Nutzer um einen mit der Wartung beauftragten Disponenten, kann dieser in Antwort auf die Zustandsindikation die Materialien für die Wartung und/oder Reparatur zusammenstellen und diese entsprechend planen und sodann einleiten. Handelt es sich bei dem Nutzer um den Errichter, kann dieser beispielsweise ebenfalls selbst eine Wartung und/oder Reparatur planen und einleiten oder entsprechendes zertifiziertes Wartungspersonal entsenden, um die Wartung und/oder Reparatur durchzuführen. In jedem Fall erlaubt die Zustandsindikation dem Nutzer, entsprechend tätig zu werden.

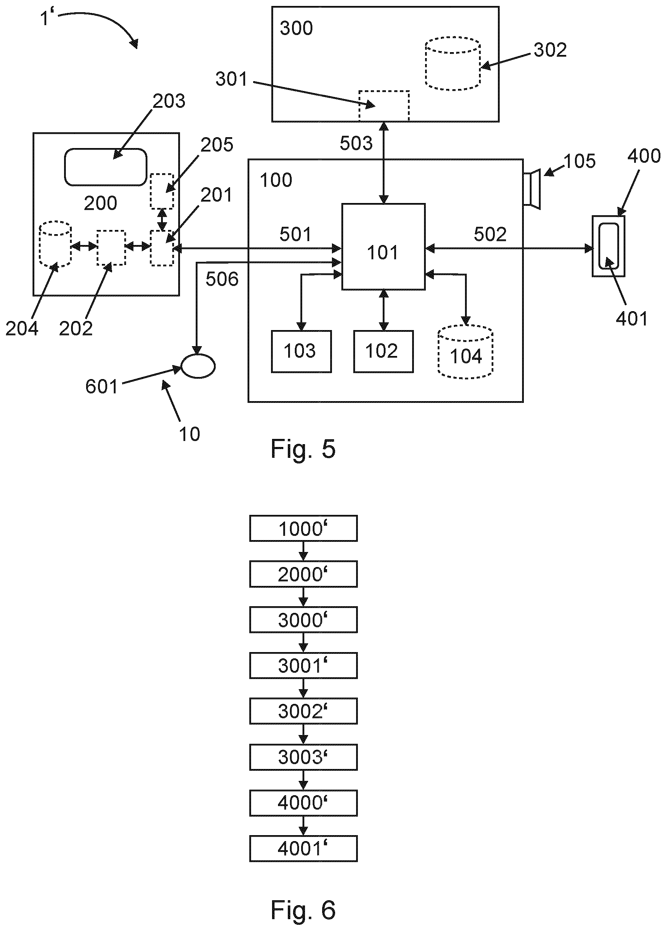

Die Figur 5 zeigt ein System 1' zum Betreiben einer Brandschutzanlage 10 gemäß einer Modifikation der zweiten Ausführungsform der Fig. 4. Auch hier umfasst das System 1' erneut eine Servicevorrichtung 100, eine Zentralvorrichtung 200, eine Serverkomponente 300 und ein Nutzerendgerät 400, welche allesamt wie im Zusammenhang mit Fig. 4 beschrieben funktionieren, wobei gleiche Referenznummern gleiche Komponenten bezeichnen. Im Folgenden wird daher erneut nur auf die Unterschiede zwischen System 1 gemäß Fig. 4 und System 1' gemäß der Modifikation in Fig. 5 eingegangen.

In der spezifischen Ausführungsform der Fig. 5 ist die Kommunikationseinrichtung 101 der Servicevorrichtung 100 eingerichtet, direkt über die bidirektionale Kommunikationsverbindung 506 mit einem oder mehreren Peripheriegeräten zu kommunizieren. Das bedeutet, die Kommunikationseinrichtung 101 der Servicevorrichtung 100 erhält Zustandsinformationen über den Zustand der Zentralvorrichtung über die bidirektionale Kommunikationsverbindung 501 und Zustandsinformationen über den Zustand der Peripheriegeräte 601 über die bidirektionale Kommunikationsverbindung 506. Dies ermöglicht eine zeitlich separierte Übertragung der Zustandsinformationen und erlaubt so eine effizientere zeitliche Taktung der Übertragung. So können die Zustandsinformationen, die indikativ für den Zustand der Zentralvorrichtung 200 sind, beispielsweise dauerhaft übertragen werden und die Zustandsinformationen, die indikativ für den Zustand der Peripheriegeräte 601 sind, nur in regelmäßigen zeitlichen Abständen, wobei die Zeitabstände beispielsweise in Abhängigkeit von den Erfordernissen des jeweiligen Peripheriegeräts 601 und/oder der dafür vorgegebenen Richtlinien gewählt werden können.

Auch in den Fig. 4 und 5 ist die Servicevorrichtung 100 als externe Komponente dargestellt, kann jedoch auch hier als internes Modul der Zentralvorrichtung 200 eingerichtet werden, ohne dass die beschriebenen Funktionalitäten angepasst werden müssen.

Die Figur 6 zeigt schematisch ein Ablaufdiagram eines erfindungsgemäßen Verfahrens zum Betreiben einer Brandschutzanlage 10, insbesondere zur Zustandsüberwachung einer Brandschutzanlage 10 gemäß der Fig. 4. In Schritt 1000' wird die bidirektionale Kommunikationsverbindung 501 zwischen Kommunikationseinrichtung 101 der Servicevorrichtung 100 und Zentralkommunikationseinrichtung 201 der Zentralvorrichtung 200 aufgebaut. In Schritt 2000' empfängt die Kommunikationseinrichtung 101 der Servicevorrichtung 100 die Zustandsinformationen, die indikativ für den Zustand der Brandschutzanlage 10 sind, von der Zentralkommunikationseinrichtung 201 der Zentralvorrichtung 200 und leitet diese in Schritt 3000' an die Recheneinrichtung 102 weiter. In Schritt 3001' veranlasst die Recheneinrichtung 102 ein Abrufen der Abgleichwerte für die Zustandsinformationen aus einem Speicher. Hierzu kann die Recheneinrichtung 102 insbesondere die Kommunikationseinrichtung 101 veranlassen, diese Werte aus dem Datenspeicher 302 der Serverkomponente auszulesen.

In Schritt 3002' erhält die Recheneinrichtung 102 die Abgleichwerte und verwendet diese, um die Zustandsinformationen auszuwerten. Auf Basis dieser Auswertung, die insbesondere einen Abgleich eines Werts einer Zustandsinformation mit dem entsprechenden Abgleichwert umfassen kann, erzeugt die Recheneinrichtung 102 in Schritt 3003' dann eine Zustandsindikation und veranlasst die Kommunikationseinrichtung 101, diese Zustandsindikation, optional zusammen mit den Zustandsinformationen und/oder den Systeminformationen, über die bidirektionale Kommunikationsverbindung 502 an das Nutzerendgerät 400 zu übermitteln.

Im Anschluss an das Empfangen der Zustandsindikation erzeugt das Nutzerendgerät in Schritt 4000' eine graphische Darstellung der Zustandsindikation, optional zusammen mit einer graphischen Darstellung der Zustandsinformationen und/oder der Systeminformationen, und zeigt diese dem Nutzer des Nutzerendgeräts an. In Schritt 4001' leitet der Nutzer in Antwort auf die Zustandsindikation eine entsprechende Maßnahme ein, wenn die Zustandsindikation eine solche Maßnahme als nötig erscheinen lässt, um eine Störung zu verhindern. Dies erlaubt eine frühzeitige Störungserkennung so eine vorbeugende Wartung und/oder Reparatur der Brandschutzanlage.

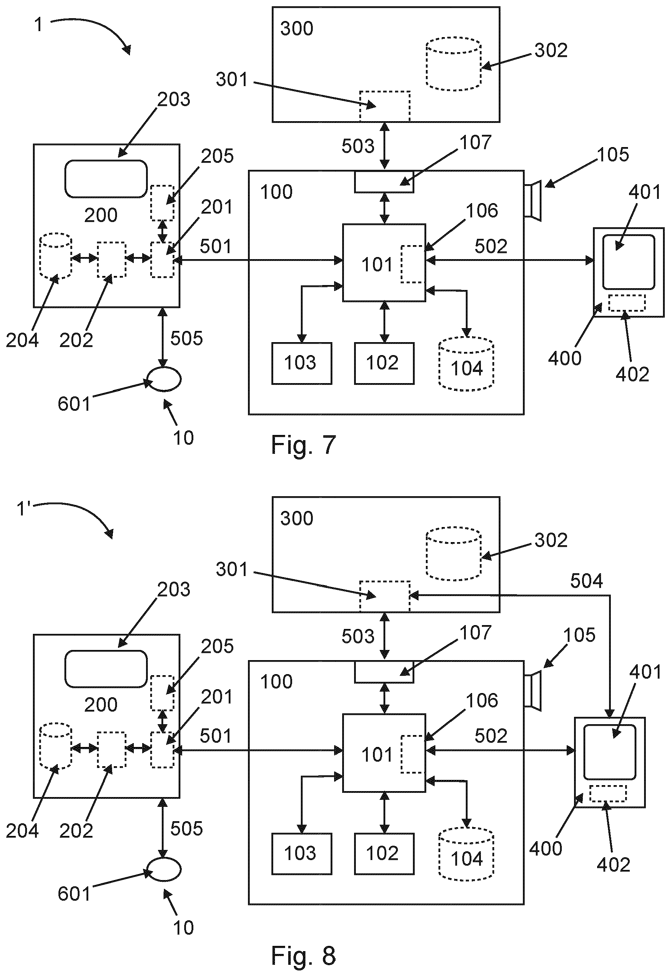

Die Figur 7 zeigt ein erfindungsgemäßes System 1 zum Betreiben einer Brandschutzanlage 10 gemäß einer dritten Ausführungsform. Auch hier umfasst das System 1 erneut eine Servicevorrichtung 100, eine Zentralvorrichtung 200 der Brandschutzanlage 10, eine Serverkomponente 300 und ein Nutzerendgerät 400 und gleicht somit in seiner Systemarchitektur dem System gemäß der ersten und zweiten Ausführungsform.

Die Servicevorrichtung 100 umfasst eine Kommunikationseinrichtung 101, eine Recheneinrichtung 102, eine Identifizierungseinrichtung 103, eine Speichereinrichtung 104 und eine Indikationseinrichtung 105. Im Vergleich zu den Ausführungsformen gemäß der Figuren 1, 2, 4 und 5 umfasst die Servicevorrichtung 100 ferner eine Zugriffsbeschränkungseinrichtung 106 und eine Verifizierungseinrichtung 107.

Das Nutzerendgerät 400 umfasst eine graphische Benutzeroberfläche und ein Identitätsmodul 402, welches bevorzugt als Teilnehmeridentitätsmodul ausgestaltet ist.

Die Brandschutzanlage 10 und die Serverkomponente 300 entsprechen im Wesentlichen den Ausführungsformen gemäß der Fig. 4. Das bedeutet, die Brandschutzanlage 10 umfasst eine Zentralvorrichtung 200 und eine Vielzahl von Peripheriegeräten 601, von denen in der Fig. 7 allerdings erneut nur eines dargestellt ist, wobei die Peripheriegeräte 601 über eine bidirektionale Kommunikationsverbindung 505 kommunikativ mit der Zentralvorrichtung 200 verbunden sind.

Die Kommunikationseinrichtung 101 der Servicevorrichtung 100 ist eingerichtet, über eine bidirektionale Kommunikationsverbindung 501 mit der Zentralkommunikationseinrichtung 201 der Zentralvorrichtung zu kommunizieren. Ferner ist die Kommunikationseinrichtung 101 der Servicevorrichtung 100 eingerichtet, über eine bidirektionale Kommunikationsverbindung 502 mit dem Nutzerendgerät 400 zu kommunizieren.

Anders als bei der ersten und der zweiten Ausführungsform umfasst die Servicevorrichtung 100 in der dritten Ausführungsform eine Zugriffsbeschränkungseinrichtung 106, die eingerichtet ist, den Zugriff des Nutzers auf die Informationen aus der Zentralkommunikationseinrichtung 201 über die bidirektionale Kommunikationsverbindung 502 zu beschränken, und insbesondere die Übermittlung von Systeminformationen über die bidirektionale Kommunikationsverbindung 502 an das Nutzerendgerät 400 zu unterbinden, solange der Nutzer nicht zunächst authentifiziert worden ist.

Das bedeutet insbesondere, dass das Nutzerendgerät 400 erst dann die Systeminformationen von der Brandschutzanlage 10 über die Servicevorrichtung 100 erhält, wenn der Nutzer erfolgreich authentifiziert wurde. In der spezifischen Ausführungsform der Fig. 7 wird zu dieser Authentifizierung ein Identitätsmodul 402 verwendet, dass eine Nutzeridentifizierung ausgibt und über die bidirektionale Kommunikationsverbindung 502 an die Recheneinrichtung 101 der Servicevorrichtung 100 übermittelt. Dazu ist die bidirektionale Kommunikationsverbindung 502 für die Übermittlung der Nutzeridentifizierung freigegeben.

Die Recheneinrichtung 102 ist eingerichtet, die Nutzeridentifizierung, insbesondere von dem Identitätsmodul 402, zu empfangen und zu ermitteln, ob die Nutzeridentifizierung einem authentifizierten Nutzer der Servicevorrichtung 100 und/oder der Brandschutzanlage 10 zugeordnet werden kann. Ist dies der Fall, veranlasst die Recheneinrichtung 102 durch Ausgabe eines Freigabesignals die Zugriffsbeschränkungseinrichtung 106, die bidirektionale Kommunikationsverbindung 502 zwischen der Kommunikationseinrichtung 101 und dem Nutzerendgerät 400 auch zur Übertragung von Systeminformationen und/oder Zustandsinformationen freizugeben. In diesem Fall werden sodann die Systeminformationen wie vorstehend beschrieben von der Servicevorrichtung 100, beziehungsweise von deren Kommunikationseinrichtung 101, an das Nutzerendgerät 400 übermittelt.

Kann der Nutzer jedoch nicht authentifiziert werden, veranlasst die Recheneinrichtung 102 die Zugriffsbeschränkungseinrichtung 106 - entweder aktiv durch Übermitteln eines expliziten Signals oder passiv durch Unterlassen des Freigabesignals - die Zugriffsbeschränkung aufrecht zu erhalten. In diesem Fall können keine Systeminformationen von der Servicevorrichtung 100 an das Nutzerendgerät 400 übertragen werden.

In der Figur 7 umfasst die Servicevorrichtung 100 ferner eine Verifizierungseinrichtung 107, die eingerichtet ist, den Zugriff der Servicevorrichtung 100 auf die Serverkomponente 300 zu beschränken und insbesondere zu verhindern, wenn der Nutzer nicht verifiziert werden kann. Dies erlaubt, vor Zugriff auf die Serverkomponente 300 zu prüfen, ob ein Nutzer eine Berechtigung hat, auf die Serverkomponente 300 zuzugreifen. Unter einer solchen Berechtigung kann insbesondere eine Serverlizenz verstanden werden, die der Nutzer zur Verwendung der Serverkomponente 300 zunächst erwerben muss. Erst nach Erwerb der Serverlizenz kann der Nutzer dann die zusätzliche Kapazität der Serverkomponente 300 nutzen.

Die Verifizierungseinrichtung 107 ist ferner eingerichtet, von dem Nutzerendgerät 400, insbesondere über die Kommunikationseinrichtung 101, eine Zugangsverifizierung zu erhalten. In einigen Ausführungsformen ist die Zugangsverifizierung als Teil des Identitätsmoduls 402 eingerichtet. Alternativ oder zusätzlich kann die Zugangsverifizierung auch als separates Signal ausgestaltet sein.

Die Verifizierungseinrichtung 107 ermittelt auf Basis dieser Zugangsverifizierung, ob der Nutzer die Berechtigung hat, über die bidirektionale Kommunikationsverbindung 503 auf die Serverkomponente 300 zuzugreifen. Ist dies der Fall, gibt die Verifizierungseinrichtung 107 die bidirektionale Kommunikationsverbindung 503 frei, so dass diese aufgebaut werden kann. Der Nutzer kann dann die Funktionalitäten der Serverkomponente 300 ausnutzen. Ist dies nicht der Fall, verhindert die Verifizierungseinrichtung 107 die Freigabe - und damit die den Aufbau - der bidirektionalen Kommunikationsverbindung 503. Dies erlaubt, den Zugriff eines unberechtigten Nutzers auf die Serverkomponente 300 zu unterbinden.

Die Figur 8 zeigt ein System 1' zum Betreiben einer Brandschutzanlage 10 gemäß einer Modifikation der dritten Ausführungsform der Fig. 7. Auch hier umfasst das System 1' erneut eine Servicevorrichtung 100, eine Zentralvorrichtung 200, eine Serverkomponente 300 und ein Nutzerendgerät 400, welche allesamt wie im Zusammenhang mit Fig. 7 beschrieben funktionieren, wobei gleiche Referenznummern gleiche Komponenten bezeichnen. Im Folgenden wird daher erneut nur auf die Unterschiede zwischen System 1 gemäß Fig. 7 und System 1' gemäß der Modifikation in Fig. 8 eingegangen.

In der spezifischen Ausführungsform der Fig. 8 ist die Kommunikationseinrichtung 101 der Servicevorrichtung 100 eingerichtet, mit dem Nutzerendgerät zum einen direkt, über die bidirektionale Kommunikationsverbindung 502, sowie indirekt, über die Serverkomponente 300, also die bidirektionalen Kommunikationsverbindungen 503 und 504, zu kommunizieren. In der spezifischen Ausführungsform der Fig. 8 bedeutet dies insbesondere, dass die bidirektionale Kommunikationsverbindung 502 dazu genutzt wird, die Nutzeridentifizierung von dem Nutzerendgerät 400, insbesondere dessen Identitätsmodul 402, an die Kommunikationseinrichtung 101 zu übermitteln, die diese Nutzeridentifizierung an die Recheneinrichtung 102 übermittelt. Die Recheneinrichtung 102 authentifiziert das Nutzerendgerät 400 wie im Zusammenhang mit der Fig. 7 beschrieben.

Wird der Nutzer basierend auf der Nutzeridentifizierung als authentifizierter Nutzer identifiziert, ist die Recheneinrichtung 102 eingerichtet, die Zugriffsbeschränkungseinrichtung 106 zu veranlassen, den Zugriff des Nutzerendgeräts 400 auf die Systeminformationen freizugeben, wie ebenfalls im Zusammenhang mit der Fig. 7 beschrieben. In diesem Fall bedeutet eine Freigabe des Zugriffs insbesondere eine Freigabe des Zugriffs des Nutzerendgeräts auf die über die bidirektionale Kommunikationsverbindung 503 und die bidirektionale Kommunikationsverbindung 504. Das bedeutet, in der Ausführungsform gemäß der Fig. 8 werden die Systeminformationen nicht über die bidirektionale Kommunikationsverbindung 502, sondern über die bidirektionalen Kommunikationsverbindungen 503 und 504, also über die Serverkomponente übermittelt. Dies erlaubt zum einen, das Nutzerendgerät 400 auch ohne Zugriff auf die Serverkomponente 300 zu verifizieren, zum anderen wird dadurch ermöglicht, dass ein Teil der Aufbereitung und/oder Auswertung der Systeminformationen auf die Serverkomponente 300 ausgelagert werden kann.

Auch wenn an dieser Stelle erneut die Servicevorrichtung 100 als externe Komponente dargestellt ist, kann jedoch auch die dritte Ausführungsform gemäß der Fig. 7 und 8 als internes Modul der Zentralvorrichtung 200 eingerichtet werden, ohne dass die beschriebenen Funktionalitäten angepasst werden müssen.

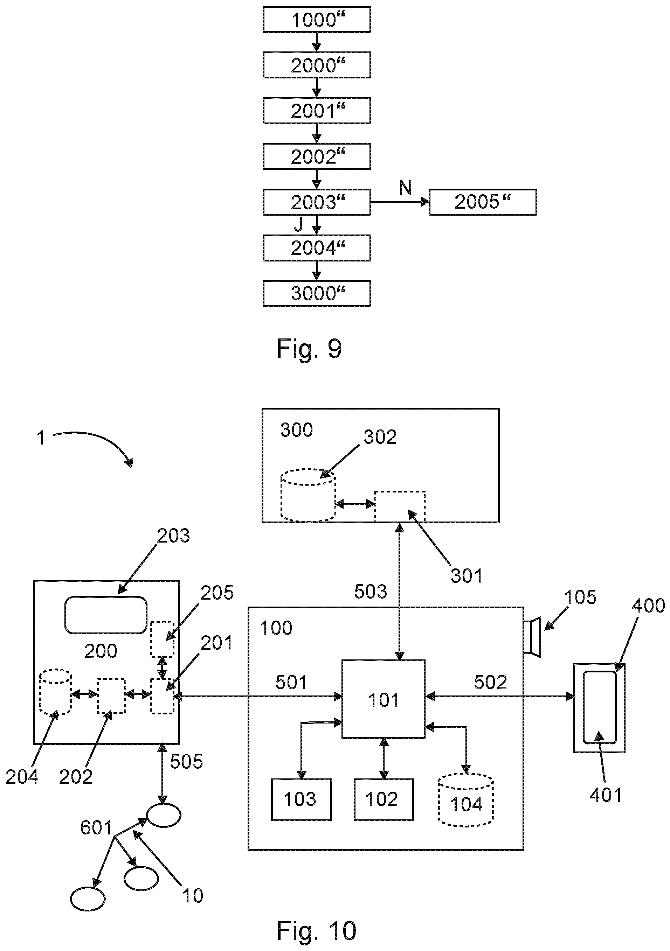

Die Figur 9 zeigt schematisch ein Ablaufdiagram eines erfindungsgemäßen Verfahrens zum Betreiben einer Brandschutzanlage 10, insbesondere zur Zugriffsüberprüfung einer Brandschutzanlage 10. In Schritt 1000" wird die bidirektionale Kommunikationsverbindung 501 zwischen Kommunikationseinrichtung 101 der Servicevorrichtung 100 und Zentralkommunikationseinrichtung 201 der Zentralvorrichtung 200 der Brandschutzanlage 10 aufgebaut. In Schritt 2000" wird die bidirektionale Kommunikationsverbindung 502 zwischen der Kommunikationseinrichtung 101 und dem Nutzerendgerät 400 aufgebaut. Hierzu empfängt die Kommunikationseinrichtung 101 in Schritt 2001" zumindest eine Nutzeridentifizierung von dem Nutzerendgerät 400 und übermittelt diese in Schritt 2002" an die Recheneinrichtung 102, welche den Nutzer basierend auf der Nutzeridentifizierung identifiziert und in Schritt 2003" ermittelt, ob es sich um einen authentifizierten Nutzer handelt.

Ist dies der Fall ("J"), gibt die Recheneinrichtung 102 in Schritt 2004" ein Freigabesignal an die Zugriffsbeschränkungseinrichtung 106 aus, das die Zugriffsbeschränkungseinrichtung 106 veranlasst, die Kommunikation von Systeminformationen an das Nutzerendgerät 400 freizugeben. In diesem Fall erhält das Nutzerendgerät 400 in Schritt 3000" die Systeminformationen und/oder Zustandsinformationen, die es gemäß seiner Zugriffsberechtigung - beispielsweise ermittelt auf Basis der Authentifizierung - erhalten darf.

Ist dies nicht der Fall ("N") so unterlässt die Recheneinrichtung 102, in Schritt 2005", eine Ausgabe des Freigabesignals und es werden keine Systeminformationen an das Nutzerendgerät 400 ausgegeben.

Die Figur 10 zeigt schematisch ein erfindungsgemäßes System 1 zum Betreiben einer Brandschutzanlage 10 gemäß einer vierten Ausführungsform, erneut umfassend eine Servicevorrichtung 100, eine Zentralvorrichtung 200 der Brandschutzanlage 10, eine Serverkomponente 300 und ein Nutzerendgerät 400.

Die Servicevorrichtung 100 umfasst eine Kommunikationseinrichtung 101, eine Recheneinrichtung 102, eine Identifizierungseinrichtung 103, eine Speichereinrichtung 104 und eine Indikationseinrichtung 105.

Die Brandschutzanlage 10 umfasst die Zentralvorrichtung 200 und eine Vielzahl von Peripheriegeräten 601, die über eine bidirektionale Kommunikationsverbindung 505 kommunikativ mit der Zentralvorrichtung 200 verbunden sind.

Die Kommunikationseinrichtung 101 der Servicevorrichtung 100 ist eingerichtet, über eine bidirektionale Kommunikationsverbindung 501 mit der Zentralkommunikationseinrichtung 201 der Zentralvorrichtung 200 zu kommunizieren, um so Systeminformationen, umfassend Zustandsinformationen, die indikativ für den Zustand der Brandschutzanlage 10 und/oder darin befindlichen Peripheriegeräte 601 sind, zu erhalten. Ferner ist die Kommunikationseinrichtung 101 der Servicevorrichtung 100 eingerichtet, über eine bidirektionale Kommunikationsverbindung 503 mit der Serverkomponente 300 zu kommunizieren.

In der Ausführungsform gemäß der Fig. 10 erhält die Kommunikationseinrichtung 101 der Servicevorrichtung 100 also zumindest einen Wert für einen Parameter der Zustandsinformationen, der indikativ für den Zustand der Brandschutzanlage 10 und/oder eines oder mehrerer der Peripheriegeräte 601 ist. Die Kommunikationseinrichtung 101 ist eingerichtet, die Zustandsinformationen an die Recheneinrichtung 102 zu übermitteln, die eingerichtet ist, die Zustandsinformationen auszuwerten und basierend auf dem Auswerten ein Auswerteergebnis zu erzeugen. In einigen Ausführungsformen umfasst dieses Auswerteergebnis zusätzlich zu den ausgewerteten Zustandsinformationen die weiteren Systeminformationen.

Das Auswerteergebnis wird dann über die bidirektionale Kommunikationsverbindung 503 an die Serverkomponente 300 übermittelt, wo es von der Serverkommunikationseinrichtung 301 empfangen und anschließend zum Einfügen in den Datenspeicher 302 aufbereitet wird. Dieses Aufbereiten kann hierbei insbesondere das Versehen des Auswerteergebnisses mit einem Geräteindex, der jeweils die entsprechend auf ihren Zustand geprüfte Komponente, beispielsweise ein Modul der Zentralvorrichtung 200, ein Peripheriegerät 601 der Brandschutzanlage 10 oder ähnliches, angibt, sowie einem Zeitstempel zur besseren zeitlichen Nachvollziehbarkeit und erhöhten Sicherung gegen Missbrauch umfassen.

Das bedeutet, in dem System 1 der Fig. 10 werden das Auswerteergebnis, also die ausgewerteten Zustandsinformationen, optional umfassend die Systeminformationen, in den Datenspeicher 302 geschrieben. So kann ein Nutzer, insbesondere der Errichter und/oder zertifiziertes Wartungspersonal, das System regelmäßig prüfen und nachvollziehen, ob sämtliche Wartungsarbeiten vollständig und rechtzeitig durchgeführt worden sind. Dies erlaubt ein automatisiertes Erstellen von Wartungsprotokollen. In einer alternativen Ausführungsform - beispielsweise in einem Fall ohne Zugriff auf die Serverkomponente 300, können das Auswerteergebnis und/oder die Systeminformationen auch in der Speichereinrichtung 104 der Servicevorrichtung 100 abgespeichert werden. Dadurch kann die Notwendigkeit einer Serverkomponente 300 vermieden werden.

In jedem Fall kann das Auswerteergebnis - gegebenenfalls nach vorheriger Authentifizierung - mittels des Nutzerendgeräts 400 von einem Nutzer eingesehen werden. Insbesondere kann das Nutzerendgerät 400 eingerichtet sein, eine graphische Darstellung des Auswerteergebnisses und/oder des Wartungsprotokolls zu erstellen und diese dem Nutzer anzuzeigen. Der Nutzer hat so einen unmittelbaren Überblick über den derzeitigen Wartungszustand des Systems 1'.

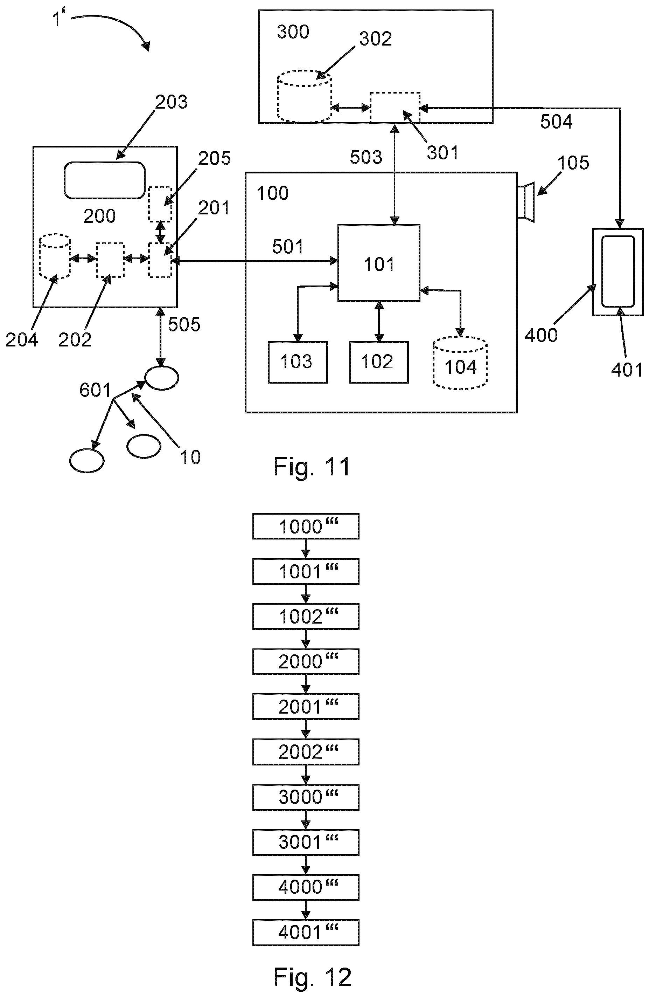

Figur 11 betrifft eine Modifikation des Systems 1 gemäß der Fig. 10. Auch hier bedeuten gleiche Bezugszeichen wieder gleiche Komponenten, auf deren Funktionalitäten im Folgenden nicht näher eingegangen werden soll. Der Unterschied zwischen dem System 1 der Fig. 10 und dem System 1'der Fig. 11 liegt vorliegend in Art und Weise, wie die Kommunikation zwischen Nutzerendgerät 400 und Servicevorrichtung 100 von statten geht. Gemäß der Fig. 10 kommuniziert das Nutzerendgerät 400 unmittelbar über die bidirektionale Kommunikationsverbindung 502 mit der Servicevorrichtung 100, beziehungsweise der Kommunikationseinrichtung 101. Daher muss das Nutzerendgerät 400 mittels der Servicevorrichtung 100 auf das innerhalb des Datenspeichers 302 abgespeicherte Auswerteergebnis zugreifen.

Im Gegensatz dazu kommuniziert das Nutzerendgerät 400 in dem System 1' der Fig. 11 über die bidirektionale Kommunikationsverbindung 504 mit der Serverkomponente, um das Auswerteergebnis abzurufen. In dieser Ausführungsform wird die Kommunikation - sowohl zum Abrufen des Auswerteergebnisses als auch zum Einsehen der Systeminformationen wie voranstehend beschrieben - stets über die Serverkomponente 300 geführt. Hierdurch ist es möglich bestimmte Auswerte- und Rechenvorgänge von der Servicevorrichtung 100 auf die Serverkomponente 300 zu übertragen, um so eine Servicevorrichtung 100 mit geringen Rechenkapazitäten zu schaffen.

Die Fig. 12 zeigt schematisch den Ablaufdiagramm für ein Verfahren zum Betreiben, insbesondere zur Überwachung und Wartung, einer Brandschutzanlage 10 in einem System wie beispielsweise in der Fig. 10 dargestellt.

In Schritt 1000‴ wird die bidirektionale Kommunikationsverbindung 501 zwischen Kommunikationseinrichtung 101 der Servicevorrichtung 100 und Zentralkommunikationseinrichtung 201 der Zentralvorrichtung 200 der Brandschutzanlage 10 aufgebaut. In Schritt 1001‴ übermitteln die Peripheriegeräte 601 entsprechende Zustandsinformationen, die indikativ für ihren Zustand sind, über die bidirektionale Kommunikationsverbindung 505 an die Zentralvorrichtung 200. In Schritt 1002‴ übermittelt die Zentralkommunikationseinrichtung 201 sämtliche Systeminformationen, umfassend die Zustandsinformationen, die indikativ für den Zustand der Peripheriegeräte 601 und/oder der Zentralvorrichtung 200 sind, an die Kommunikationseinrichtung 101 der Servicevorrichtung 100 zu weiteren Auswertung.

In Schritt 2000‴ übermittelt die Kommunikationseinrichtung 101 die so erhaltenen Systeminformationen an die Recheneinrichtung 102 zur Auswertung und zum Erstellen eines Auswerteergebnisses, sowie, optional, einer Zustandsindikation, Abweich-Indikation und/oder Wartungsindikation. In Schritt 2001‴ wertet die Recheneinrichtung 102 die Systeminformationen, insbesondere die Zustandsinformationen, aus und erzeugt basierend auf der Auswertung ein Auswerteergebnis. Die Recheneinrichtung 102 ist eingerichtet, diesem Auswerteergebnis sodann einen Geräteindex hinzuzufügen, der die entsprechende Komponente, beispielsweise das entsprechende Peripheriegerät 601, angibt, für die entsprechende Zustandsinformationen vorlagen und für die es daher möglich war, den Zustand auf Basis einer Auswertung dieser Zustandsinformationen zu ermitteln. Ferner ist die Recheneinrichtung 102 eingerichtet, dem Auswerteergebnis einen Zeitstempel hinzuzufügen, der angibt, zu welchem Zeitpunkt die Zustandsinformationen empfangen worden sind. Das so aufbereitete Auswerteergebnis wird dann in Schritt 2002‴ mittels der Kommunikationseinrichtung 101 über die bidirektionale Kommunikationsverbindung 503 an die Serverkomponente 300 übermittelt.

In Schritt 3000‴ erhält die Serverkomponente 300 das Auswerteergebnis und übermittelt dieses, zusammen mit den Zusatzinformationen wie Geräteindex und dem Zeitstempel, an den Datenspeicher 302 in der Serverkomponente 300. Dort wird das Auswerteergebnis abgelegt und kann sodann zur erneuten Auswertung - als eine Art Ist-Wert oder Vergangenheitswert - verwendet werden. In Schritt 3001‴ erzeugt die Serverkomponente 300 vor Abspeichern des Auswerteergebnisses eine Zustandsprotokollierung. Diese Zustandsprotokollierung kann insbesondere auf Basis der Zustandsinformationen sowie des Geräteindex und des Zeitstempels erzeugt werden.

In Schritt 4000‴ wird das so erstellte Auswerteergebnis und/oder die Zustandsprotokollierung dann über eine bidirektionale Kommunikationsverbindung an das Nutzerendgerät 400 übermittelt. In Schritt 4001‴ erstellt das Nutzerendgerät 400 eine graphische Darstellung des Auswerteergebnis und/oder der Zustandsprotokollierung und gibt diese dem Nutzer aus, indem die graphische Darstellung auf der graphischen Benutzeroberfläche angezeigt wird. Der Nutzer kann dann entsprechend visuell prüfen, ob die Wartung ordnungsgemäß erfolgt ist und welche Änderungen sich im Vergleich zum letzten Turnus ergeben haben.

**Bezugszeichenliste:**

| | |
|---|---|
| System zum Betreiben einer Brandschutzanlage | 1, 1' |
| Brandschutzanlage | 10 |
| Servicevorrichtung | 100 |
| Kommunikationseinrichtung | 101 |
| Recheneinrichtung | 102 |
| Identifikationseinrichtung | 103 |
| Speichereinrichtung | 104 |
| Indikationseinrichtung | 105 |
| Zugriffsbeschränkungseinrichtung | 106 |
| Verifizierungseinrichtung | 107 |
| Authentifizierungseinrichtung | 110 |
| Zentralvorrichtung | 200 |
| Zentralkommunikationseinrichtung | 201 |
| Zentralrecheneinrichtung | 202 |
| Zentralanzeigeeinrichtung | 203 |
| Zentralspeichereinrichtung | 204 |
| Zentralstromversorgung | 205 |
| Serverkomponente | 300 |
| Serverkommunikationseinrichtung | 301 |
| Datenspeicher | 302 |
| Nutzerendgerät | 400 |
| Graphische Benutzeroberfläche | 401 |
| Identitätsmodul | 402 |
| Kommunikationsverbindung | 501, 502, 503, 504, 505, 506 |
| Peripheriegeräte | 601 |

## Patentansprüche

1. Servicevorrichtung (100) für eine Brandschutzanlage (10), umfassend
eine Kommunikationseinrichtung (101), und
zumindest eine Recheneinrichtung (102), wobei
die Kommunikationseinrichtung (101) eingerichtet ist, über eine erste bidirektionale Kommunikationsverbindung (501) mit einer Zentralvorrichtung (200) der Brandschutzanlage (10) zu kommunizieren, um über die erste bidirektionale Kommunikationsverbindung (501) Systeminformationen von der Zentralvorrichtung (200) zu empfangen und an die zumindest eine Recheneinrichtung (102) zu übermitteln, und wobei die Kommunikationseinrichtung (101) ferner eingerichtet ist, über eine zweite bidirektionale Kommunikationsverbindung (502) mit zumindest einem Nutzerendgerät (400) zu kommunizieren, wobei
die zumindest eine Recheneinrichtung (102) eingerichtet ist,
die Systeminformationen aufzubereiten, um aufbereitete Systeminformationen zu erhalten, und die aufbereiteten Systeminformationen zur Übermittlung an das Nutzerendgerät (400) bereitzustellen; und wobei
die Kommunikationseinrichtung (101) ferner eingerichtet ist, über die zweite bidirektionale Kommunikationsverbindung (502) dem Nutzerendgerät (400) einen Zugriff auf zumindest einen Teil der aufbereiteten Systeminformationen der Brandschutzanlage (10) zu erlauben, wobei
die zumindest eine Recheneinrichtung (102) eingerichtet ist, zumindest eine Nutzereingabe von dem Nutzerendgerät (400) in Antwort auf den zumindest einen Teil der aufbereiteten Systeminformationen zu empfangen, und
eine Anpassung der Systeminformationen der Brandschutzanlage (10) auf Basis der zumindest eine Nutzereingabe durchzuführen
**dadurch gekennzeichnet, dass** der zumindest eine Teil der aufbereiteten Systeminformationen, für den dem Nutzerendgerät (400) Zugriff erlaubt wird, basierend auf einer Zugangsberechtigung eines Nutzers ermittelt wird, wobei die Zugangsberechtigung erlaubt, das Nutzerendgerät einer bestimmten Zugangsberechtigungskategorie aus einer Vielzahl von Zugangsberechtigungskategorien zuzuordnen, wobei die Zugangsberechtigungskategorie erlaubt, zu bestimmen, auf welchen Anteil des zumindest einen Teils der aufbereiteten Systeminformationen dem Nutzerendgerät der Zugriff erlaubt wird.

2. Servicevorrichtung (100) nach Anspruch 1, wobei die zweite bidirektionale Kommunikationsverbindung (503, 504) eingerichtet ist, die Kommunikationseinrichtung (101) über eine Serverkomponente (300) mit dem zumindest eine Nutzerendgerät (400) zu verbinden; und/oder wobei die erste Kommunikationsverbindung (501) und/oder die zweite Kommunikationsverbindung (502, 503, 504) eine verschlüsselte Kommunikationsverbindung umfasst.

3. Servicevorrichtung (100) nach zumindest einem der vorherigen Ansprüche, ferner eine Identifikationseinrichtung (103) umfassend, die eingerichtet ist, Identifikationsdaten der Servicevorrichtung (100) an die Zentralvorrichtung (200) und/oder das zumindest eine Nutzerendgerät (400) zu übermitteln.

4. Servicevorrichtung (100) nach zumindest einem der vorherigen Ansprüche, ferner eine Speichereinrichtung (104) zur Speicherung der Systeminformationen umfassend.

5. Servicevorrichtung (100) nach Anspruch 4, wobei die Speichereinrichtung (104) ferner zur Speicherung einer ersten Softwareidentifizierung von Softwaredaten eingerichtet ist, wobei die Recheneinrichtung (102) ferner eingerichtet ist:
- über die erste Kommunikationsverbindung eine zweite Softwareidentifizierung aus der Zentralvorrichtung (200) auszulesen, die indikativ für die Softwaredaten auf der Zentralvorrichtung (200) ist,
- die erste Softwareidentifizierung und die zweite Softwareidentifizierung zu vergleichen, und
- in Antwort auf ein Ermitteln, dass sich die erste Softwareidentifizierung und die zweite Softwareidentifizierung unterscheiden, die Softwaredaten über die erste Kommunikationsverbindung an die Zentralvorrichtung (200) zu übermitteln.

6. Servicevorrichtung (100) nach zumindest einem der vorherigen Ansprüche, ferner eine Indikationseinrichtung umfassend, die eingerichtet ist, eine Indikation auszugeben, wenn das Empfangen der Systeminformationen abgeschlossen ist.

7. Servicevorrichtung (100) nach zumindest einem der vorherigen Ansprüche, wobei die Systeminformationen zumindest eines der Folgenden umfassen:
- Daten, die Informationen über zumindest eine Komponente der Brandschutzanlage (10) umfassen, und/oder
- Daten, die Informationen über eine Einstellung der Brandschutzanlage (10) umfassen, und/oder
- Daten, die Informationen über einen Betriebszustand der Brandschutzanlage (10) umfassen.

8. Servicevorrichtung (100) nach zumindest einem der vorherigen Ansprüche, wobei die Recheneinrichtung (102) ferner eingerichtet ist, die zumindest eine Nutzereingabe zu prüfen und in Antwort auf das Prüfen eine Prüfindikation zur Übermittlung an das Nutzerendgerät (400) zu erzeugen.

9. Servicevorrichtung (100) nach zumindest einem der vorherigen Ansprüche, wobei die Recheneinrichtung ferner eingerichtet ist, eine Zugriffsberechtigung des zumindest eine Nutzerendgeräts (400) zu ermitteln, und die Systeminformationen, die an das zumindest eine Nutzerendgerät (400) übermittelt werden, basierend auf der Zugriffsberechtigung zu filtern.

10. Brandschutzanlage umfassend eine Zentralvorrichtung (200), wobei die Zentralvorrichtung (200) eingerichtet ist, mit einer Servicevorrichtung (100) nach zumindest einem der Ansprüche 1 bis 9 kommunikativ verbunden zu werden.

11. System (1, 1') zum Betreiben einer Brandschutzanlage (10), umfassend:
zumindest eine Servicevorrichtung (100) nach zumindest einem der Ansprüche 1 bis 9,
zumindest eine Zentralvorrichtung (200) der Brandschutzanlage (10) umfassend eine Zentralrecheneinrichtung (202), und
zumindest ein Nutzerendgerät (400),
wobei die Servicevorrichtung (100) eingerichtet ist, über die erste Kommunikationsverbindung (501) mit der Zentralrecheneinrichtung (202) der Zentralvorrichtung (200) zu kommunizieren.

12. System (1, 1'), nach Anspruch 11, wobei
die Zentralvorrichtung (200) eine Zentralspeichereinrichtung zur Speicherung einer zweiten Softwareidentifizierung umfasst, die indikativ für die Softwaredaten auf der Zentralvorrichtung (200) ist, wobei
dass zumindest eine Nutzerendgerät (400) eingerichtet ist, eine Anfrage zur Übermittlung von Softwaredaten von der Servicevorrichtung (100) zu empfangen und, in Antwort auf die Anfrage, eine Übermittlung der Softwaredaten von der Servicevorrichtung (100) an die Zentralvorrichtung (200) zu erlauben; wobei
die Zentralvorrichtung (200) ferner eingerichtet ist, die von der Servicevorrichtung (100) übermittelten Softwaredaten zu empfangen; und/oder wobei das zumindest eine Nutzerendgerät (400) eine graphische Benutzeroberfläche (401) umfasst, wobei die graphische Benutzeroberfläche (401) eingerichtet ist, eine graphische Darstellung der Systeminformationen anzuzeigen.

13. System (1, 1') nach zumindest einem der Ansprüche 11 oder 12, ferner umfassend zumindest ein Peripheriegerät (601) der Brandschutzanlage (10),
wobei die Systeminformationen Zustandsinformationen umfassen, die indikativ für einen Zustand des zumindest einen Peripheriegeräts (601) der Brandschutzanlage (10) ist, und
wobei die Servicevorrichtung (100) eingerichtet ist, basierend auf einem Auswerten der Zustandsinformationen zumindest eine Zustandsindikation eines Zustands der des zumindest einen Peripheriegeräts (601) und/oder der Brandschutzanlage (10) zu erzeugen.

14. Verfahren zum Betreiben einer Brandschutzanlage (10), folgende Schritte umfassend
Übermitteln von Systeminformationen über eine erste bidirektionale Kommunikationsverbindung (501) von einer Zentralvorrichtung (200) der Brandschutzanlage (10) an eine Servicevorrichtung (100),
Empfangen der Systeminformationen durch die Servicevorrichtung (100),
Aufbereiten der Systeminformationen durch die Servicevorrichtung (100), um aufbereitete Systeminformationen zu erhalten;
Übermitteln zumindest eines Teils der aufbereiteten Systeminformationen über eine zweite bidirektionale Kommunikationsverbindung (502) an zumindest ein Nutzerendgerät (400), um dem Nutzerendgerät (400) einen Zugriff auf zumindest den Teil der Systeminformationen der Brandschutzanlage (10) zu erlauben,
Empfangen zumindest einer Nutzereingabe von dem Nutzerendgerät (400) in Antwort auf den zumindest einen Teil der aufbereiteten Systeminformationen, und
Anpassen der Systeminformationen der Brandschutzanlage (10) auf Basis der zumindest einen Nutzereingabe,
**gekennzeichnet dadurch, dass** das Verfahren ferner umfasst:
Ermitteln des zumindest einen Teils der aufbereiteten Systeminformationen, für den dem Nutzerendgerät (400) Zugriff erlaubt wird, basierend auf einer Zugangsberechtigung eines Nutzers, wobei das Ermitteln umfasst:
Zuordnen, auf Basis der Zugangsberechtigung, des Nutzerendgeräts zu einer bestimmten Zugangsberechtigungskategorie aus einer Vielzahl von Zugangsberechtigungskategorien, und
Bestimmen, auf Basis der Zugangsberechtigungskategorie, eines Anteils des zumindest einen Teils der aufbereiteten Systeminformationen, um dem Nutzerendgerät den Zugriff auf den Anteil der zumindest einen Teil der aufbereiteten Systeminformationen zu erlauben.

15. Verfahren nach Anspruch 14, ferner umfassend:
Empfangen, durch die Zentralvorrichtung (200), von Systeminformationen, wobei die Systeminformationen indikativ für einen gegenwärtigen Zustand eines oder mehrerer Peripheriegeräte (601) der Brandschutzanlage (10) sind,
Auswerten, durch eine Recheneinrichtung (102) der Servicevorrichtung (100), der Systeminformationen, und
Erzeugen, durch die Recheneinrichtung (102), einer Zustandsindikation eines Zustands der des zumindest einen Peripheriegeräts (601) und/oder der Brandschutzanlage (10) basierend auf dem Auswerten.

16. Verwendung einer Servicevorrichtung (100) nach zumindest einem der Ansprüche 1 bis 9 zum Betreiben einer Brandschutzanlage (10).

## Claims

1. A service device (100) for a fire protection system (10), comprising
a communication device (101), and
at least one computing device (102), wherein
the communication device (101) is configured to communicate with a central device (200) of the fire protection system (10) via a first bidirectional communication link (501), in order to receive system information from the central device (200) via the first bidirectional communication link (501) and to transmit system information to the at least one computing device (102), and wherein the communication device (101) is further configured to communicate with at least one user terminal (400) via a second bidirectional communication link (502), wherein
the at least one computing device (102) is configured to
process the system information, to obtain processed system information, and to make the processed system information available for transmission to the user terminal (400); and wherein
the communication device (101) is further configured to grant the user terminal (400) access to at least part of the processed system information of the fire protection system (10) via the second bidirectional communication link (502), wherein
the at least one computing device (102) is configured to receive at least one user input from the user terminal (400) in response to the at least part of the processed system information, and
to perform adjustment of the system information of the fire protection system (10) based on the at least one user input,
**characterized in that** the at least part of the processed system information, the user terminal (400) is granted access to, is determined based on an access authorization of a user, wherein the access authorization allows assigning the user terminal to a specific access authorization category of a plurality of access authorization categories, wherein the access authorization category allows determining which portion of the at least part of the processed system information the user terminal is granted access to.

2. The service device (100) of claim 1, wherein the second bidirectional communication link (503; 504) is configured to connect the communication device (101) with the at least one user terminal (400) via a server component (300); and/or wherein the first communication link (501) and/or the second communication link (502; 503; 504) comprises an encrypted communication link.

3. The service device (100) according to any of the previous claims, further comprising an identification device (103) that is configured to transmit identification data of the service device (100) to the central device (200) and/or to the at least one user terminal (400).

4. The service device (100) according to any of the previous claims, further comprising a memory device (400) for storing system information.

5. The service device (100) according to claim 4, wherein the memory device (400) is further configured to store a first software identification of software data, wherein the computing device (102) is further configured to:
- read, via the first communication link, a second software identification from the central device (200), such second software identification being indicative of the software data on the central device (200),
- compare the first software identification and the second software identification, and
- in response to determining that the first software identification and the second software identification differ, to transmit the software data to the central device (200) via the first communication link.

6. The service device (100) according to any of the previous claims, further comprising an indication device configured to output an indication when the receiving of the system information by the communication device is complete.

7. The service device (100) according to any of the previous claims, wherein the system information comprises at least one of the following:
- data comprising information about at least one component of the fire protection system (10), and/or
- data comprising information about a setting of the fire protection system (10), and/or
- data comprising information about an operating state of the fire protection system (10).

8. The service device (100) according to any of the previous claims, wherein the computing device (102) is further configured to check the at least one user input and, in response to the checking, generate a check indication for transmission to the user terminal (400).

9. The service device (100) according to any of the previous claims, wherein the computing device is further configured to determine an access authorization of the at least one user terminal (400), and to filter the system information being transmitted to the user terminal (400) based on the access authorization.

10. A fire protection system comprising a central device (200), wherein the central device (200) is configured to be communicatively connected to a service device (100) according to at least one of claims 1 to 9.

11. A system (1, 1') for operating a fire protection system (10), comprising:
at least one service device (100) according to at least one of claims 1 to 9,
at least one central device (200) of the fire protection system (10) comprising a central processing device (202), and
at least one user terminal (400),
wherein the service device (100) is configured to communicate with the central processing device (202) of the central device (200) via the first communication link (501).

12. A system (1, 1'), according to claim 11, wherein
the central device (200) comprises a central memory device for storing a second software identification indicative of software data on the central device, wherein
the at least one user terminal (400) is configured to receive a request for the transmission of software data from the service device (100) and, in response to the request, to allow a transmission of the software data from the service device (100) to the central device (200); wherein
the central device (200) is further configured to receive the software data transmitted from the service device (100); and/or wherein the at least one user terminal (400) comprises a graphical user interface (401), wherein the graphical user interface (401) is configured to display a graphical representation of the system information.

13. System (1, 1') according to at least one of claims 11 or 12, further comprising at least one peripheral device (601) of the fire protection system (10),
wherein the system information comprises state information indicative of a state of the at least one peripheral device (601) of the fire protection system (10), and
wherein the service device (100) is configured to generate at least one state indication of a state of the at least one peripheral device (601) and/or the fire protection system (10) on the basis of an evaluation of the state information.

14. A method for operating a fire protection system (10), comprising the following steps
transmitting system information via a first bidirectional communication link (501) from a central device (200) of the fire protection system (10) to a service device (100),
receiving the system information by the service device (100),
processing the system information by the service device (100), to obtain processed system information;
transmitting at least part of the processed system information via a second bidirectional communication link (502) to at least one user terminal (400) to allow the user terminal (400) to access the at least part of the system information of the fire protection system (10),
receiving at least one user input from the user terminal (400) in response to the at least part of the processed system, and
adjusting the system information of the fire protection system (10) based on the at least one user input,
**characterized in that** the at least part of the processed system information, the user terminal (400) is granted access to, is determined based on an access authorization of a user, wherein the access authorization allows to assign the user terminal to a specific access authorization category from a plurality of access authorization categories, wherein the access authorization category allows to determine to which portion of the at least part of the processed system information the user terminal is granted access to.

15. The method according to claim 14, further comprising:
receiving system information by the central device (200), wherein the system information is indicative of a current state of the one or more peripheral devices (601) of the fire protection system (10),
evaluating the system information by a computing device (102) of the service device (100), and
generating a state indication of a state of the at least one peripheral device (601) and/or the fire protection system (10) by the computing device (102) based on the evaluation.

16. Use of a service device (100) according to any of claims 1 to 9 for operating a fire protection system (10).

## Revendications

1. Dispositif de service (100) pour une installation de protection contre les incendies (10), comprenant
un dispositif de communication (101), et
au moins un dispositif de calcul (102), dans lequel
le dispositif de communication (101) est configuré pour communiquer avec un dispositif central (200) de l'installation de protection contre les incendies (10) via une première liaison de communication bidirectionnelle (501) afin de recevoir des informations système du dispositif central (200) via la première liaison de communication bidirectionnelle (501) et de les transmettre à l'au moins un dispositif de calcul (102), et dans lequel le dispositif de communication (101) est en outre configuré pour communiquer via une seconde liaison de communication bidirectionnelle (502) avec au moins un terminal utilisateur (400), dans lequel
l'au moins un dispositif de calcul (102), est configuré
pour traiter les informations système pour obtenir des informations système traitées et fournir les informations système traitées pour transmission au terminal utilisateur (400) ; et dans lequel
le dispositif de communication (101) est en outre configuré pour permettre au terminal utilisateur (400) d'accéder à au moins une partie des informations système traitées de l'installation de protection contre les incendies (10) via la seconde liaison de communication bidirectionnelle (502), dans lequel
l'au moins un dispositif de calcul (102) est configuré pour recevoir au moins une entrée utilisateur du terminal utilisateur (400) en réponse à l'au moins une partie des informations système traitées, et
pour effectuer une adaptation des informations système de l'installation de protection contre les incendies (10) sur la base de l'au moins une entrée utilisateur
**caractérisé en ce que** l'au moins une partie des informations système traitées auxquelles le terminal utilisateur (400) est autorisé à accéder est déterminée sur la base d'une autorisation d'accès d'un utilisateur, dans lequel l'autorisation d'accès permet d'affecter le terminal utilisateur à une catégorie d'autorisation d'accès donnée parmi une pluralité de catégories d'autorisation d'accès, dans lequel la catégorie d'autorisation d'accès permet de déterminer la part de l'au moins une partie des informations système traitées à laquelle le terminal utilisateur est autorisé à accéder.

2. Dispositif de service (100) selon la revendication 1, dans lequel la seconde liaison de communication bidirectionnelle (503, 504) est configurée pour connecter le dispositif de communication (101) à l'au moins un terminal utilisateur (400) via un composant serveur (300) ; et/ou dans lequel la première liaison de communication (501) et/ou la seconde liaison de communication (502, 503, 504) comprend une liaison de communication cryptée.

3. Dispositif de service (100) selon au moins l'une quelconque des revendications précédentes, comprenant en outre un dispositif d'identification (103) qui est configuré pour transmettre des données d'identification du dispositif de service (100) au dispositif central (200) et/ou à l'au moins un terminal utilisateur (400).

4. Dispositif de service (100) selon au moins l'une quelconque des revendications précédentes, comprenant en outre un dispositif de stockage (104) pour stocker les informations système.

5. Dispositif de service (100) selon la revendication 4, dans lequel le dispositif de stockage (104) est en outre configuré pour stocker une première identification logicielle de données logicielles, dans lequel le dispositif de calcul (102) est en outre configuré :
- pour lire, via la première liaison de communication, une seconde identification logicielle à partir du dispositif central (200) qui est indicative des données logicielles sur le dispositif central (200),
- pour comparer la première identification logicielle et la seconde identification logicielle, et
- en réponse à une détermination que la première identification logicielle et la seconde identification logicielle sont différentes, pour transmettre les données logicielles au dispositif central (200) via la première liaison de communication.

6. Dispositif de service (100) selon au moins l'une quelconque des revendications précédentes, comprenant en outre un dispositif d'indication qui est configuré pour émettre une indication lorsque la réception des informations système est terminée.

7. Dispositif de service (100) selon au moins l'une quelconque des revendications précédentes, dans lequel les informations système comprennent au moins l'un des éléments suivants :
- des données qui comprennent des informations sur au moins un composant de l'installation de protection contre les incendies (10), et/ou
- des données qui comprennent des informations sur un réglage de l'installation de protection contre les incendies (10), et/ou
- des données qui comprennent des informations sur un état de fonctionnement de l'installation de protection contre les incendies (10).

8. Dispositif de service (100) selon au moins l'une quelconque des revendications précédentes, dans lequel le dispositif de calcul (102) est en outre configuré pour contrôler l'au moins une entrée utilisateur et générer, en réponse à la vérification, une indication de contrôle pour transmission au terminal utilisateur (400).

9. Dispositif de service (100) selon au moins l'une quelconque des revendications précédentes, dans lequel le dispositif de calcul est en outre configuré pour déterminer une autorisation d'accès de l'au moins un terminal utilisateur (400) et pour filtrer les informations système qui sont transmises à l'au moins un terminal utilisateur (400) sur la base de l'autorisation d'accès.

10. Installation de protection contre les incendies comprenant un dispositif central (200), dans laquelle le dispositif central (200) est configuré pour être relié en communication à un dispositif de service (100) selon au moins l'une quelconque des revendications 1 à 9.

11. Système (1, 1') destiné à faire fonctionner une installation de protection contre les incendies (10), comprenant :
au moins un dispositif de service (100) selon au moins l'une quelconque des revendications 1 à 9,
au moins un dispositif central (200) de l'installation de protection contre les incendies (10) comprenant un dispositif de calcul central (202), et
au moins un terminal utilisateur (400),
dans lequel le dispositif de service (100) est configuré pour communiquer avec le dispositif de calcul central (202) du dispositif central (200) via la première liaison de communication (501).

12. Système (1, 1') selon la revendication 11, dans lequel
le dispositif central (200) comprend un dispositif de stockage central pour stocker une seconde identification logicielle qui est indicative des données logicielles sur le dispositif central (200), dans lequel
au moins un terminal utilisateur (400) est configuré pour recevoir une demande de transmission de données logicielles du dispositif de service (100) et, en réponse à la demande, permettre une transmission des données logicielles du dispositif de service (100) au dispositif central (200) ; dans lequel
le dispositif central (200) est de plus configuré pour recevoir les données logicielles transmises par le dispositif de service (100) ; et/ou dans lequel l'au moins un terminal utilisateur (400) comprend une interface utilisateur graphique (401), dans lequel l'interface utilisateur graphique (401) est configurée pour afficher une représentation graphique des informations système.

13. Système (1, 1') selon au moins l'une quelconque des revendications 11 ou 12, comprenant en outre au moins un dispositif périphérique (601) de l'installation de protection contre les incendies (10),
dans lequel les informations système comprennent des informations d'état qui sont indicatives d'un état de l'au moins un dispositif périphérique (601) de l'installation de protection contre les incendies (10), et
dans lequel le dispositif de service (100) est configuré pour générer, sur la base d'une évaluation des informations d'état, au moins une indication d'un état de l'au moins un dispositif périphérique (601) et/ou de l'installation de protection contre les incendies (10).

14. Procédé destiné à faire fonctionner une installation de protection contre les incendies (10), comprenant les étapes suivantes
la transmission d'informations système via une première liaison de communication bidirectionnelle (501) d'un dispositif central (200) de l'installation de protection contre les incendies (10) à un dispositif de service (100),
la réception des informations système par le dispositif de service (100),
le traitement des informations système par le dispositif de service (100) pour obtenir des informations système traitées ;
la transmission au moins d'une partie des informations système traitées via une seconde liaison de communication bidirectionnelle (502) à au moins un terminal utilisateur (400) pour permettre au terminal utilisateur (400) d'accéder à au moins la partie des informations système de l'installation de protection contre les incendies (10),
la réception d'au moins une entrée utilisateur du terminal utilisateur (400) en réponse à l'au moins une partie des informations système traitées, et
l'adaptation des informations système de l'installation de protection contre les incendies (10) sur la base de l'au moins une entrée utilisateur,
**caractérisé en ce que** le procédé comprend en outre :
la détermination de l'au moins une partie des informations système traitées auxquelles le terminal utilisateur (400) est autorisé à accéder sur la base d'une autorisation d'accès d'un utilisateur, dans lequel la détermination comprend :
l'affectation, sur la base de l'autorisation d'accès, du terminal utilisateur à une catégorie d'autorisation d'accès donnée parmi une pluralité de catégories d'autorisation d'accès, et
la détermination, sur la base de la catégorie d'autorisation d'accès, d'une part de l'au moins une partie des informations système traitées pour permettre au terminal utilisateur d'accéder à la part de l'au moins une partie des informations système traitées.

15. Procédé selon la revendication 14, comprenant en outre :
la réception, par le dispositif central (200), des informations système, dans lequel les informations système sont indicatives d'un état actuel d'un ou de plusieurs dispositifs périphériques (601) de l'installation de protection contre les incendies (10),
l'évaluation, par un dispositif de calcul (102) du dispositif de service (100), des informations système, et
la génération, par le dispositif de calcul (102), d'une indication d'un état de l'au moins un dispositif périphérique (601) et/ou de l'installation de protection contre les incendies (10) sur la base de l'évaluation.

16. Utilisation d'un dispositif de service (100) selon au moins l'une quelconque des revendications 1 à 9 pour le fonctionnement d'une installation de protection contre les incendies (10).
